# EUROPEAN PATENT SPECIFICATION

(11) **EP 2 792 728 B1**
(45) Date of publication and mention of the grant of the patent: **28.03.2018**
(21) Application number: 13824472.8
(22) Date of filing: 18.02.2013
(51) Int. Cl.: C09K 19/12, C09K 19/20, C09K 19/30, C09K 19/04, C09K 19/34, C09K 19/02

(54) **LIQUID CRYSTAL COMPOSITION, LIQUID CRYSTAL DISPLAY ELEMENT, AND LIQUID CRYSTAL DISPLAY**
FLÜSSIGKRISTALLZUSAMMENSETZUNG, FLÜSSIGKRISTALLANZEIGEELEMENT UND FLÜSSIGKRISTALLANZEIGE
COMPOSITION À CRISTAUX LIQUIDES, ÉLÉMENT D'AFFICHAGE À CRISTAUX LIQUIDES ET AFFICHAGE À CRISTAUX LIQUIDES

(43) Date of publication of application: 22.10.2014
(73) Proprietor: DIC Corporation, Tokyo 174-8520 (JP)
(72) Inventor: KAWAMURA, Joji, Saitama 3628577 (JP); NEGISHI, Makoto, Saitama 3628577 (JP); IWASHITA, Yoshinori, Saitama 3628577 (JP)
(74) Representative: Beckmann, Claus
(86) International application number: PCT/JP2013/053808
(87) International publication number: WO 2014/125638

(56) References cited:
- EP-A2- 2 508 588
- WO-A1-2012/079676
- DE-A1-102009 005 747
- DE-A1-102011 118 210
- JP-A- 2005 179 676
- JP-A- 2007 526 368
- JP-A- 2008 156 642
- JP-A- 2009 185 285
- US-A1- 2012 141 694

## Description

### TECHNICAL FIELD

The present invention relates to a nematic liquid crystal composition which exhibits a positive value for the dielectric anisotropy (Δε) and is useful as a liquid crystal display material, as well as a liquid crystal display element and a liquid crystal display which use this composition.

### BACKGROUND ART

Liquid crystal display elements are used not only in watches and electronic calculators, but also in various measurement instruments, panels for vehicles, word processors, electronic organizers, printers, computers, televisions, clocks and advertising display boards and the like. Representative examples of the liquid crystal display method include the TN (twisted nematic) method, the STN (super twisted nematic) method, and methods using TFT (thin film transistor) such as the vertical alignment method and the IPS (in-plane switching) method. The liquid crystal compositions used in these liquid crystal display elements require good stability relative to external stimuli such as moisture, air, heat and light, must exhibit a liquid crystal phase across as broad a temperature range as possible, centered about room temperature, and also require low viscosity and a low drive voltage. Moreover, in order to ensure optimal values for the dielectric anisotropy (Δε) and/or the refractive index anisotropy (Δn) and the like for various display elements, the liquid crystal composition is typically composed of several compounds through to several tens of compounds.

In a vertical alignment (VA) display, a liquid crystal composition having a negative Δε value is used, whereas in horizontal alignment displays such as TN, STN and IPS (in-plane switching) displays, a liquid crystal composition having a positive Δε value is used. Further, a drive method has been reported in which a liquid crystal composition having a positive Δε value is aligned vertically when no voltage is applied, and display is achieved by applying a horizontal electric field, and therefore the demand for liquid crystal compositions having a positive Δε value is growing. On the other hand, all of the different drive methods require low-voltage driving, high-speed response, and a broad operating temperature range. In other words, a positive Δε with a large absolute value, a low viscosity (η), and a high nematic phase-isotropic liquid phase transition temperature (Tni) are required. Further, in order to set the value of the product of Δn and the cell gap (d), namely Δn×d, to a predetermined value, the value of Δn for the liquid crystal composition must be adjusted to an appropriate range in accordance with the cell gap. In addition, when the liquid crystal display element is used in a television or the like, a high-speed response is particularly important, and therefore a liquid crystal composition having a small rotational viscosity (γ₁) is required.

Examples of the composition of liquid crystal compositions which target high-speed response include liquid crystal compositions that use a combination of a compound represented by formula (A-1), (A-2) or (A-3) shown below, which is a liquid crystal compound having a positive Δε value, and a compound represented by formula (B) shown below, which is a liquid crystal compound for which Δε is neutral. Features of these liquid crystal compositions include the fact that the liquid crystal compound having a positive Δε value includes a -CF₂O- structure, and the fact that the liquid crystal compound for which Δε is neutral includes an alkenyl group. These features are widely known in the field of liquid crystal compositions (see Patent Documents 1 to 4).

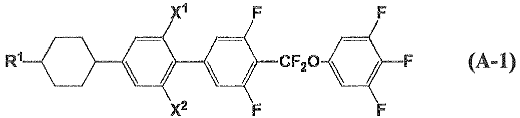

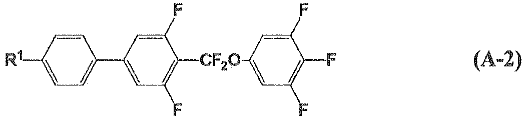

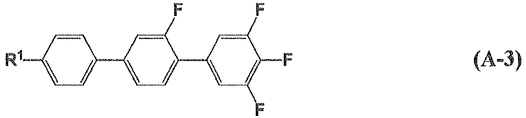

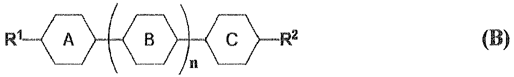

On the other hand, as the number of applications for liquid crystal display elements continues to expand, large changes are being seen in the methods of using liquid crystal display elements, and the methods of producing these devices. In order to cope with these changes, properties other than the conventionally known basic physical properties now require optimization. In other words, the VA and IPS methods are now widely used in liquid crystal display elements that use liquid crystal compositions, and extremely large display elements of 50 inches or greater are now being used in practical applications. As the substrate size has increased, the method used for injecting the liquid crystal composition onto the substrate has also changed, and the predominant injection method has changed from the conventional vacuum injection method to the one drop fill (ODF) method. However, a problem has arisen in that dropping mark defects which occur when the liquid crystal composition is dropped onto the substrate can cause a deterioration in the display quality. Moreover, in a liquid crystal display element production process using the ODF method, the liquid crystal must be dropped in an amount optimized for the size of the liquid crystal display element. If this drop volume varies significantly from the optimal value, then the balance between the preset refractive index and the drive electric field of the liquid crystal display element collapses, and display defects such as spot formation or contrast faults tend to occur. Particularly in the case of small liquid crystal display elements such as those used widely in popular smart phones, because the optimal liquid crystal drop volume is small, controlling the variation in volume from the optimal value within a specific range is difficult. Accordingly, in order to maintain a high production yield for the liquid crystal display element, the liquid crystal composition must be minimally affected by the sudden pressure changes and impacts that occur inside the dropping apparatus when the liquid crystal is being dropped, and must be able to be dropped continuously in a stable manner over a long period of time.

In this manner, in the field of liquid crystal compositions for use in active matrix driven liquid crystal display elements driven by TFT devices or the like, not only must the properties conventionally regarded as important for liquid crystal displays such as a high specific resistance value, high voltage holding rate, and good stability relative to external stimuli such as light and heat be realized, while maintaining the properties and performance required of liquid crystal displays such as high-speed response performance, but the development of liquid crystal compositions which also consider the method used for producing the liquid crystal display element are now being demanded.

EP 2 508 588 A2 describes dielectrically positive, preferably nematic, media comprising one or more polymerizable compounds of the following formula I, to polymer-stabilized media obtained therefrom, to the use thereof in liquid-crystal displays, and to these displays, in particular PSA-IPS, PSA-FFS and PSA-positive VA displays.

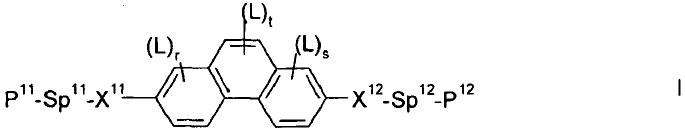

WO 2012/079676 A1 describes a liquid-crystalline medium characterized in that it comprises one or more compounds of the following formula (IA) and one or more compounds of the following formula (IB), and also to the use thereof for electro-optical applications, more particularly for shutter glasses, 3D applications, and in TN, PS-TN, STN, TN-TFT, OCB, IPS, PS-IPS, FFS, PS-FFS and PS-VA-I PS displays.

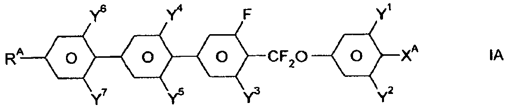

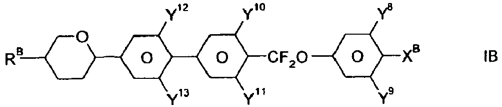

DE 10 2009 005747 A1 describes dielectrically positive liquid-crystalline media comprising one or more compounds of the following formula I, and optionally one or more compounds selected from the group of the compounds of the following formulae II and III, and optionally one or more compounds of the following formula IV, and to liquid-crystal displays containing these media, especially to active-matrix displays and in particular to TN, IPS and FFS displays.

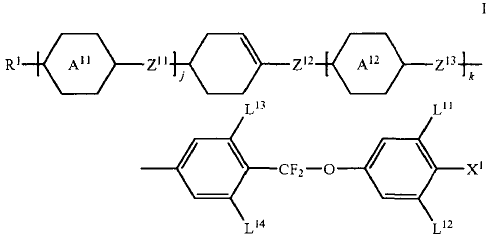

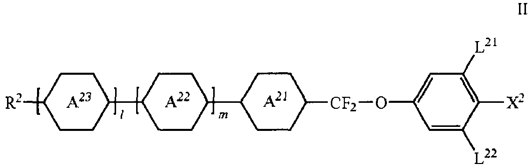

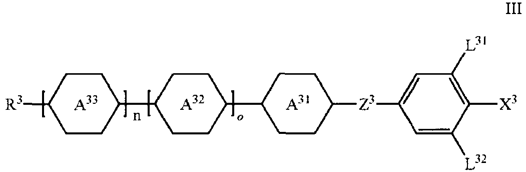

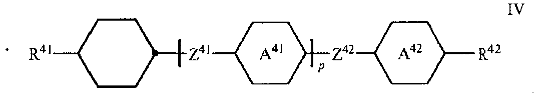

DE 10 2011 118210 A1 describes liquid-crystalline media comprising at least one compound of the following formula, and to electro-optical liquid-crystal displays, in particular for TN-TFT, OCB, IPS, PS-IPS, FFS, PS-FFS and positive VA applications.

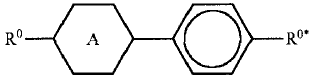

### DOCUMENTS OF RELATED ART

### PATENT DOCUMENTS

Patent Document 1: Japanese Unexamined Patent Application, First Publication No. 2008-037918
Patent Document 2: Japanese Unexamined Patent Application, First Publication No. 2008-038018
Patent Document 3: Japanese Unexamined Patent Application, First Publication No. 2010-275390
Patent Document 4: Japanese Unexamined Patent Application, First Publication No. 2011-052120

### SUMMARY OF THE INVENTION

### PROBLEMS TO BE SOLVED BY THE INVENTION

An object of the present invention is to provide a liquid crystal composition with a positive Δε value which has a liquid crystal phase across a broad temperature range, exhibits low viscosity, good solubility at low temperature, and a high specific resistance and voltage holding rate, has good stability relative to heat and light, is resistant to the occurrence of display defects such as burn-in and dropping mark defects, and enables the production of a liquid crystal display element of excellent display quality in good yield, as well as providing a liquid crystal display element that uses this liquid crystal composition.

### MEANS TO SOLVE THE PROBLEMS

The inventors of the present invention investigated numerous liquid crystal compounds and numerous chemical substances, and discovered that by combining specific liquid crystal compounds, the above object could be achieved, thus enabling them to complete the present invention. In other words, a first aspect of the present invention is the liquid crystal composition defined in claim 1, a second aspect of the present invention is the liquid crystal element defined in claim 7, and a third aspect of the present invention is the liquid crystal display defined in claim 9. Preferred embodiments of the invention are defined in the dependent claims and described in further detail below.

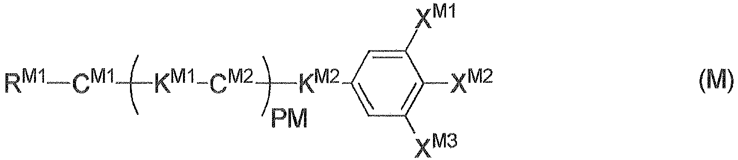

In the formula, R^{M1} represents an alkyl group having 1 to 8 carbon atoms, one - CH₂- group or two or more -CH₂- groups which are not adjacent to each other in the alkyl group may be independently substituted by -CH=CH-, -C≡C-, -O-, -CO-, -COO- or - OCO-,
PM represents 0, 1, 2, 3 or 4,
C^{M1} and C^{M2} independently represent a group selected from the group consisting of:
(d) 1,4-cyclohexylene group (one -CH₂- group or two or more -CH₂- groups which are not adjacent to each other in the group may be substituted by -O- or -S-) and
(e) 1,4-phenylene group (one -CH= group or two or more -CH= groups which are not adjacent to each other in the group may be substituted by -N=), and
   one and/or two or more hydrogen atoms in the groups (d) and (e) may be independently substituted by a cyano group, a fluorine atom, or a chlorine atom,
K^{M1} and K^{M2} independently represent a single bond, -CH₂CH₂-, -(CH₂)₄-, -OCH₂-, -CH₂O-, -OCF₂-, -CF₂O-, -COO-, -OCO- or -C≡C-,
when PM represents 2, 3 or 4, and the compound represented by the general formula (M) has plural K^{M1}, the plural K^{M1} may be the same or different, and when PM represents 2, 3 or 4, and the compound represented by the general formula (M) has plural C^{M2}, the plural C^{M2} may be the same or different,
X^{M1} and X^{M3} independently represent a hydrogen atom, a chlorine atom or a fluorine atom, and

### EFFECTS OF THE INVENTION

The liquid crystal composition having a positive dielectric anisotropy according to the present invention exhibits a liquid crystal phase across a broad temperature range, has a significantly lower viscosity than conventional compositions, exhibits good solubility at low temperature, and has a specific resistance and voltage holding rate which undergo extremely little variation in the presence of heat or light. As a result, the practical applicability (compatibility) of the liquid crystal composition of the present invention within liquid crystal products is very high, and IPS and FFS liquid crystal display elements using the liquid crystal composition can achieve high-speed response. Further, even following the production process for a liquid crystal display element, the liquid crystal composition of the present invention can still exhibit this level of performance in a stable manner, meaning display defects caused by the production process can be suppressed, and the liquid crystal display element can be produced in high yield, and therefore the liquid crystal composition is extremely useful.

### BRIEF DESCRIPTION OF THE DRAWINGS

FIG. 1 is a cross-sectional view of a liquid crystal display element of the present invention, wherein a substrate provided with 100 to 105 is termed the "back plane", and a substrate provided with 200 to 205 is termed the "front plane".
FIG. 2 is a diagram illustrating an exposure treatment step which uses a columnar spacer-generating pattern formed on a black matrix as a photomask pattern.

### EMBODIMENTS FOR CARRYING OUT THE INVENTION

The liquid crystal composition having a positive dielectric anisotropy according to a first embodiment of the present invention contains a component (A) which is a dielectrically positive component. The component (A) is composed of compounds having a dielectric anisotropy of 2 or greater. The dielectric anisotropy of a compound is extrapolated from the measured value for the dielectric anisotropy of a composition prepared by adding the compound to a liquid crystal composition having a dielectric anisotropy of approximately 0 at 25°C.

Unless specifically stated otherwise, the units "%" in the following compositions mean "% by mass".

The component (A) contains one or more of the compounds represented by general formula (i) shown below, and one or more of the compounds represented by general formula (ii) shown below.

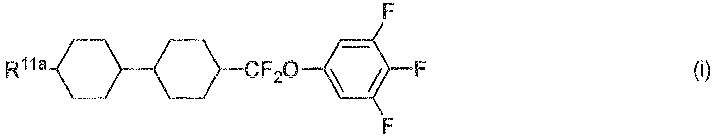

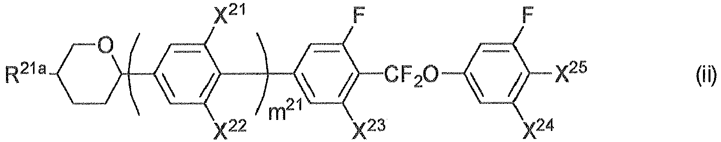

### <Compound Represented by General Formula (i)>

In general formula (i), R^{11a} represents an alkyl group having 1 to 8 carbon atoms, wherein one -CH₂- group or two or more non-adjacent -CH₂- groups within the alkyl group may each be independently substituted with -CH=CH-, -C≡C-, -O-, -CO-, -COO- or -OCO-, and one or more hydrogen atoms within the alkyl group may each be substituted with a fluorine atom or a chlorine atom.

The number of carbon atoms within the alkyl group is preferably from 1 to 6, more preferably from 2 to 5, still more preferably from 3 to 5, and most preferably 3 or 5. The alkyl group is preferably a linear group.

There are no particular limitations on the types of these compounds that can be combined, and a plurality of compounds represented by general formula (i) can be used in combination in accordance with the level of performance required for properties such as the solubility at low temperature, the transition temperature, the electrical reliability and the birefringence. The type of compound represented by general formula (i) that is used may, for example, be a single type of compound in one embodiment of the present invention. Alternatively, in another embodiment of the present invention, two types of compounds may be used.

The amount used of the compound represented by general formula (i) has a preferred upper limit and lower limit which is determined for each embodiment with due consideration of the solubility at low temperature, the transition temperature, the electrical reliability, and the birefringence and the like.

Relative to the total mass of the liquid crystal composition of the present invention, the lower limit for the amount of the compound is preferably 1%, and more preferably 5%, and the upper limit for the amount of the compound is preferably 25%, more preferably 22%, still more preferably 20%, and particularly preferably 19%.

When only one type of the above compound is used, the lower limit for the amount of that compound relative to the aforementioned total mass is preferably 1%, more preferably 2%, still more preferably 5%, and still more preferably 6%, whereas the upper limit for the amount of the compound relative to the total mass is preferably 25%, more preferably 20%, still more preferably 15%, still more preferably 12%, particularly preferably 10%, and most preferably 9%.

When two types of the above compound are used, the lower limit for the combined amount of those two compounds relative to the aforementioned total mass is preferably 8%, more preferably 10%, and still more preferably 13%, whereas the upper limit for the combined amount of the two compounds relative to the total mass is preferably 25%, more preferably 22%, still more preferably 20%, and still more preferably 19%.

When the solubility of the liquid crystal composition is deemed important, it is preferable to use two compounds represented by general formula (i), and when it is desirable to increase the amount of the compound represented by general formula (i), it is preferable to use two of the compounds.

The amount of the compound represented by general formula (i) relative to the aforementioned total mass is from 1 to 25% by mass in one embodiment, from 2 to 20% by mass in another embodiment, from 4 to 10% by mass in yet another embodiment, from 10 to 30% by mass in yet another embodiment, from 14 to 20% by mass in yet another embodiment, from 16 to 20% by mass in yet another embodiment, and from 21 to 40% by mass in yet another embodiment.

Further, the amount of the compound represented by general formula (i) relative to the total mass of the liquid crystal composition of the present invention is, for example, from 1 to 40% by mass in one embodiment, from 1 to 35% by mass in another embodiment, from 1 to 30% by mass in yet another embodiment, from 1 to 25% by mass in yet another embodiment, from 1 to 10% by mass in yet another embodiment, from 1 to 7% by mass in yet another embodiment, and from 1 to 5% by mass in yet another embodiment.

Furthermore, the compound represented by general formula (i) is preferably a compound represented by formula (28.1) to formula (28.5) shown below. The composition preferably contains either one or both of the compounds represented by formula (28.3) and formula (28.5).

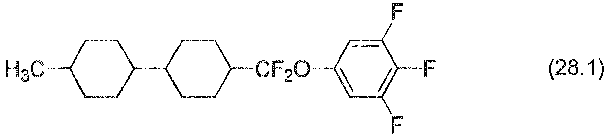

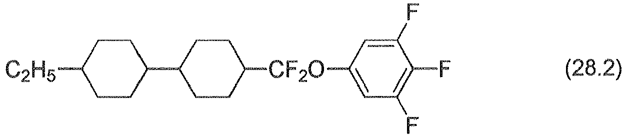

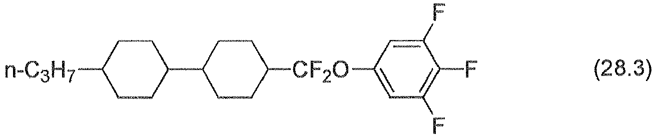

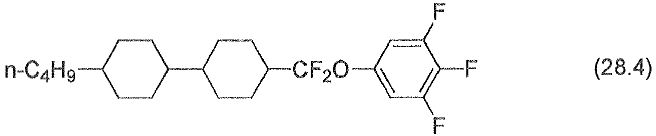

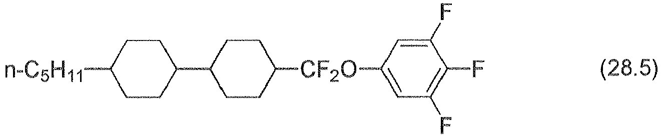

In the liquid crystal composition of the present invention, in consideration of the solubility at low temperature, the transition temperature and the electrical reliability and the like, the amount of the compound represented by formula (28.3) relative to the total mass of the liquid crystal composition of the present invention is preferably at least 1% by mass but not more than 30% by mass. Examples of more preferred ranges for this amount include at least 2% by mass but not more than 20% by mass, at least 2% by mass but not more than 15% by mass, at least 2% by mass but not more than 12% by mass, at least 2% by mass but not more than 9% by mass, and at least 2% by mass but not more than 5% by mass, or alternatively, at least 4% by mass but not more than 20% by mass, at least 6% by mass but not more than 20% by mass, at least 8% by mass but not more than 20% by mass, at least 10% by mass but not more than 20% by mass, and at least 15% by mass but not more than 20% by mass.

In the liquid crystal composition of the present invention, in consideration of the solubility at low temperature, the transition temperature and the electrical reliability and the like, the amount of the compound represented by formula (28.5) relative to the total mass of the liquid crystal composition of the present invention is preferably at least 3% by mass but not more than 25% by mass, more preferably at least 3% by mass but not more than 20% by mass, still more preferably at least 3% by mass but not more than 15% by mass, and particularly preferably at least 3% by mass but not more than 10% by mass.

### <Compound Represented by General Formula (ii)>

In general formula (ii), R^{21a} represents an alkyl group having 1 to 8 carbon atoms, wherein one -CH₂- group or two or more non-adjacent -CH₂- groups within the alkyl group may each be independently substituted with -CH=CH-, -C≡C-, -O-, -CO-, -COO- or -OCO-, and the hydrogen atoms within the alkyl group may each be substituted with a fluorine atom or a chlorine atom.

The number of carbon atoms within the alkyl group is preferably from 1 to 6, more preferably from 1 to 4, and still more preferably 2 or 3.

In general formula (ii), m²¹ represents 0 or 1, X²¹, X²², X²³ and X²⁴ independently represent a hydrogen atom, fluorine atom or chlorine atom, and X²⁵ represents a hydrogen atom, fluorine atom, a chlorine atom, a cyano group, -CF₃ or -OCF₃.
m²¹ is preferably 1.
At least one of X²¹ and X²² is preferably a hydrogen atom, and compounds in which X²¹ and X²² are both hydrogen atoms are more preferable.

X²³, X²⁴ and X²⁵ preferably independently represent a fluorine atom, it is more preferable that at least two of X²³, X²⁴ and X²⁵ are fluorine atoms, and compounds in which X²³, X²⁴ and X²⁵ are all fluorine atoms are still more preferable.

Further, at least two of X²¹ to X²⁴ are preferably fluorine atoms.

The compound represented by general formula (ii) is preferably a compound represented by general formula (X-6). 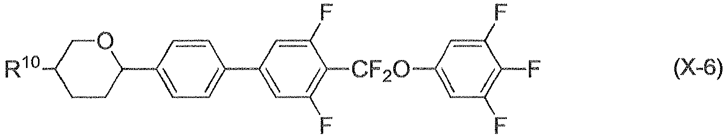 In the formula, R¹⁰ represents an alkyl group having 1 to 5 carbon atoms, an alkenyl group having 2 to 5 carbon atoms, or an alkoxy group having 1 to 4 carbon atoms.

There are no particular limitations on the types of these compounds that can be combined, and either one compound or a combination of two or more compounds represented by general formula (X-6) can be used, with due consideration of properties such as the solubility at low temperature, the transition temperature, the electrical reliability and the birefringence.

The amount of the compound represented by general formula (ii) has an upper limit and a lower limit for each embodiment, which are set with due consideration of properties such as the solubility at low temperature, the transition temperature, the electrical reliability and the birefringence.

The lower limit for the amount of this compound relative to the total mass of the liquid crystal composition of the present invention is preferably 1%, and more preferably 2%, whereas the upper limit for the amount of the compound is preferably 25%, more preferably 20%, still more preferably 18%, and particularly preferably 16%.

When only one type of the above compound is used, the lower limit for the amount of that compound relative to the aforementioned total mass is preferably 1%, more preferably 2%, still more preferably 3%, and particularly preferably 4%, whereas the upper limit for the amount of the compound relative to the total mass is preferably 15%, more preferably 12%, still more preferably 10%, particularly preferably 8%, and most preferably 7%.

When two types of the above compound are used, the lower limit for the combined amount of those two compounds relative to the aforementioned total mass is preferably 5%, more preferably 7%, and still more preferably 10%, whereas the upper limit for the combined amount of the two compounds relative to the total mass is preferably 25%, more preferably 20%, still more preferably 18%, still more preferably 16%, still more preferably 13%, particularly preferably 10%, and most preferably 9%.

When the solubility of the liquid crystal composition is deemed important, it is preferable to use two compounds represented by general formula (ii), and when it is desirable to increase the amount of the compound represented by general formula (ii), it is preferable to use two of the compounds.

For example, the amount of the compound represented by general formula (ii) relative to the total mass of the liquid crystal composition of the present invention is from 3 to 30% by mass in one embodiment of the present invention, from 3 to 25% by mass in another embodiment, from 3 to 10% by mass in yet another embodiment, from 3 to 7% by mass in yet another embodiment, from 5 to 10% by mass in yet another embodiment, from 11 to 20% by mass in yet another embodiment, from 14 to 18% by mass in yet another embodiment, and from 18 to 25% by mass in yet another embodiment.

Further, the amount of the compound relative to the total mass of the liquid crystal composition of the present invention is, for example, from 1 to 30% by mass in one embodiment of the present invention, from 1 to 20% by mass in another embodiment, from 1 to 13% by mass in yet another embodiment, from 1 to 10% by mass in yet another embodiment, from 1 to 7% by mass in yet another embodiment, and from 1 to 3% by mass in yet another embodiment.

Moreover, the compound represented by general formula (X-6) used in the liquid crystal composition of the present invention is preferably a compound represented by formula (44.1) to formula (44.4). Among these, the compound(s) represented by formula (44.1) and/or formula (44.2) is particularly preferable.

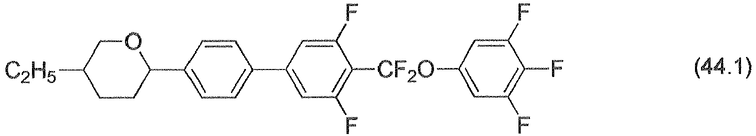

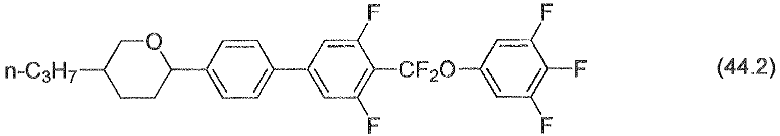

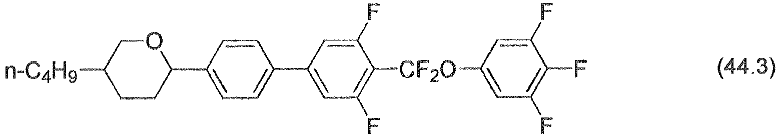

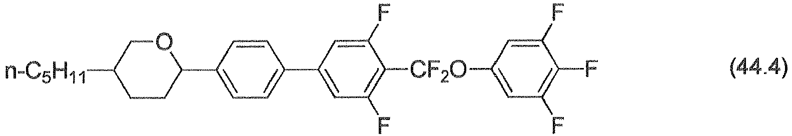

In the liquid crystal composition of the present invention, in consideration of the solubility at low temperature, the transition temperature and the electrical reliability and the like, the amount of the compound represented by formula (44.1) relative to the total mass of the liquid crystal composition of the present invention is preferably at least 1% by mass but not more than 25% by mass, more preferably at least 3% by mass but not more than 20% by mass, still more preferably at least 3% by mass but not more than 15% by mass, and particularly preferably at least 3% by mass but not more than 10% by mass.

In the liquid crystal composition of the present invention, in consideration of the solubility at low temperature, the transition temperature and the electrical reliability and the like, the amount of the compound represented by formula (44.2) relative to the total mass of the liquid crystal composition of the present invention is preferably at least 1% by mass but not more than 25% by mass, more preferably at least 3% by mass but not more than 20% by mass, still more preferably at least 3% by mass but not more than 15% by mass, and particularly preferably at least 3% by mass but not more than 10% by mass.

In the liquid crystal composition of the present invention, in consideration of the solubility at low temperature, the transition temperature and the electrical reliability and the like, the combined amount of the compound represented by formula (44.1) and the compound represented by formula (44.2) relative to the total mass of the liquid crystal composition of the present invention is preferably at least 5% by mass but not more than 45% by mass, more preferably at least 7% by mass but not more than 25% by mass, and still more preferably at least 7% by mass but not more than 20% by mass. Examples of preferred ranges for this combined amount are at least 7% by mass but not more than 15% by mass, at least 7% by mass but not more than 12% by mass, at least 7% by mass but not more than 10% by mass, at least 10% by mass but not more than 15% by mass, and at least 12% by mass but not more than 15% by mass.

The combination of the compound represented by general formula (i) and the compound represented by general formula (ii) is preferably composed of 2 to 4 compounds, and more preferably 3 or 4 compounds.

Relative to the total mass of the liquid crystal composition of the present invention, the lower limit for the combined amount of the compound represented by general formula (i) and the compound represented by general formula (ii) is preferably 5%, more preferably 8%, still more preferably 10%, and particularly preferably 15%. The upper limit for the combined amount relative to the total mass is preferably 40%, more preferably 35%, still more preferably 30%, still more preferably 25%, particularly preferably 20%, and most preferably 15%.

When one compound represented by general formula (i) and one compound represented by general formula (ii) are used, resulting in a total of two compounds, the lower limit for the combined amount of the two compounds relative to the aforementioned total mass is preferably 8%, more preferably 10%, and still more preferably 12%. Further, the upper limit for the combined amount of the two compounds relative to the total mass is preferably 20%, more preferably 18%, and still more preferably 15%.

When one or two compounds represented by general formula (i) and two or one compounds represented by general formula (ii) are used, resulting in a total of three compounds, the lower limit for the combined amount of the three compounds relative to the aforementioned total mass is preferably 5%, more preferably 8%, and still more preferably 10%. Further, the upper limit for the combined amount of the three compounds relative to the total mass is preferably 30%, more preferably 25%, still more preferably 23%, and particularly preferably 18%.

When one to three compounds represented by general formula (i) and one to three compounds represented by general formula (ii) are used, resulting in a total of four compounds, the lower limit for the combined amount of the four compounds relative to the aforementioned total mass is preferably 20%, more preferably 25%, and still more preferably 28%. Further, the upper limit for the combined amount of the four compounds relative to the total mass is preferably 40%, more preferably 35%, still more preferably 33%.

When the solubility of the liquid crystal composition is deemed important, the use of a combination of two compounds or a combination of three compounds is preferable, and when it is desirable to increase the combined amount of the compound represented by general formula (i) and the compound represented by general formula (ii), it is preferable to use a combination of two compounds or a combination of three compounds.

The liquid crystal composition of the first embodiment of the present invention may contain one or more of the compounds represented by general formula (L) shown below. 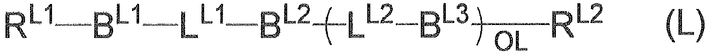 In the formula, R^{L1} and R^{L2} independently represent an alkyl group having 1 to 8 carbon atoms, wherein one-CH₂- group or two or more non-adjacent -CH₂- groups within the alkyl group may each be independently substituted with -CH=CH-, -C≡C-, -O-, -CO-, -COO- or -OCO-,
OL represents 0, 1, 2 or 3,
B^{L1}, B^{L2} and B^{L3} independently represent a group selected from the group consisting of:
(a) a 1,4-cyclohexylene group (wherein one -CH₂- group or two or more non-adjacent -CH₂- groups that exist within the group may each be substituted with -O-), and
(b) a 1,4-phenylene group (wherein one -CH= group or two or more non-adjacent -CH= groups that exist within the group may each be substituted with -N=),
wherein one or more hydrogen atoms within the group (a) or group (b) may each be independently substituted with a cyano group, a fluorine atom or a chlorine atom,
L^{L1} and L^{L2} independently represent a single bond, -CH₂CH₂-, -(CH₂)₄-, -OCH₂-, -CH₂O-, -COO-, -OCO-, -OCF₂-, -CF₂O-, -CH=N-N=CH-, -CH=CH-, -CF=CF- or - C≡C-, and
when OL represents 2 or 3 and a plurality of L^{L2} exists, the L^{L2} may be the same or different, and when OL represents 2 or 3 and a plurality of B^{L3} exists, the B^{L3} may be the same or different; however, the compound represented by the general formula (L) is not a compound represented by the formula (1.3) or (2.2).

There are no particular limitations on the types of these compounds that can be combined, and a plurality of compounds represented by general formula (L) can be combined as appropriate in accordance with the level of performance required for properties such as the solubility at low temperature, the transition temperature, the electrical reliability and the birefringence. The type of compound used may, for example, be a single type of compound in one embodiment of the present invention. Alternatively, in another embodiment of the present invention, two types of compounds may be used. Further, in yet another embodiment of the present invention, three types of compounds may be used. Further, in yet another embodiment of the present invention, 4 types of compounds may be used. Furthermore, in yet another embodiment of the present invention, 5 types of compounds may be used. Moreover, in yet another embodiment of the present invention, 6 types of compounds may be used. Further, in yet another embodiment of the present invention, 7 types of compounds may be used. Further, in yet another embodiment of the present invention, 8 types of compounds may be used. Furthermore, in yet another embodiment of the present invention, 9 types of compounds may be used. Moreover, in yet another embodiment of the present invention, 10 or more types of compounds may be used.

In the liquid crystal composition of the present invention, it is necessary to appropriately adjust the amount of the compound represented by general formula (L) in accordance with the level of performance required for properties such as the solubility at low temperature, the transition temperature, the electrical reliability, the birefringence, the process compatibility, dropping mark defects, burn-in and the dielectric anisotropy.

For example, in one embodiment of the present invention, the amount of the above compound relative to the total mass of the liquid crystal composition of the present invention is from 1 to 95% by mass. Alternatively, in another embodiment of the present invention, the amount is from 10 to 95% by mass. Further, in yet another embodiment of the present invention, the amount is from 20 to 95% by mass. In yet another embodiment of the present invention, the amount is from 30 to 95% by mass. In yet another embodiment of the present invention, the amount is from 40 to 95% by mass. In yet another embodiment of the present invention, the amount is from 50 to 95% by mass. In yet another embodiment of the present invention, the amount is from 55 to 95% by mass. In yet another embodiment of the present invention, the amount is from 60 to 95% by mass. In yet another embodiment of the present invention, the amount is from 65 to 95% by mass. In yet another embodiment of the present invention, the amount is from 70 to 95% by mass. In yet another embodiment of the present invention, the amount is from 75 to 95% by mass. Further, in yet another embodiment of the present invention, the amount is from 80 to 95% by mass.

Moreover, in one embodiment of the present invention, the amount of the above compound relative to the total mass of the liquid crystal composition of the present invention is from 1 to 95%. Alternatively, in another embodiment of the present invention, the amount is from 1 to 85%. Further, in yet another embodiment of the present invention, the amount is from 1 to 75%. In yet another embodiment of the present invention, the amount is from 1 to 65%. In yet another embodiment of the present invention, the amount is from 1 to 55%. In yet another embodiment of the present invention, the amount is from 1 to 45%. In yet another embodiment of the present invention, the amount is from 1 to 35%. Further, in yet another embodiment of the present invention, the amount is from 1 to 25%.

When it is necessary to maintain the viscosity of the liquid crystal composition of the present invention at a low value, and obtain a liquid crystal composition having a fast response speed, it is preferable that the lower limit and the upper limit mentioned above are set to high values. Moreover, when it is necessary to maintain the Tni of the liquid crystal composition of the present invention at a high value, and obtain a liquid crystal composition having good temperature stability, it is preferable that the lower limit and the upper limit mentioned above are set to high values. Further, when it is desirable to have a large dielectric anisotropy in order to ensure a low drive voltage, it is preferable that the lower limit and the upper limit mentioned above are set to low values.

When the cyclic structures to which R^{L1} and R^{L2} are bonded are phenyl groups (aromatic groups), R^{L1} and R^{L2} is preferably a linear alkyl group having 1 to 5 carbon atoms, a linear alkoxy group having 1 to 4 (or more) carbon atoms, or an alkenyl group having 4 or 5 carbon atoms, whereas when the bonded cyclic structures are saturated cyclic structures such as cyclohexane, pyran or dioxane rings, R^{L1} and R^{L2} is preferably a linear alkyl group having 1 to 5 carbon atoms, a linear alkoxy group having 1 to 4 (or more) carbon atoms, or a linear alkenyl group having 2 to 5 carbon atoms.

When the liquid crystal composition requires good chemical stability, the compound represented by general formula (L) preferably does not contain a chlorine atom within the molecule.

The compound represented by general formula (L) is, for example, preferably a compound selected from the group of compounds represented by general formula (I).

R¹¹-A¹¹-A¹²-R¹² (I)

In the formula, R¹¹ and R¹² independently represent an alkyl group having 1 to 5 carbon atoms, an alkoxy group having 1 to 5 carbon atoms, or an alkenyl group having 2 to 5 carbon atoms, A¹¹ and A¹² independently represent a 1,4-cyclohexylene group, 1,4-phenylene group, 2-fluoro-1,4-phenylene group or 3-fluoro-1,4-phenylene group.

There are no particular limitations on the types of these compounds that can be combined, and a plurality of compounds represented by general formula (I) can be combined as appropriate in accordance with the level of performance required for properties such as the solubility at low temperature, the transition temperature, the electrical reliability and the birefringence. The type of compound used may, for example, be a single type of compound in one embodiment of the present invention. Alternatively, in another embodiment of the present invention, two types of compounds may be used. Further, in yet another embodiment of the present invention, three types of compounds may be used. Further, in yet another embodiment of the present invention, 4 types of compounds may be used. Furthermore, in yet another embodiment of the present invention, 5 types of compounds may be used. Moreover, in yet another embodiment of the present invention, 6 or more types of compounds may be used.

In the liquid crystal composition of the present invention, it is necessary to appropriately adjust the amount of the compound represented by general formula (I) in accordance with the level of performance required for properties such as the solubility at low temperature, the transition temperature, the electrical reliability, the birefringence, the process compatibility, dropping mark defects, burn-in and the dielectric anisotropy.

For example, in one embodiment of the present invention, the amount of the above compound relative to the total mass of the liquid crystal composition of the present invention is from 3 to 75% by mass. Alternatively, in another embodiment of the present invention, the amount is from 15 to 75% by mass. Further, in yet another embodiment of the present invention, the amount is from 18 to 75% by mass. In yet another embodiment of the present invention, the amount is from 20 to 75% by mass. In yet another embodiment of the present invention, the amount is from 29 to 75% by mass. In yet another embodiment of the present invention, the amount is from 35 to 75% by mass. In yet another embodiment of the present invention, the amount is from 42 to 75% by mass. In yet another embodiment of the present invention, the amount is from 47 to 75% by mass. In yet another embodiment of the present invention, the amount is from 53 to 75% by mass. In yet another embodiment of the present invention, the amount is from 56 to 75% by mass. In yet another embodiment of the present invention, the amount is from 60 to 75% by mass. Further, in yet another embodiment of the present invention, the amount is from 65 to 75% by mass.

Moreover, in one embodiment of the present invention, the amount of the above compound relative to the total mass of the liquid crystal composition of the present invention is from 3 to 75% by mass. Further, in another embodiment of the present invention, the amount is from 3 to 65% by mass. In yet another embodiment of the present invention, the amount is from 3 to 55% by mass. In yet another embodiment of the present invention, the amount is from 3 to 50% by mass. In yet another embodiment of the present invention, the amount is from 3 to 45% by mass. In yet another embodiment of the present invention, the amount is from 3 to 40% by mass. In yet another embodiment of the present invention, the amount is from 3 to 35% by mass. Further, in yet another embodiment of the present invention, the amount is from 3 to 30% by mass.

When it is necessary to maintain the viscosity of the liquid crystal composition of the present invention at a low value, and obtain a liquid crystal composition having a fast response speed, it is preferable that the lower limit and the upper limit mentioned above are set to high values. Moreover, when it is necessary to maintain the Tni of the liquid crystal composition of the present invention at a high value, and obtain a liquid crystal composition having good temperature stability, it is preferable that the lower limit and the upper limit mentioned above are mid-range values. Further, when it is desirable to have a large dielectric anisotropy in order to ensure a low drive voltage, it is preferable that the lower limit and the upper limit mentioned above are set to low values.

When the cyclic structure to which R¹¹ is bonded is a phenyl group (aromatic group), R¹¹ is preferably a linear alkyl group having 1 to 5 carbon atoms, a linear alkoxy group having 1 to 4 carbon atoms, or an alkenyl group having 4 or 5 carbon atoms, whereas when the bonded cyclic structure is a saturated cyclic structure such as a cyclohexane, pyran or dioxane ring, R¹¹ is preferably a linear alkyl group having 1 to 5 carbon atoms, a linear alkoxy group having 1 to 4 carbon atoms, or a linear alkenyl group having 2 to 5 carbon atoms.

Moreover, the compound represented by general formula (I) is preferably a compound selected from the group of compounds represented by general formula (I-1).

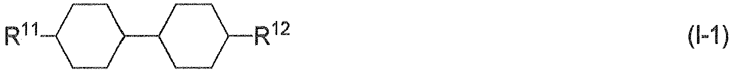

In the formula, R¹² and R¹² independently represent an alkyl group having 1 to 5 carbon atoms, an alkoxy group having 1 to 5 carbon atoms, or an alkenyl group having 2 to 5 carbon atoms.

There are no particular limitations on the types of these compounds that can be combined, and a plurality of compounds represented by general formula (I-1) can be combined as appropriate in accordance with the level of performance required for properties such as the solubility at low temperature, the transition temperature, the electrical reliability and the birefringence. The type of compound used may, for example, be a single type of compound in one embodiment of the present invention. Alternatively, in another embodiment of the present invention, two types of compounds may be used. Further, in yet another embodiment of the present invention, three types of compounds may be used. Further, in yet another embodiment of the present invention, 4 types of compounds may be used. Furthermore, in yet another embodiment of the present invention, 5 or more types of compounds may be used.

In the liquid crystal composition of the present invention, it is necessary to appropriately adjust the amount of the compound represented by general formula (I-1) in accordance with the level of performance required for properties such as the solubility at low temperature, the transition temperature, the electrical reliability, the birefringence, the process compatibility, dropping mark defects, burn-in and the dielectric anisotropy.

For example, in one embodiment of the present invention, the amount of the above compound relative to the total mass of the liquid crystal composition of the present invention is from 3 to 70% by mass. Alternatively, in another embodiment of the present invention, the amount is from 15 to 70% by mass. Further, in yet another embodiment of the present invention, the amount is from 18 to 70% by mass. In yet another embodiment of the present invention, the amount is from 25 to 70% by mass. In yet another embodiment of the present invention, the amount is from 29 to 70% by mass. In yet another embodiment of the present invention, the amount is from 31 to 70% by mass. In yet another embodiment of the present invention, the amount is from 35 to 70% by mass. In yet another embodiment of the present invention, the amount is from 43 to 70% by mass. In yet another embodiment of the present invention, the amount is from 47 to 70% by mass. In yet another embodiment of the present invention, the amount is from 50 to 70% by mass. In yet another embodiment of the present invention, the amount is from 53 to 70% by mass. Further, in yet another embodiment of the present invention, the amount is from 56 to 70% by mass.

Moreover, in one embodiment of the present invention, the amount of the above compound relative to the total mass of the liquid crystal composition of the present invention is from 3 to 70% by mass. Further, in another embodiment of the present invention, the amount is from 3 to 60% by mass. In yet another embodiment of the present invention, the amount is from 3 to 50% by mass. In yet another embodiment of the present invention, the amount is from 3 to 45% by mass. In yet another embodiment of the present invention, the amount is from 3 to 40% by mass. In yet another embodiment of the present invention, the amount is from 3 to 35% by mass. In yet another embodiment of the present invention, the amount is from 3 to 30% by mass. Further, in yet another embodiment of the present invention, the amount is from 3 to 26% by mass.

When it is necessary to maintain the viscosity of the liquid crystal composition of the present invention at a low value, and obtain a liquid crystal composition having a fast response speed, it is preferable that the lower limit and the upper limit mentioned above are set to high values. Moreover, when it is necessary to maintain the Tni of the liquid crystal composition of the present invention at a high value, and obtain a liquid crystal composition having good temperature stability, it is preferable that the lower limit and the upper limit mentioned above are mid-range values. Further, when it is desirable to have a large dielectric anisotropy in order to ensure a low drive voltage, it is preferable that the lower limit and the upper limit mentioned above are set to low values.

Moreover, the compound represented by general formula (I-1) is preferably a compound selected from the group of compounds represented by general formula (I-1-1).

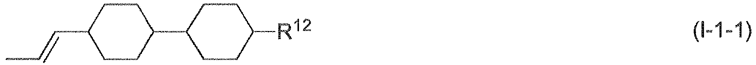

In the formula, R¹² represents an alkyl group having 1 to 5 carbon atoms, an alkenyl group having 2 to 5 carbon atoms, or an alkoxy group having 1 to 5 carbon atoms.

In the liquid crystal composition of the present invention, it is necessary to appropriately adjust the amount of the compound represented by general formula (1-1-1) in accordance with the level of performance required for properties such as the solubility at low temperature, the transition temperature, the electrical reliability, the birefringence, the process compatibility, dropping mark defects, burn-in and the dielectric anisotropy.

For example, in one embodiment of the present invention, the amount of the above compound relative to the total mass of the liquid crystal composition of the present invention is from 2 to 60% by mass. Alternatively, in another embodiment of the present invention, the amount is from 4 to 60% by mass. Further, in yet another embodiment of the present invention, the amount is from 7 to 60% by mass. In yet another embodiment of the present invention, the amount is from 11 to 60% by mass. In yet another embodiment of the present invention, the amount is from 13 to 60% by mass. In yet another embodiment of the present invention, the amount is from 15 to 60% by mass. In yet another embodiment of the present invention, the amount is from 17 to 60% by mass. In yet another embodiment of the present invention, the amount is from 20 to 60% by mass. In yet another embodiment of the present invention, the amount is from 25 to 60% by mass. In yet another embodiment of the present invention, the amount is from 30 to 60% by mass. In yet another embodiment of the present invention, the amount is from 32 to 60% by mass. Further, in yet another embodiment of the present invention, the amount is from 35 to 60% by mass.

Moreover, in one embodiment of the present invention, the amount of the above compound relative to the total mass of the liquid crystal composition of the present invention is from 2 to 60% by mass. Further, in another embodiment of the present invention, the amount is from 2 to 50% by mass. In yet another embodiment of the present invention, the amount is from 2 to 40% by mass. In yet another embodiment of the present invention, the amount is from 2 to 35% by mass. In yet another embodiment of the present invention, the amount is from 2 to 30% by mass. In yet another embodiment of the present invention, the amount is from 2 to 25% by mass. In yet another embodiment of the present invention, the amount is from 2 to 20% by mass. Further, in yet another embodiment of the present invention, the amount is from 2 to 15% by mass.

Moreover, the compound represented by general formula (I-1-1) is preferably a compound selected from the group of compounds represented by formula (1.1) to formula (1.3), is more preferably a compound represented by formula (1.2) or formula (1.3), and is particularly preferably a compound represented by formula (1.3). As indicated above, the composition contains 10 to 15% by mass of a compound represented by the formula (1.3).

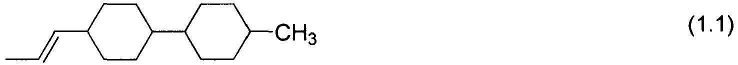

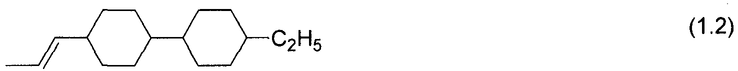

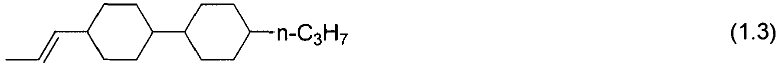

When the compound represented by formula (1.2) or formula (1.3) is used alone, using a larger amount of the compound represented by formula (1.2) has the effect of improving the response speed, whereas the amount of the compound represented by formula (1.3) preferably satisfies the range indicated below, as this yields a liquid crystal composition having a fast response speed, and superior electrical and optical reliability.

The amount of the compound represented by formula (1.3) relative to the total mass of the liquid crystal composition of the present invention is at least 10% by mass but not more than 15% by mass.

Moreover, the compound represented by general formula (1-1) is preferably a compound selected from the group of compounds represented by general formula (1-1-2).

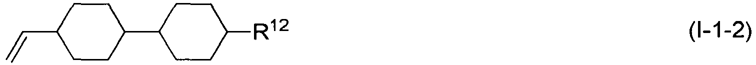

In the formula, R¹² represents an alkyl group having 1 to 5 carbon atoms, an alkoxy group having 1 to 5 carbon atoms, or an alkenyl group having 2 to 5 carbon atoms.

There are no particular limitations on the types of these compounds that can be combined, and a plurality of compounds represented by general formula (I-1-2) can be combined as appropriate in accordance with the level of performance required for properties such as the solubility at low temperature, the transition temperature, the electrical reliability and the birefringence. The type of compound used may, for example, be a single type of compound in one embodiment of the present invention. Alternatively, in another embodiment of the present invention, two types of compounds may be used. Further, in yet another embodiment of the present invention, three types of compounds may be used.

In the liquid crystal composition of the present invention, it is necessary to appropriately adjust the amount of the compound represented by general formula (1-1-2) in accordance with the level of performance required for properties such as the solubility at low temperature, the transition temperature, the electrical reliability, the birefringence, the process compatibility, dropping mark defects, burn-in and the dielectric anisotropy.

For example, in one embodiment of the present invention, the amount of the above compound relative to the total mass of the liquid crystal composition of the present invention is from 7 to 60% by mass. Alternatively, in another embodiment of the present invention, the amount is from 15 to 60% by mass. Further, in yet another embodiment of the present invention, the amount is from 18 to 60% by mass. In yet another embodiment of the present invention, the amount is from 21 to 60% by mass. In yet another embodiment of the present invention, the amount is from 24 to 60% by mass. In yet another embodiment of the present invention, the amount is from 27 to 60% by mass. In yet another embodiment of the present invention, the amount is from 30 to 60% by mass. In yet another embodiment of the present invention, the amount is from 34 to 60% by mass. In yet another embodiment of the present invention, the amount is from 37 to 60% by mass. In yet another embodiment of the present invention, the amount is from 41 to 60% by mass. In yet another embodiment of the present invention, the amount is from 47 to 60% by mass. Further, in yet another embodiment of the present invention, the amount is from 50 to 60% by mass.

Moreover, in one embodiment of the present invention, the amount of the above compound relative to the total mass of the liquid crystal composition of the present invention is from 7 to 60% by mass. Further, in another embodiment of the present invention, the amount is from 7 to 55% by mass. In yet another embodiment of the present invention, the amount is from 7 to 45% by mass. In yet another embodiment of the present invention, the amount is from 7 to 40% by mass. In yet another embodiment of the present invention, the amount is from 7 to 35% by mass. In yet another embodiment of the present invention, the amount is from 7 to 30% by mass. In yet another embodiment of the present invention, the amount is from 7 to 25% by mass. Further, in yet another embodiment of the present invention, the amount is from 7 to 20% by mass.

Moreover, the compound represented by general formula (1-1-2) is preferably a compound selected from the group of compounds represented by formula (2.1) to formula (2.4), and is more preferably a compound represented by formula (2.2) to formula (2.4). In particular, the compound represented by formula (2.2) yields a particular improvement in the response speed of the liquid crystal composition of the present invention, and is consequently preferred. Further, when a high Tni is required rather than a fast response speed, the use of a compound represented by formula (2.3) or formula (2.4) is preferable. The amount of the compound represented by formula (2.3) or formula (2.4) is preferably at least 30% in order to improve the solubility at low temperature. As indicated above, the composition contains 30 to 40% by mass of a compound represented by formula (2.2).

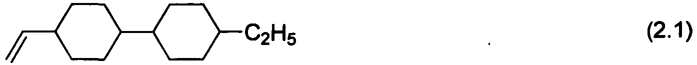

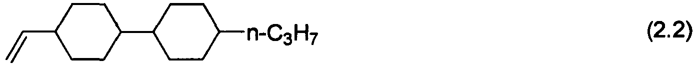

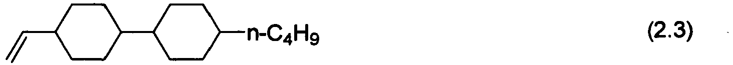

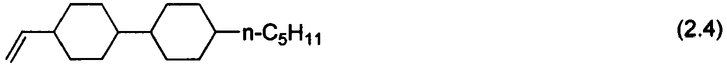

In the liquid crystal composition of the present invention, the amount of the compound represented by formula (2.2) relative to the total mass of the liquid crystal composition of the present invention is at least 30% by mass but not more than 40% by mass, at least 33% by mass but not more than 40% by mass, and at least 36% by mass but not more than 40% by mass.

In the liquid crystal composition of the present invention, the amount of the compound represented by formula (2.3) relative to the total mass of the liquid crystal composition of the present invention is preferably at least 5% by mass but not more than 55% by mass, more preferably at least 10% by mass but not more than 45% by mass, still more preferably at least 10% by mass but not more than 35% by mass, still more preferably at least 10% by mass but not more than 30% by mass, still more preferably at least 10% by mass but not more than 25% by mass, still more preferably at least 15% by mass but not more than 25% by mass, and particularly preferably at least 17% by mass but not more than 22% by mass.

In the liquid crystal composition of the present invention, the amount of the compound represented by formula (2.4) relative to the total mass of the liquid crystal composition of the present invention is preferably at least 1% by mass but not more than 55% by mass, more preferably at least 3% by mass but not more than 45% by mass, still more preferably at least 3% by mass but not more than 35% by mass, still more preferably at least 3% by mass but not more than 25% by mass, still more preferably at least 3% by mass but not more than 15% by mass, still more preferably at least 5% by mass but not more than 12% by mass, still more preferably at least 5% by mass but not more than 10% by mass, and particularly preferably at least 6% by mass but not more than 8% by mass.

The liquid crystal composition of the present invention may also contain a compound represented by formula (2.5), which has a structure similar to that of the compound represented by general formula (1-1-2).

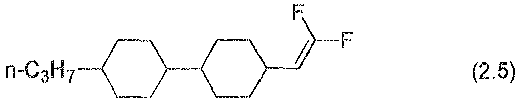

The amount of the compound represented by formula (2.5) is preferably adjusted in accordance with the desired level of performance for properties such as the solubility at low temperature, the transition temperature, the electrical reliability and the birefringence, and the amount of the compound relative to the total mass of the liquid crystal composition of the present invention is preferably at least 11% by mass, more preferably 15% by mass or more, still more preferably 23% by mass or more, still more preferably 26% by mass or more, and particularly preferably 28% by mass or more.

Moreover, the compound represented by general formula (I) is preferably a compound selected from the group of compounds represented by general formula (1-2).

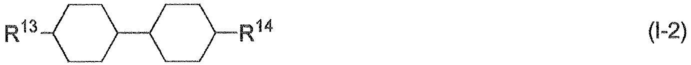

In the formula, R¹³ and R¹⁴ independently represent an alkyl group having 1 to 5 carbon atoms.

There are no particular limitations on the types of these compounds that can be combined, and a plurality of compounds represented by general formula (1-2) can be combined as appropriate in accordance with the level of performance required for properties such as the solubility at low temperature, the transition temperature, the electrical reliability and the birefringence. The type of compound used may, for example, be a single type of compound in one embodiment of the present invention. Alternatively, in another embodiment of the present invention, two types of compounds may be used. Further, in yet another embodiment of the present invention, three types of compounds may be used.

In the liquid crystal composition of the present invention, it is necessary to appropriately adjust the amount of the compound represented by general formula (1-2) in accordance with the level of performance required for properties such as the solubility at low temperature, the transition temperature, the electrical reliability, the birefringence, the process compatibility, dropping mark defects, burn-in and the dielectric anisotropy.

For example, in one embodiment of the present invention, the amount of the above compound relative to the total mass of the liquid crystal composition of the present invention is from 3 to 60% by mass. Alternatively, in another embodiment of the present invention, the amount is from 4 to 60% by mass. Further, in yet another embodiment of the present invention, the amount is from 15 to 60% by mass. In yet another embodiment of the present invention, the amount is from 25 to 60% by mass. In yet another embodiment of the present invention, the amount is from 30 to 60% by mass. In yet another embodiment of the present invention, the amount is from 35 to 60% by mass. In yet another embodiment of the present invention, the amount is from 38 to 60% by mass. In yet another embodiment of the present invention, the amount is from 40 to 60% by mass. In yet another embodiment of the present invention, the amount is from 42 to 60% by mass. In yet another embodiment of the present invention, the amount is from 45 to 60% by mass. In yet another embodiment of the present invention, the amount is from 47 to 60% by mass. Further, in yet another embodiment of the present invention, the amount is from 50 to 60% by mass.

Moreover, in one embodiment of the present invention, the amount of the above compound relative to the total mass of the liquid crystal composition of the present invention is from 3 to 60% by mass. Further, in another embodiment of the present invention, the amount is from 3 to 55% by mass. In yet another embodiment of the present invention, the amount is from 3 to 45% by mass. In yet another embodiment of the present invention, the amount is from 3 to 40% by mass. In yet another embodiment of the present invention, the amount is from 3 to 30% by mass. In yet another embodiment of the present invention, the amount is from 3 to 20% by mass. In yet another embodiment of the present invention, the amount is from 3 to 15% by mass. Further, in yet another embodiment of the present invention, the amount is from 3 to 5% by mass.

Moreover, the compound represented by general formula (1-2) is preferably a compound selected from the group of compounds represented by formula (3.1) to formula (3.4), and is more preferably a compound represented by formula (3.1), formula (3.3) or formula (3.4). In particular, the compound represented by formula (3.2) yields a particular improvement in the response speed of the liquid crystal composition of the present invention, and is consequently preferred. Further, when a high Tni is required rather than a fast response speed, the use of a compound represented by formula (3.3) or formula (3.4) is preferable. The amount of the compound represented by formula (3.3) or formula (3.4) is preferably at least 20% in order to improve the solubility at low temperature.

Moreover, the compound represented by general formula (1-2) is preferably a compound selected from the group of compounds represented by formula (3.1) to formula (3.4), and is more preferably a compound represented by formula (3.1), formula (3.3) and/or formula (3.4).

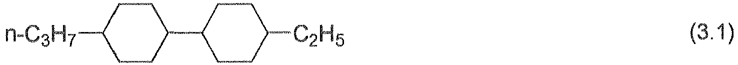

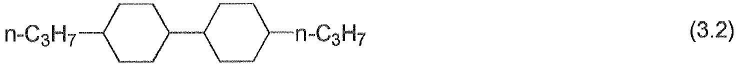

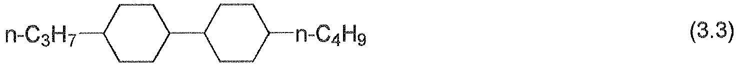

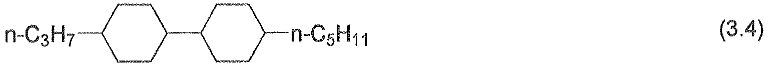

In the liquid crystal composition of the present invention, the amount of the compound represented by formula (3.3) relative to the total mass of the liquid crystal composition of the present invention is preferably at least 2% by mass but not more than 40% by mass. More preferred examples of the above amount are at least 3% by mass but not more than 40% by mass, at least 4% by mass but not more than 40% by mass, at least 10% by mass but not more than 40% by mass, at least 12% by mass but not more than 40% by mass, at least 14% by mass but not more than 40% by mass, at least 16% by mass but not more than 40% by mass, at least 20% by mass but not more than 40% by mass, at least 23% by mass but not more than 40% by mass, at least 26% by mass but not more than 40% by mass, at least 30% by mass but not more than 40% by mass, at least 34% by mass but not more than 40% by mass, and at least 37% by mass but not more than 40% by mass, or alternatively, at least 3% by mass but not more than 4% by mass, at least 3% by mass but not more than 10% by mass, at least 3% by mass but not more than 12% by mass, at least 3% by mass but not more than 14% by mass, at least 3% by mass but not more than 16% by mass, at least 3% by mass but not more than 20% by mass, at least 3% by mass but not more than 23% by mass, at least 3% by mass but not more than 26% by mass, at least 3% by mass but not more than 30% by mass, at least 3% by mass but not more than 34% by mass, and at least 3% by mass but not more than 37% by mass.

Moreover, the compound represented by general formula (I) is preferably a compound selected from the group of compounds represented by general formula (1-3).

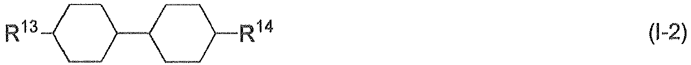

In the formula, R¹³ represents an alkyl group having 1 to 5 carbon atoms, and R¹⁵ represents an alkoxy group having 1 to 4 carbon atoms.

There are no particular limitations on the types of these compounds that can be combined, and a plurality of compounds represented by general formula (1-3) can be combined as appropriate in accordance with the level of performance required for properties such as the solubility at low temperature, the transition temperature, the electrical reliability and the birefringence. The type of compound used may, for example, be a single type of compound in one embodiment of the present invention. Alternatively, in another embodiment of the present invention, two types of compounds may be used. Further, in yet another embodiment of the present invention, three types of compounds may be used.

In the liquid crystal composition of the present invention, it is necessary to appropriately adjust the amount of the compound represented by general formula (1-3) in accordance with the level of performance required for properties such as the solubility at low temperature, the transition temperature, the electrical reliability, the birefringence, the process compatibility, dropping mark defects, burn-in and the dielectric anisotropy.

For example, in one embodiment of the present invention, the amount of the above compound relative to the total mass of the liquid crystal composition of the present invention is 3 to 60% by mass. Alternatively, in another embodiment of the present invention, the amount is from 4 to 60% by mass. Further, in yet another embodiment of the present invention, the amount is from 15 to 60% by mass. In yet another embodiment of the present invention, the amount is from 25 to 60% by mass. In yet another embodiment of the present invention, the amount is from 30 to 60% by mass. In yet another embodiment of the present invention, the amount is from 35 to 60% by mass. In yet another embodiment of the present invention, the amount is from 38 to 60% by mass. In yet another embodiment of the present invention, the amount is from 40 to 60% by mass. In yet another embodiment of the present invention, the amount is from 42 to 60% by mass. In yet another embodiment of the present invention, the amount is from 45 to 60% by mass. In yet another embodiment of the present invention, the amount is from 47 to 60% by mass. Further, in yet another embodiment of the present invention, the amount is from 50 to 60% by mass.

Moreover, in one embodiment of the present invention, the amount of the above compound relative to the total mass of the liquid crystal composition of the present invention is from 3 to 60% by mass. Further, in another embodiment of the present invention, the amount is from 3 to 55% by mass. In yet another embodiment of the present invention, the amount is from 3 to 45% by mass. In yet another embodiment of the present invention, the amount is from 3 to 40% by mass. In yet another embodiment of the present invention, the amount is from 3 to 30% by mass. In yet another embodiment of the present invention, the amount is from 3 to 20% by mass. In yet another embodiment of the present invention, the amount is from 3 to 15% by mass. Further, in yet another embodiment of the present invention, the amount is from 3 to 5% by mass.

When the solubility at low temperature is deemed important, setting the amount to a larger value yields a superior effect, whereas in contrast, when response speed is deemed important, setting the amount to a smaller value yields a superior effect. Moreover, when it is desirable to improve the level of dropping mark defects and the burn-in properties, the amount is preferably set to a mid-range value.

Moreover, the compound represented by general formula (I-3) is preferably a compound selected from the group of compounds represented by formula (4.1) to formula (4.3), and is more preferably a compound represented by formula (4.3).

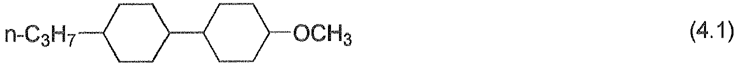

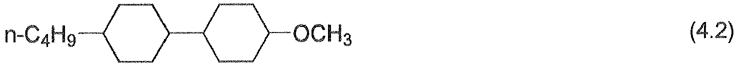

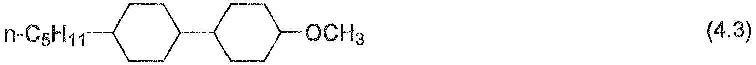

The amount of the compound represented by formula (4.3) relative to the total mass of the liquid crystal composition of the present invention is preferably at least 2% by mass but not more than 30% by mass, more preferably at least 4% by mass but not more than 30% by mass, still more preferably at least 6% by mass but not more than 30% by mass, still more preferably at least 8% by mass but not more than 30% by mass, still more preferably at least 10% by mass but not more than 30% by mass, still more preferably at least 12% by mass but not more than 30% by mass, still more preferably at least 14% by mass but not more than 30% by mass, still more preferably at least 16% by mass but not more than 30% by mass, still more preferably at least 18% by mass but not more than 25% by mass, still more preferably at least 20% by mass but not more than 24% by mass, and particularly preferably at least 22% by mass but not more than 23% by mass.

Moreover, the compound represented by general formula (I) is preferably a compound selected from the group of compounds represented by general formula (1-4).

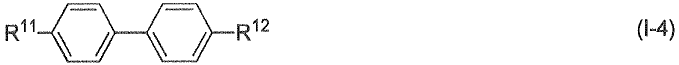

In the formula, R¹¹ and R¹² independently represent an alkyl group having 1 to 5 carbon atoms, an alkenyl group having 4 or 5 carbon atoms, or an alkoxy group having 1 to 4 carbon atoms.

There are no particular limitations on the types of these compounds that can be combined, and a plurality of compounds represented by general formula (1-4) can be combined as appropriate in accordance with the level of performance required for properties such as the solubility at low temperature, the transition temperature, the electrical reliability and the birefringence. The type of compound used may, for example, be a single type of compound in one embodiment of the present invention. Alternatively, in another embodiment of the present invention, two types of compounds may be used.

In the liquid crystal composition of the present invention, it is necessary to appropriately adjust the amount of the compound represented by general formula (1-4) in accordance with the level of performance required for properties such as the solubility at low temperature, the transition temperature, the electrical reliability, the birefringence, the process compatibility, dropping mark defects, burn-in and the dielectric anisotropy.

For example, in one embodiment of the present invention, the amount of the above compound relative to the total mass of the liquid crystal composition of the present invention is from 3 to 50% by mass. Alternatively, in another embodiment of the present invention, the amount is from 5 to 50% by mass. Further, in yet another embodiment of the present invention, the amount is from 6 to 50% by mass. In yet another embodiment of the present invention, the amount is from 8 to 50% by mass. In yet another embodiment of the present invention, the amount is from 10 to 50% by mass. In yet another embodiment of the present invention, the amount is from 12 to 50% by mass. In yet another embodiment of the present invention, the amount is from 15 to 50% by mass. In yet another embodiment of the present invention, the amount is from 20 to 50% by mass. In yet another embodiment of the present invention, the amount is from 25 to 50% by mass. In yet another embodiment of the present invention, the amount is from 30 to 50% by mass. In yet another embodiment of the present invention, the amount is from 35 to 50% by mass. Further, in yet another embodiment of the present invention, the amount is from 40 to 50% by mass.

Moreover, in one embodiment of the present invention, the amount of the above compound relative to the total mass of the liquid crystal composition of the present invention is from 3 to 50% by mass. Further, in another embodiment of the present invention, the amount is from 3 to 40% by mass. In yet another embodiment of the present invention, the amount is from 3 to 35% by mass. In yet another embodiment of the present invention, the amount is from 3 to 30% by mass. In yet another embodiment of the present invention, the amount is from 3 to 20% by mass. In yet another embodiment of the present invention, the amount is from 3 to 15% by mass. In yet another embodiment of the present invention, the amount is from 3 to 10% by mass. Further, in yet another embodiment of the present invention, the amount is from 3 to 5% by mass.

When a high birefringence is required, setting the amount to a larger value yields a superior effect, whereas in contrast, when a high Tni value is deemed important, setting the amount to a smaller value yields a superior effect. Moreover, when it is desirable to improve the level of dropping mark defects and the burn-in properties, the amount is preferably set to a mid-range value.

Moreover, the compound represented by general formula (1-4) is preferably a compound selected from the group of compounds represented by formula (5.1) to formula (5.4), and is more preferably a compound represented by formula (5.2) to formula (5.4).

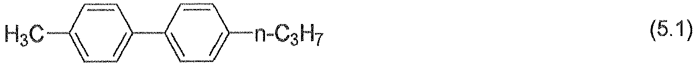

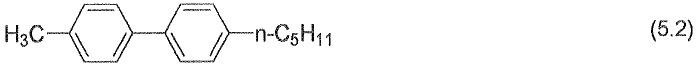

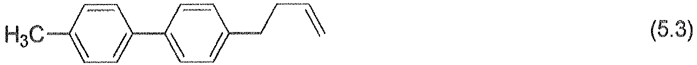

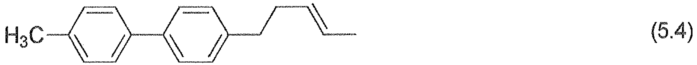

The amount of the compound represented by formula (5.4) relative to the total mass of the liquid crystal composition of the present invention is preferably at least 2% by mass but not more than 30% by mass. More preferred examples of the above amount are at least 4% by mass but not more than 30% by mass, at least 6% by mass but not more than 30% by mass, at least 8% by mass but not more than 30% by mass, at least 10% by mass but not more than 30% by mass, at least 12% by mass but not more than 30% by mass, at least 14% by mass but not more than 30% by mass, at least 16% by mass but not more than 30% by mass, at least 18% by mass but not more than 30% by mass, at least 20% by mass but not more than 30% by mass, at least 22% by mass but not more than 30% by mass, at least 23% by mass but not more than 30% by mass, at least 24% by mass but not more than 30% by mass, and at least 25% by mass but not more than 30% by mass, or alternatively, at least 4% by mass but not more than 6% by mass, at least 4% by mass but not more than 8% by mass, at least 4% by mass but not more than 10% by mass, at least 4% by mass but not more than 12% by mass, at least 4% by mass but not more than 14% by mass, at least 4% by mass but not more than 16% by mass, at least 4% by mass but not more than 18% by mass, at least 4% by mass but not more than 20% by mass, at least 4% by mass but not more than 22% by mass, at least 4% by mass but not more than 23% by mass, at least 4% by mass but not more than 24% by mass, and at least 4% by mass but not more than 25% by mass.

Moreover, the compound represented by general formula (I) is preferably a compound selected from the group of compounds represented by general formula (1-5).

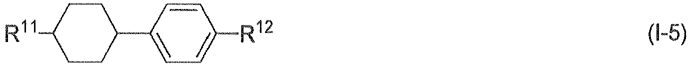

In the formula, R¹¹ represents an alkyl group having 1 to 5 carbon atoms, an alkenyl group having 2 to 5 carbon atoms, or an alkoxy group having 1 to 4 carbon atoms, and R¹² represents an alkyl group having 1 to 5 carbon atoms, an alkenyl group having 4 or 5 carbon atoms, or an alkoxy group having I to 4 carbon atoms.

There are no particular limitations on the types of these compounds that can be combined, and a plurality of compounds represented by general formula (1-5) can be combined as appropriate in accordance with the level of performance required for properties such as the solubility at low temperature, the transition temperature, the electrical reliability and the birefringence. The type of compound used may, for example, be a single type of compound in one embodiment of the present invention. Alternatively, in another embodiment of the present invention, two types of compounds may be used.

In the liquid crystal composition of the present invention, it is necessary to appropriately adjust the amount of the compound represented by general formula (1-5) in accordance with the level of performance required for properties such as the solubility at low temperature, the transition temperature, the electrical reliability, the birefringence, the process compatibility, dropping mark defects, burn-in and the dielectric anisotropy.

For example, in one embodiment of the present invention, the amount of the above compound relative to the total mass of the liquid crystal composition of the present invention is from 1 to 50% by mass. Alternatively, in another embodiment of the present invention, the amount is from 5 to 50% by mass. Further, in yet another embodiment of the present invention, the amount is from 8 to 50% by mass. In yet another embodiment of the present invention, the amount is from 11 to 50% by mass. In yet another embodiment of the present invention, the amount is from 13 to 50% by mass. In yet another embodiment of the present invention, the amount is from 15 to 50% by mass. In yet another embodiment of the present invention, the amount is from 17 to 50% by mass. In yet another embodiment of the present invention, the amount is from 20 to 50% by mass. In yet another embodiment of the present invention, the amount is from 25 to 50% by mass. In yet another embodiment of the present invention, the amount is from 30 to 50% by mass. In yet another embodiment of the present invention, the amount is from 35 to 50% by mass. Further, in yet another embodiment of the present invention, the amount is from 40 to 50% by mass.

Moreover, in one embodiment of the present invention, the amount of the above compound relative to the total mass of the liquid crystal composition of the present invention is from 1 to 50% by mass. Further, in another embodiment of the present invention, the amount is from 1 to 40% by mass. In yet another embodiment of the present invention, the amount is from 1 to 35% by mass. In yet another embodiment of the present invention, the amount is from 1 to 30% by mass. In yet another embodiment of the present invention, the amount is from 1 to 20% by mass. In yet another embodiment of the present invention, the amount is from 1 to 15% by mass. In yet another embodiment of the present invention, the amount is from 1 to 10% by mass. Further, in yet another embodiment of the present invention, the amount is from 1 to 5% by mass.

When the solubility at low temperature is deemed important, setting the amount to a larger value yields a superior effect, whereas in contrast, when the response speed is deemed important, setting the amount to a smaller value yields a superior effect. Moreover, when it is desirable to improve the level of dropping mark defects and the burn-in properties, the amount is preferably set to a mid-range value.

Moreover, the compound represented by general formula (1-5) is preferably a compound selected from the group of compounds represented by formula (6.1) to formula (6.6), and is more preferably a compound represented by formula (6.3), formula (6.4) or formula (6.6).

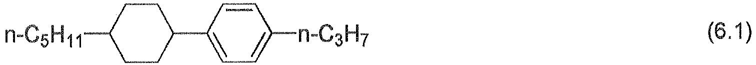

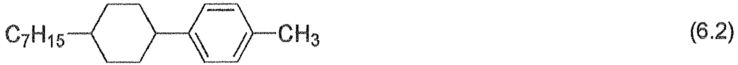

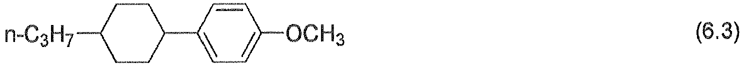

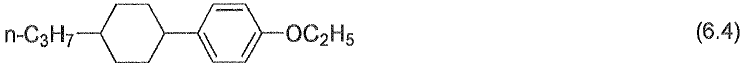

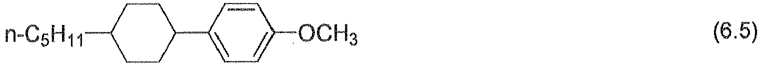

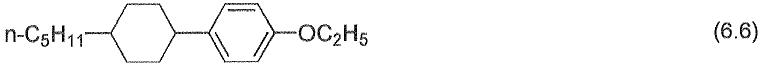

For example, the amount of the compound represented by formula (6.6) relative to the total mass of the liquid crystal composition of the present invention is preferably at least 2% by mass but not more than 30% by mass, more preferably at least 4% by mass but not more than 30% by mass, still more preferably at least 5% by mass but not more than 30% by mass, still more preferably at least 6% by mass but not more than 30% by mass, still more preferably at least 9% by mass but not more than 30% by mass, still more preferably at least 12% by mass but not more than 30% by mass, still more preferably at least 14% by mass but not more than 30% by mass, still more preferably at least 16% by mass but not more than 30% by mass, still more preferably at least 18% by mass but not more than 25% by mass, still more preferably at least 20% by mass but not more than 24% by mass, and particularly preferably at least 22% by mass but not more than 23% by mass.

The liquid crystal composition of the present invention may also contain compounds represented by formula (6.7) and formula (6.8) as the compound represented by general formula (1-5).

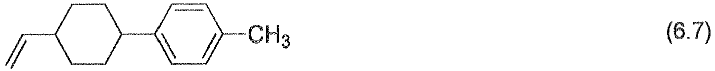

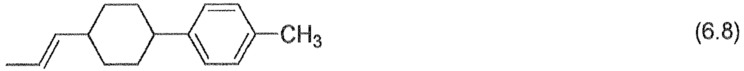

The amount of the compound represented by formula (6.7) is preferably adjusted in accordance with the level of performance required for properties such as the solubility at low temperature, the transition temperature, the electrical reliability and the birefringence, and the amount of this compound relative to the total mass of the liquid crystal composition of the present invention is preferably at least 2% by mass, more preferably 3% by mass or more, still more preferably 5% by mass or more, and particularly preferably 7% by mass or more.

Moreover, the compound represented by general formula (I) is preferably a compound selected from the group of compounds represented by general formula (1-6).

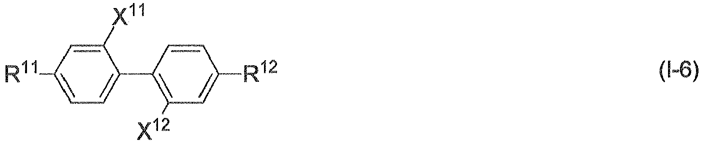

In the formula, R¹¹ and R¹² independently represent an alkyl group having 1 to 5 carbon atoms, an alkenyl group having 4 or 5 carbon atoms, or an alkoxy group having 1 to 4 carbon atoms, and X¹¹ and X¹² independently represent a fluorine atom or a hydrogen atom, provided that one of X¹¹ and X¹² represents a fluorine atom.

The amount of the compound represented by general formula (1-6) relative to the total mass of the liquid crystal composition of the present invention is preferably at least 2% by mass but not more than 30% by mass, more preferably at least 4% by mass but not more than 30% by mass, still more preferably at least 5% by mass but not more than 30% by mass, still more preferably at least 6% by mass but not more than 30% by mass, still more preferably at least 9% by mass but not more than 30% by mass, still more preferably at least 12% by mass but not more than 30% by mass, still more preferably at least 14% by mass but not more than 30% by mass, still more preferably at least 16% by mass but not more than 30% by mass, still more preferably at least 18% by mass but not more than 25% by mass, still more preferably at least 20% by mass but not more than 24% by mass, and particularly preferably at least 22% by mass but not more than 23% by mass.

Moreover, the compound represented by general formula (1-6) is preferably a compound represented by formula (7.1).

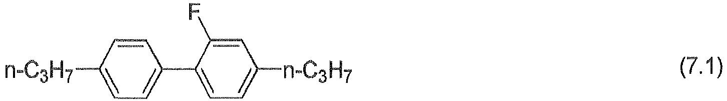

Moreover, the compound represented by general formula (I) is preferably a compound selected from the group of compounds represented by general formula (1-7).

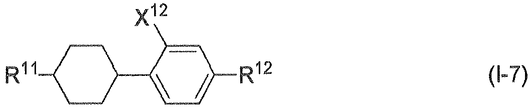

In the formula, R¹¹ and R¹² independently represent an alkyl group having 1 to 5 carbon atoms, an alkenyl group having 2 to 5 carbon atoms, or an alkoxy group having 1 to 4 carbon atoms, and X¹² represents a fluorine atom or a chlorine atom.

The amount of the compound represented by general formula (1-7) relative to the total mass of the liquid crystal composition of the present invention is preferably at least 1% by mass but not more than 30% by mass, more preferably at least 2% by mass but not more than 30% by mass, still more preferably at least 3% by mass but not more than 30% by mass, still more preferably at least 4% by mass but not more than 30% by mass, still more preferably at least 6% by mass but not more than 30% by mass, still more preferably at least 8% by mass but not more than 30% by mass, still more preferably at least 10% by mass but not more than 30% by mass, still more preferably at least 12% by mass but not more than 30% by mass, still more preferably at least 15% by mass but not more than 2,5% by mass, still more preferably at least 18% by mass but not more than 24% by mass, and particularly preferably at least 21% by mass but not more than 22% by mass.

Moreover, the compound represented by general formula (1-7) is preferably a compound represented by formula (8.1).

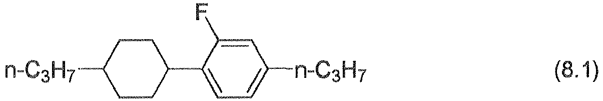

Moreover, the compound represented by general formula (I) is preferably a compound selected from the group of compounds represented by general formula (1-8).

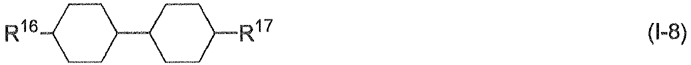

In the formula, R¹⁶ and R¹⁷ independently represent an alkenyl group having 2 to 5 carbon atoms.

There are no particular limitations on the types of these compounds that can be combined, and of the plurality of compounds represented by general formula (1-8), one to three types of compounds are preferably combined in accordance with the level of performance required for properties such as the solubility at low temperature, the transition temperature, the electrical reliability and the birefringence. The amount of the compound represented by general formula (1-8) may be adjusted in accordance with the level of performance required for properties such as the solubility at low temperature, the transition temperature, the electrical reliability, the birefringence, the process compatibility, dropping mark defects, burn-in and the dielectric anisotropy, and relative to the total mass of the liquid crystal composition of the present invention, the amount is preferably at least 5% by mass but not more than 65% by mass, more preferably at least 10% by mass but not more than 65% by mass, still more preferably at least 15% by mass but not more than 65% by mass, still more preferably at least 20% by mass but not more than 65% by mass, still more preferably at least 25% by mass but not more than 65% by mass, still more preferably at least 30% by mass but not more than 65% by mass, still more preferably at least 35% by mass but not more than 65% by mass, still more preferably at least 40% by mass but not more than 65% by mass, still more preferably at least 45% by mass but not more than 65% by mass, still more preferably at least 50% by mass but not more than 58% by mass, and particularly preferably at least 55% by mass but not more than 56% by mass.

The compound represented by general formula (1-8) is preferably a compound selected from the group of compounds represented by formula (9.1) to formula (9.10), and is more preferably a compound represented by formula (9.2), formula (9.4) or formula (9.7).

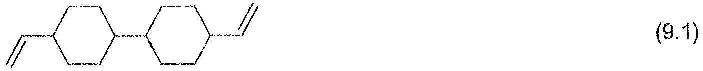

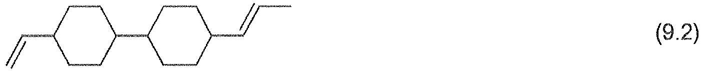

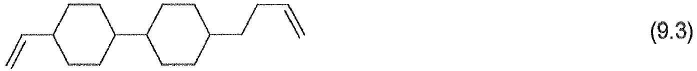

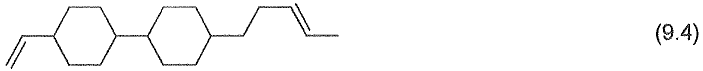

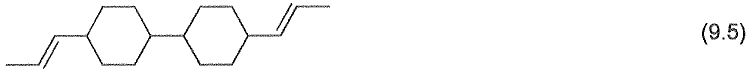

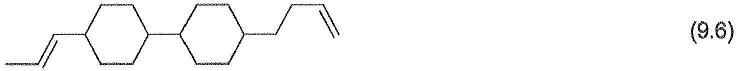

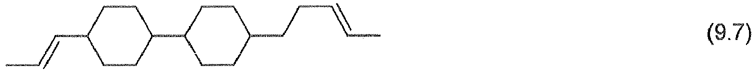

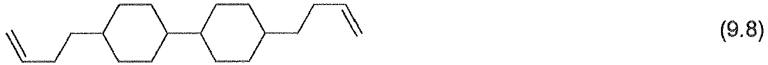

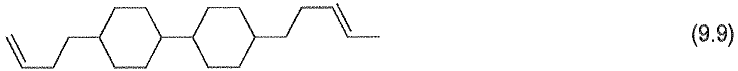

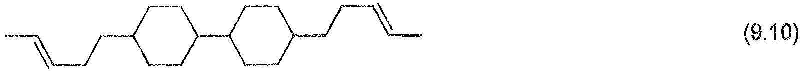

Moreover, the compound represented by general formula (L) is, for example, preferably a compound selected from among compounds represented by general formula (II).

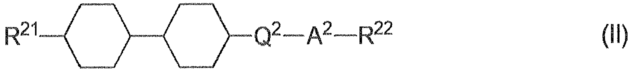

R²¹ and R²² independently represent an alkenyl group having 2 to 5 carbon atoms, an alkyl group having 1 to 5 carbon atoms, or an alkoxy group having 1 to 4 carbon atoms, A² represents a 1,4-cyclohexylene group or 1,4-phenylene group, and Q² represents a single bond, -COO-, -CH₂-CH₂- or -CF₂O-.

There are no particular limitations on the types of these compounds that can be combined, and a plurality of compounds represented by general formula (II) can be combined as appropriate in accordance with the level of performance required for properties such as the solubility at low temperature, the transition temperature, the electrical reliability and the birefringence. The type of compound used may, for example, be a single type of compound in one embodiment of the present invention. Alternatively, in another embodiment of the present invention, two types of compounds may be used. Further, in yet another embodiment of the present invention, three types of compounds may be used. Moreover, in yet another embodiment of the present invention, 4 or more types of compounds may be used.

In the liquid crystal composition of the present invention, it is necessary to appropriately adjust the amount of the compound represented by general formula (II) in accordance with the level of performance required for properties such as the solubility at low temperature, the transition temperature, the electrical reliability, the birefringence, the process compatibility, dropping mark defects, burn-in and the dielectric anisotropy.

For example, in one embodiment of the present invention, the amount of the above compound relative to the total mass of the liquid crystal composition of the present invention is from 3 to 50% by mass. Alternatively, in another embodiment of the present invention, the amount is from 5 to 50% by mass. Further, in yet another embodiment of the present invention, the amount is from 7 to 50% by mass. In yet another embodiment of the present invention, the amount is from 10 to 50% by mass. In yet another embodiment of the present invention, the amount is from 14 to 50% by mass. In yet another embodiment of the present invention, the amount is from 16 to 50% by mass. In yet another embodiment of the present invention, the amount is from 20 to 50% by mass. In yet another embodiment of the present invention, the amount is from 23 to 50% by mass. In yet another embodiment of the present invention, the amount is from 26 to 50% by mass. In yet another embodiment of the present invention, the amount is from 30 to 50% by mass. In yet another embodiment of the present invention, the amount is from 35 to 50% by mass. Further, in yet another embodiment of the present invention, the amount is from 40 to 50% by mass.

Moreover, in one embodiment of the present invention, the amount of the above compound relative to the total mass of the liquid crystal composition of the present invention is from 3 to 50% by mass. Further, in another embodiment of the present invention, the amount is from 3 to 40% by mass. In yet another embodiment of the present invention, the amount is from 3 to 35% by mass. In yet another embodiment of the present invention, the amount is from 3 to 30% by mass. In yet another embodiment of the present invention, the amount is from 3 to 20% by mass. In yet another embodiment of the present invention, the amount is from 3 to 15% by mass. In yet another embodiment of the present invention, the amount is from 3 to 10% by mass. Further, in yet another embodiment of the present invention, the amount is from 3 to 5% by mass.

Moreover, the compound represented by general formula (II) is, for example, preferably a compound selected from the group of compounds represented by general formula (II-1).

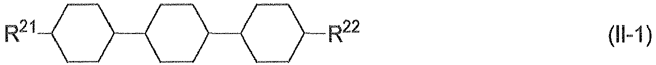

In the formula, R²¹ and R²² independently represent an alkenyl group having 2 to 5 carbon atoms, an alkyl group having 1 to 5 carbon atoms, or an alkoxy group having 1 to 4 carbon atoms.

The amount of the compound represented by general formula (II-1) is preferably adjusted in accordance with the level of performance required for properties such as the solubility at low temperature, the transition temperature, the electrical reliability, the birefringence, and the amount is preferably at least 4% by mass but not more than 24% by mass, more preferably at least 8% by mass but not more than 18% by mass, and still more preferably at least 12% by mass but not more than 14% by mass.

The compound represented by general formula (II-1) is preferably a compound represented by formula (10.1) or formula (10.2).

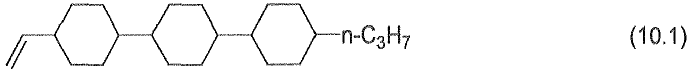

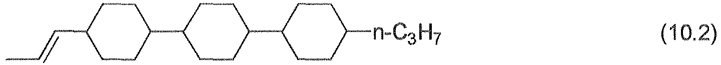

Moreover, the compound represented by general formula (II) is, for example, preferably a compound selected from the group of compounds represented by general formula (II-2).

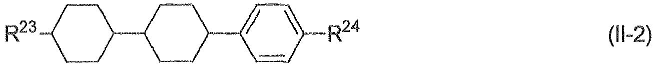

In the formula, R²³ represents an alkenyl group having 2 to 5 carbon atoms, and R²⁴ represents an alkyl group having 1 to 5 carbon atoms or an alkoxy group having 1 to 4 carbon atoms.

There are no particular limitations on the types of these compounds that can be combined, and a plurality of compounds represented by general formula (II-2) can be combined as appropriate in accordance with the level of performance required for properties such as the solubility at low temperature, the transition temperature, the electrical reliability and the birefringence. The type of compound used may, for example, be a single type of compound in one embodiment of the present invention. Alternatively, in another embodiment of the present invention, two or more types of compounds may be used.

In the liquid crystal composition of the present invention, it is necessary to appropriately adjust the amount of the compound represented by general formula (II-2) in accordance with the level of performance required for properties such as the solubility at low temperature, the transition temperature, the electrical reliability, the birefringence, the process compatibility, dropping mark defects, burn-in and the dielectric anisotropy.

For example, in one embodiment of the present invention, the amount of the above compound relative to the total mass of the liquid crystal composition of the present invention is from 3 to 50% by mass. Alternatively, in another embodiment of the present invention, the amount is from 5 to 50% by mass. Further, in yet another embodiment of the present invention, the amount is from 7 to 50% by mass. In yet another embodiment of the present invention, the amount is from 10 to 50% by mass. In yet another embodiment of the present invention, the amount is from 14 to 50% by mass. In yet another embodiment of the present invention, the amount is from 16 to 50% by mass. In yet another embodiment of the present invention, the amount is from 20 to 50% by mass. In yet another embodiment of the present invention, the amount is from 23 to 50% by mass. In yet another embodiment of the present invention, the amount is from 26 to 50% by mass. In yet another embodiment of the present invention, the amount is from 30 to 50% by mass. In yet another embodiment of the present invention, the amount is from 35 to 50% by mass. Further, in yet another embodiment of the present invention, the amount is from 40 to 50% by mass.

Moreover, in one embodiment of the present invention, the amount of the above compound relative to the total mass of the liquid crystal composition of the present invention is from 3 to 50% by mass. Further, in another embodiment of the present invention, the amount is from 3 to 40% by mass. In yet another embodiment of the present invention, the amount is from 3 to 35% by mass. In yet another embodiment of the present invention, the amount is from 3 to 30% by mass. In yet another embodiment of the present invention, the amount is from 3 to 20% by mass. In yet another embodiment of the present invention, the amount is from 3 to 15% by mass. In yet another embodiment of the present invention, the amount is from 3 to 10% by mass. Further, in yet another embodiment of the present invention, the amount is from 3 to 5% by mass.

The compound represented by general formula (II-2) is preferably a compound represented by formula (11.1) to formula (11.3).

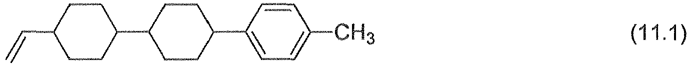

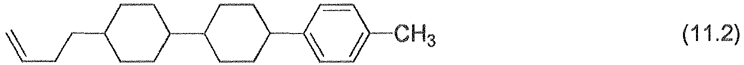

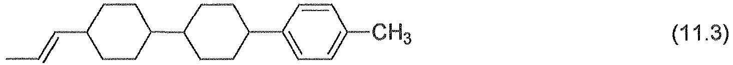

Depending on the level of performance required for properties such as the solubility at low temperature, the transition temperature, the electrical reliability and the birefringence, the composition may include the compound represented by formula (11.1), the compound represented by formula (11.2), both the compound represented by formula (11.1) and the compound represented by formula (11.2), or all of the compounds represented by formula (11.1) to formula (11.3). The amount of the compound represented by formula (11.1) or formula (11.2) relative to the total mass of the liquid crystal composition of the present invention is preferably at least 3% by mass but not more than 40% by mass, more preferably at least 5% by mass but not more than 35% by mass, still more preferably at least 5% by mass but not more than 30% by mass, particularly preferably at least 5% by mass but not more than 25% by mass, and most preferably at least 5% by mass but not more than 20% by mass. Further, examples of the most preferred ranges are at least 8% by mass but not more than 20% by mass, at least 12% by mass but not more than 20% by mass, at least 15% by mass but not more than 20% by mass, at least 5% by mass but not more than 18% by mass, at least 5% by mass but not more than 15% by mass, at least 5% by mass but not more than 12% by mass, at least 5% by mass but not more than 10% by mass, and at least 5% by mass but not more than 8% by mass.

Further, the amount of the compound represented by formula (11.2) relative to the total mass of the liquid crystal composition of the present invention is preferably at least 3% by mass but not more than 40% by mass, more preferably at least 3% by mass but not more than 35% by mass, still more preferably at least 3% by mass but not more than 30% by mass, still more preferably at least 3% by mass but not more than 25% by mass, particularly preferably at least 3% by mass but not more than 20% by mass, and most preferably at least 3% by mass but not more than 15% by mass. Examples of the most preferred ranges are at least 3% by mass but not more than 12% by mass, at least 3% by mass but not more than 10% by mass, at least 3% by mass but not more than 8% by mass, at least 3% by mass but not more than 6% by mass, at least 6% by mass but not more than 15% by mass, at least 8% by mass but not more than 15% by mass, at least 10% by mass but not more than 15% by mass, and at least 12% by mass but not more than 15% by mass.

When both the compound represented by formula (11.1) and the compound represented by formula (11.2) are included, the combined amount of the two compounds relative to the total mass of the liquid crystal composition of the present invention is preferably at least 13% by mass but not more than 45% by mass, more preferably at least 19% by mass but not more than 40% by mass, and still more preferably at least 24% by mass but not more than 35% by mass.

Moreover, the compound represented by general formula (II) is, for example, preferably a compound selected from the group of compounds represented by general formula (II-3).

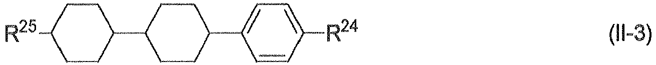

In the formula, R²⁵ represents an alkyl group having 1 to 5 carbon atoms, and R²⁴ represents an alkyl group having 1 to 5 carbon atoms or an alkoxy group having 1 to 4 carbon atoms.

Although there are no particular limitations on the types of these compounds that can be combined, one to three types of compounds are preferably selected from among the plurality of compounds represented by general formula (II-3) in accordance with the level of performance required for properties such as the solubility at low temperature, the transition temperature, the electrical reliability and the birefringence.

It is necessary to appropriately adjust the amount of the compound represented by general formula (II-3) in accordance with the level of performance required for properties such as the solubility at low temperature, the transition temperature, the electrical reliability, the birefringence, the process compatibility, dropping mark defects, burn-in and the dielectric anisotropy. For example, a preferred amount for the above compound relative to the total mass of the liquid crystal composition of the present invention is from 2 to 45% by mass. Examples of more preferred amounts include ranges from 5 to 45% by mass, from 8 to 45 % by mass, from 11 to 45% by mass, from 14 to 45% by mass, from 17 to 45% by mass, from 20 to 45% by mass, from 23 to 45% by mass, from 26 to 45% by mass and from 29 to 45% by mass, or alternatively, from 2 to 45% by mass, from 2 to 40% by mass, from 2 to 35% by mass, from 2 to 30% by mass, from 2 to 25% by mass, from 2 to 20% by mass, from 2 to 15% by mass, and from 2 to 10% by mass.

The compound represented by general formula (II-3) is, for example, preferably a compound represented by formula (12.1) to formula (12.3).

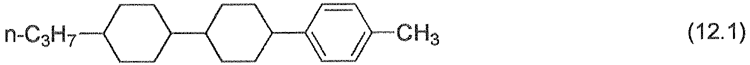

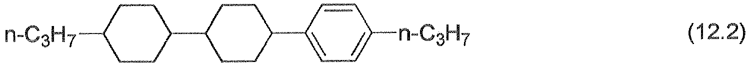

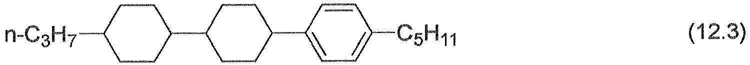

Depending on the level of performance required for properties such as the solubility at low temperature, the transition temperature, the electrical reliability and the birefringence, the composition may include the compound represented by formula (12.1), the compound represented by formula (12.2), or both the compound represented by formula (12.1) and the compound represented by formula (12.2). The amount of the compound represented by formula (12.1) or formula (12.2) relative to the total mass of the liquid crystal composition of the present invention is preferably at least 3% by mass but not more than 40% by mass, more preferably at least 5% by mass but not more than 40% by mass, still more preferably at least 7% by mass but not more than 40% by mass, still more preferably at least 9% by mass but not more than 40% by mass, still more preferably at least 11% by mass but not more than 40% by mass, still more preferably at least 12% by mass but not more than 40% by mass, still more preferably at least 13% by mass but not more than 40% by mass, still more preferably at least 18% by mass but not more than 30% by mass, and particularly preferably at least 21% by mass but not more than 25% by mass. Further, the amount of the compound represented by formula (12.2) relative to the total mass of the liquid crystal composition of the present invention is preferably at least 3% by mass but not more than 40% by mass, more preferably at least 5% by mass but not more than 40% by mass, still more preferably at least 8% by mass but not more than 40% by mass, still more preferably at least 10% by mass but not more than 40% by mass, still more preferably at least 12% by mass but not more than 40% by mass, still more preferably at least 15% by mass but not more than 40% by mass, still more preferably at least 17% by mass but not more than 30% by mass, and particularly preferably at least 19% by mass but not more than 25% by mass. When both the compound represented by formula (12.1) and the compound represented by formula (12.2) are included, the combined amount of the two compounds relative to the total mass of the liquid crystal composition of the present invention is preferably at least 15% by mass but not more than 45% by mass, more preferably at least 19% by mass but not more than 45% by mass, still more preferably at least 24% by mass but not more than 40% by mass, and particularly preferably at least 30% by mass but not more than 35% by mass.

Further, the amount of the compound represented by formula (12.3) relative to the total mass of the liquid crystal composition of the present invention is preferably at least 0.05% by mass but not more than 2% by mass, more preferably at least 0.1% by mass but not more than 1% by mass, and still more preferably at least 0.2% by mass but not more than 0.5% by mass. The compound represented by formula (12.3) may be an optically active compound.

Moreover, the compound represented by general formula (II-3) is, for example, preferably a compound selected from the group of compounds represented by general formula (II-3-1).

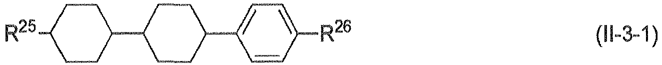

In the formula, R²⁵ represents an alkyl group having 1 to 5 carbon atoms, and R²⁶ represents an alkoxy group having 1 to 4 carbon atoms.

Although there are no particular limitations on the types of these compounds that can be combined, one to three types of compounds are preferably selected from among the plurality of compounds represented by general formula (II-3-1) in accordance with the level of performance required for properties such as the solubility at low temperature, the transition temperature, the electrical reliability and the birefringence.

The amount of the compound represented by general formula (II-3-1) is preferably adjusted appropriately in accordance with the level of performance required for properties such as the solubility at low temperature, the transition temperature, the electrical reliability and the birefringence, and is preferably at least 1% by mass but not more than 24% by mass, more preferably at least 4% by mass but not more than 18% by mass, and still more preferably at least 8% by mass but not more than 14% by mass.

Moreover, the compound represented by general formula (II-3-1) is, for example, preferably a compound represented by formula (13.1) to formula (13.4), and is particularly preferably a compound represented by formula (13.3).

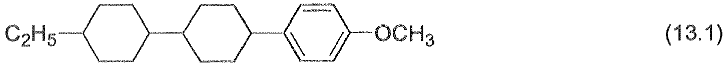

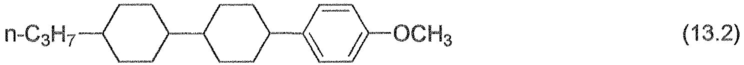

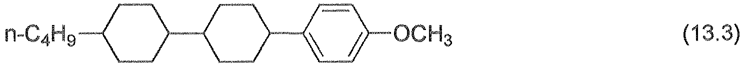

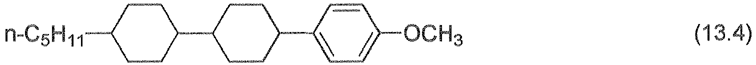

Moreover, the compound represented by general formula (II) is, for example, preferably a compound selected from the group of compounds represented by general formula (II-4).

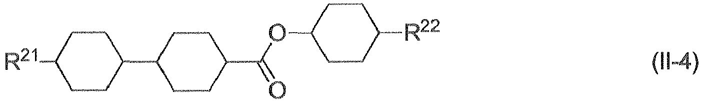

In the formula, R²¹ and R²² independently represent an alkenyl group having 2 to 5 carbon atoms, an alkyl group having 1 to 5 carbon atoms, or an alkoxy group having 1 to 4 carbon atoms.

The composition may include only one of these compounds, or may include two or more types of compounds, wherein the compounds are preferably combined appropriately in accordance with the performance required. Although there are no particular limitations on the types of these compounds that can be combined, one or two types of compounds are preferably selected from among the plurality of compounds represented by general formula (II-4) in accordance with the level of performance required for properties such as the solubility at low temperature, the transition temperature, the electrical reliability and the birefringence, and a combination of one to three types of compounds is particularly preferable.

The amount of the compound represented by general formula (II-4) relative to the total mass of the liquid crystal composition of the present invention is preferably at least 1% by mass but not more than 15% by mass, more preferably at least 2% by mass but not more than 15% by mass, still more preferably at least 3% by mass but not more than 15% by mass, still more preferably at least 4% by mass but not more than 12% by mass, and particularly preferably at least 5% by mass but not more than 7% by mass.

The compound represented by general formula (II-4) is, for example, preferably a compound represented by formula (14.1) to formula (14.5), and is particularly preferably a compound represented by formula (14.2) or formula (14.5).

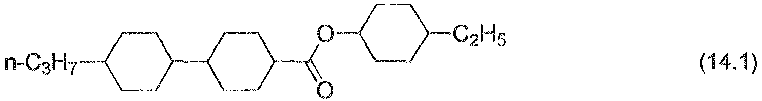

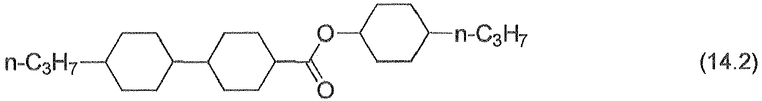

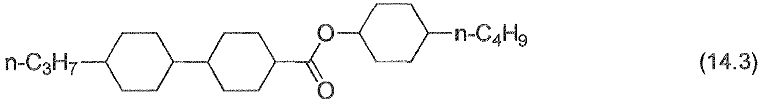

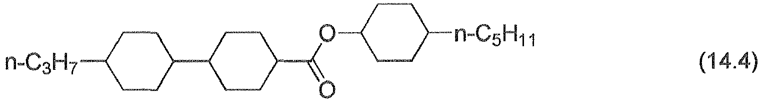

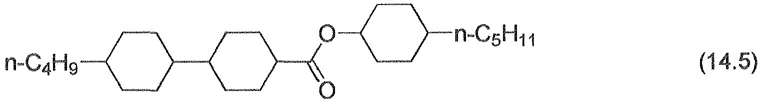

In addition, the compound represented by general formula (L) is preferably a compound selected from the group of compounds represented by general formula (III).

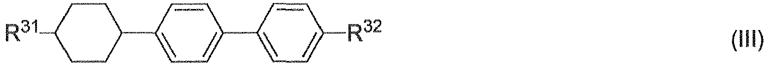

R³¹ and R³² independently represent an alkenyl group having 2 to 5 carbon atoms, an alkyl group having 1 to 5 carbon atoms, or an alkoxy group having 1 to 4 carbon atoms.

The amount of the compound represented by general formula (III) is determined with due consideration of the required solubility and birefringence and the like, and is preferably at least 3% by mass but not more than 25% by mass, more preferably at least 6% by mass but not more than 20% by mass, and still more preferably at least 8% by mass but not more than 15% by mass, relative to the total mass of the liquid crystal composition of the present invention.

The compound represented by general formula (III) is preferably a compound represented by formula (15.1) or formula (15.2), and is most preferably a compound represented by formula (15.1).

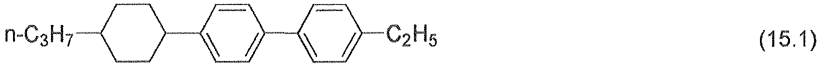

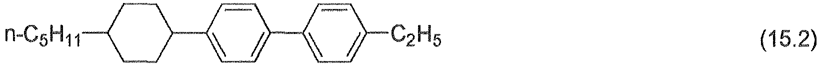

Moreover, the compound represented by general formula (III) is preferably a compound selected from the group of compounds represented by general formula (III-1).

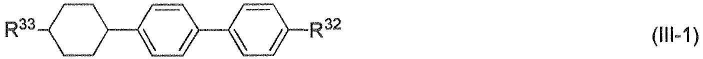

R³³ represents an alkenyl group having 2 to 5 carbon atoms, and R³² represents an alkyl group having 1 to 5 carbon atoms or an alkoxy group having 1 to 4 carbon atoms.

The amount of the compound represented by general formula (III-1) is preferably adjusted in accordance with the level of performance required for properties such as the solubility at low temperature, the transition temperature, the electrical reliability and the birefringence, and is preferably at least 4% by mass but not more than 23% by mass, more preferably at least 6% by mass but not more than 18% by mass, and still more preferably at least 10% by mass but not more than 13% by mass.

The compound represented by general formula (III-1) is, for example, preferably a compound represented by formula (16.1) or formula (16.2).

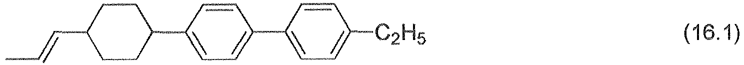

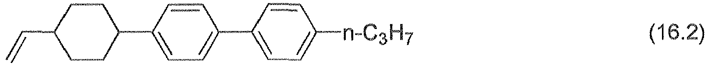

Moreover, the compound represented by general formula (III) is preferably a compound selected from the group of compounds represented by general formula (III-2).

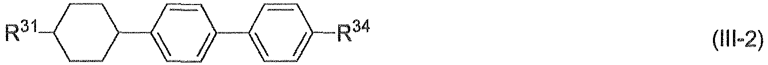

R³¹ represents an alkyl group having 1 to 5 carbon atoms, and R³⁴ represents an alkoxy group having 1 to 4 carbon atoms.

The amount of the compound represented by general formula (III-2) is preferably adjusted in accordance with the level of performance required for properties such as the solubility at low temperature, the transition temperature, the electrical reliability and the birefringence, and is preferably at least 4% by mass but not more than 23% by mass, more preferably at least 6% by mass but not more than 18% by mass, and still more preferably at least 10% by mass but not more than 13% by mass.

The compound represented by general formula (III-2) is, for example, preferably a compound selected from the group of compounds represented by formula (17.1) to formula (17.3), and is particularly preferably a compound represented by formula (17.3).

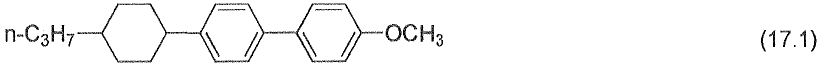

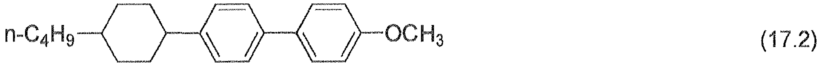

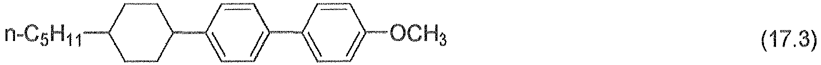

In addition, the compound represented by general formula (L) is preferably selected from the group of compounds represented by general formula (IV).

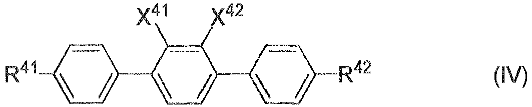

In the formula, R⁴¹ and R⁴² independently represent an alkyl group having 1 to 5 carbon atoms or an alkenyl group having 2 to 5 carbon atoms, and X⁴¹ and X⁴² independently represent a hydrogen atom or a fluorine atom.

There are no particular limitations on the types of these compounds that can be combined, and a plurality of compounds represented by general formula (IV) can be combined as appropriate in accordance with the level of performance required for properties such as the solubility at low temperature, the transition temperature, the electrical reliability and the birefringence. The type of compound used may, for example, be a single type of compound in one embodiment of the present invention. Alternatively, in another embodiment of the present invention, two types of compounds may be used. Further, in yet another embodiment of the present invention, three types of compounds may be used. Further, in yet another embodiment of the present invention, 4 types of compounds may be used. Furthermore, in yet another embodiment of the present invention, 5 types of compounds may be used. Moreover, in yet another embodiment of the present invention, 6 or more types of compounds may be used.

The compound represented by general formula (IV) is, for example, preferably a compound selected from the group of compounds represented by general formula (IV-1).

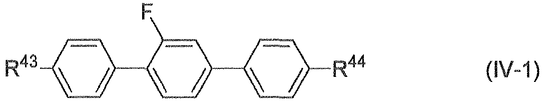

In the formula, R⁴³ and R⁴⁴ independently represent an alkyl group having 1 to 5 carbon atoms.

It is necessary to appropriately adjust the amount of the compound represented by general formula (IV-1) in accordance with the level of performance required for properties such as the solubility at low temperature, the transition temperature, the electrical reliability, the birefringence, the process compatibility, dropping mark defects, burn-in and the dielectric anisotropy.

In one embodiment of the present invention, the amount of the above compound relative to the total mass of the liquid crystal composition of the present invention is from 1 to 40% by mass. Moreover, in another embodiment of the present invention, the amount is from 2 to 40% by mass. Further, in yet another embodiment of the present invention, the amount is from 4 to 40% by mass. In yet another embodiment of the present invention, the amount is from 6 to 40% by mass. In yet another embodiment of the present invention, the amount is from 8 to 40% by mass. In yet another embodiment of the present invention, the amount is from 10 to 40% by mass. In yet another embodiment of the present invention, the amount is from 12 to 40% by mass. In yet another embodiment of the present invention, the amount is from 15 to 40% by mass. In yet another embodiment of the present invention, the amount is from 18 to 40% by mass. Further, in yet another embodiment of the present invention, the amount is from 21 to 40% by mass.

Furthermore, in one embodiment of the present invention, the amount of the above compound relative to the total mass of the liquid crystal composition of the present invention is from 1 to 40% by mass. Further, in another embodiment of the present invention, the amount is from 1 to 30% by mass. In yet another embodiment of the present invention, the amount is from 1 to 25% by mass. In yet another embodiment of the present invention, the amount is from 1 to 20% by mass. In yet another embodiment of the present invention, the amount is from 1 to 15% by mass. In yet another embodiment of the present invention, the amount is from 1 to 10% by mass. In yet another embodiment of the present invention, the amount is from 1 to 5% by mass. Further, in yet another embodiment of the present invention, the amount is from 1 to 4% by mass.

Moreover, the compound represented by general formula (IV-1) is, for example, preferably a compound represented by formula (18.1) to formula (18.9).

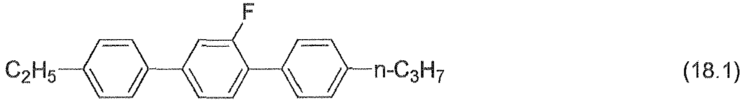

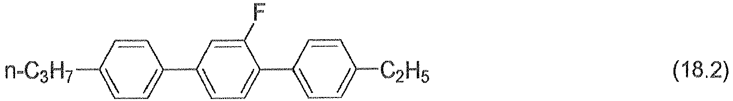

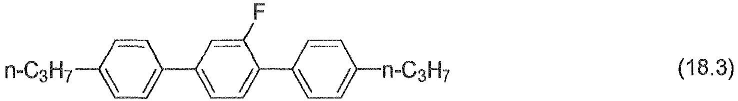

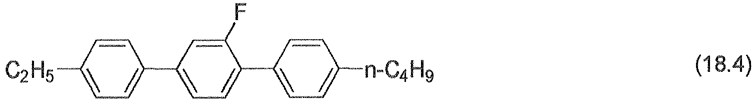

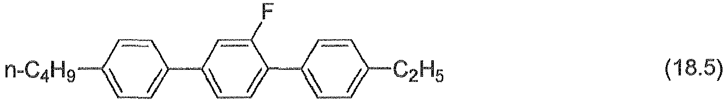

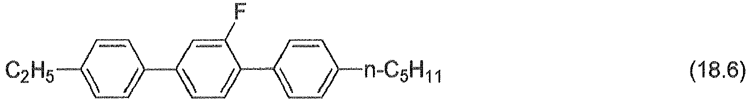

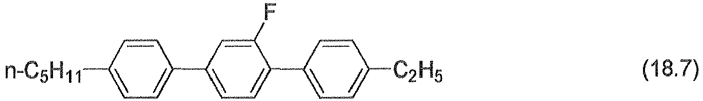

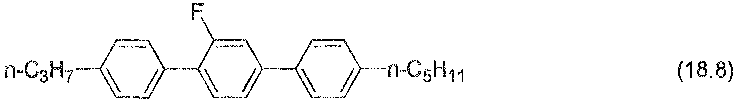

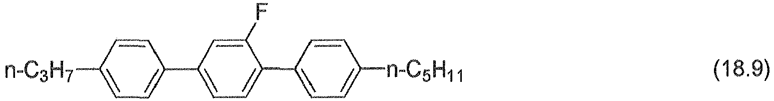

Although there are no particular limitations on the types of these compounds that can be combined, one to three types of these compounds are preferably combined, and combining one to four types of these compounds is more preferable. Further, a combination in which the molecular weight distribution of the selected compounds is broad is effective in improving the solubility, and therefore it is preferable, for example, to select one compound represented by formula (18.1) or formula (18.2), one compound represented by formula (18.4) or formula (18.5), one compound represented by formula (18.6) or formula (18.7), and one compound represented by formula (18.8) or formula (18.9), and then combine these selected compounds in an appropriate manner. Among the various options, including the compounds represented by formula (18.1), formula (18.3), formula (18.4), formula (18.6) and formula (18.9) is preferable.

Moreover, the compound represented by general formula (IV) is, for example, preferably a compound selected from the group of compounds represented by general formula (IV-2).

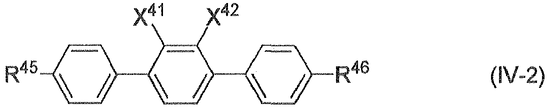

In the formula, R⁴⁵ and R⁴⁶ independently represent an alkyl group having 1 to 5 carbon atoms or an alkenyl group having 2 to 5 carbon atoms, provided that at least one of R⁴⁵ and R⁴⁶ represents an alkenyl group having 2 to 5 carbon atoms, and X⁴¹ and X⁴² independently represent a hydrogen atom or a fluorine atom.

There are no particular limitations on the types of these compounds that can be combined, and a plurality of compounds represented by general formula (IV-2) can be combined as appropriate in accordance with the level of performance required for properties such as the solubility at low temperature, the transition temperature, the electrical reliability and the birefringence.

It is necessary to appropriately adjust the amount of the compound represented by general formula (IV-2) in accordance with the level of performance required for properties such as the solubility at low temperature, the transition temperature, the electrical reliability, the birefringence, the process compatibility, dropping mark defects, burn-in and the dielectric anisotropy. For example, a preferred amount for the above compound relative to the total mass of the liquid crystal composition of the present invention is from 0.5 to 40% by mass. Examples of more preferred amounts include ranges from 1 to 40% by mass, from 2 to 40 % by mass, from 3 to 40% by mass, from 5 to 40% by mass, from 7 to 40% by mass, from 9 to 40% by mass, from 12 to 40% by mass, from 15 to 40% by mass and from 20 to 40% by mass, or alternatively, from 1 to 40% by mass, from 1 to 30% by mass, from 1 to 25% by mass, from 1 to 20% by mass, from 1 to 15% by mass, from 1 to 10% by mass, from 1 to 5% by mass, and from 1 to 4% by mass.

The compound represented by general formula (IV-2) is, for example, preferably a compound represented by formula (19.1) to formula (19.8), and among these compounds, is preferably a compound represented by formula (19.2).

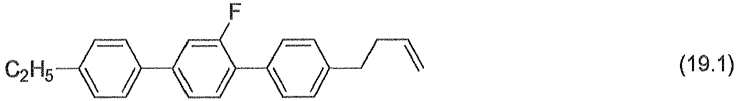

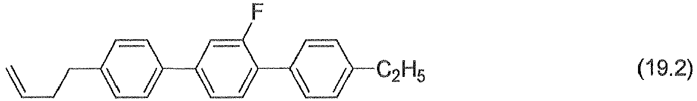

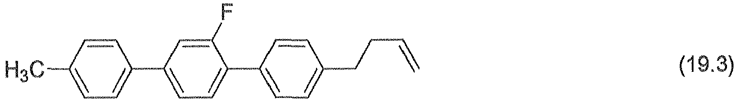

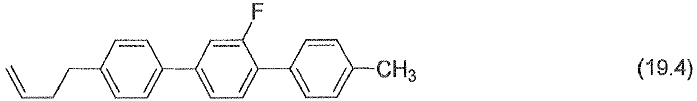

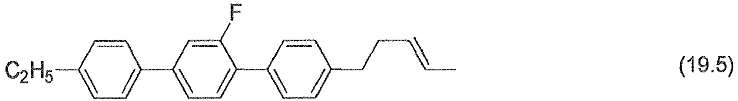

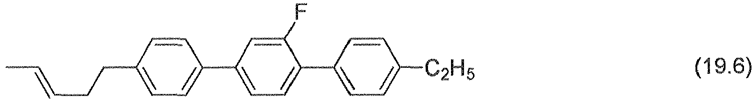

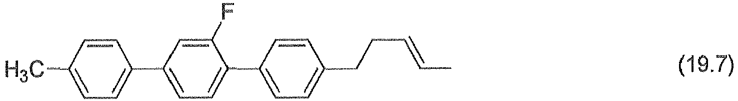

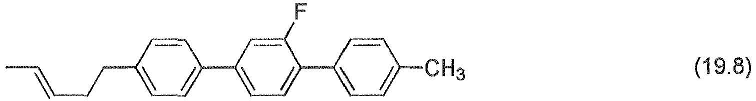

A broad molecular weight distribution for the compounds selected as components of the liquid crystal composition is effective in improving the solubility, and therefore it is preferable, for example, to select one compound represented by formula (19.1) or formula (19.2), one compound represented by formula (19.3) or formula (19.4), one compound represented by formula (19.5) or formula (19.6), and one compound represented by formula (19.7) or formula (19.8), and then combine these selected compounds in an appropriate manner.

In the liquid crystal composition of the present invention, the amount of the compound represented by formula (19.4) is determined with due consideration of the solubility at low temperature, the transition temperature and the electrical reliability and the like, and is preferably at least 3% by mass but not more than 25% by mass, more preferably at least 5% by mass but not more than 20% by mass, still more preferably at least 5% by mass but not more than 15% by mass, and particularly preferably at least 7% by mass but not more than 10% by mass, relative to the total mass of the liquid crystal composition of the present invention.

In addition, the compound represented by general formula (L) is preferably selected from the group of compounds represented by general formula (V).

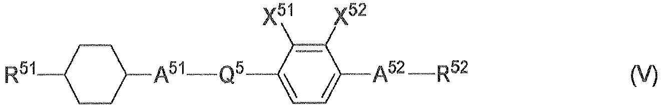

In the formula, R⁵¹ and R⁵² independently represent an alkyl group having 1 to 5 carbon atoms, an alkenyl group having 2 to 5 carbon atoms or an alkoxy group having 1 to 4 carbon atoms, A⁵¹ and A⁵² independently represent a 1,4-cyclohexylene group or a 1,4-phenylene group, Q⁵ represents a single bond or -COO-, and X⁵¹ and X⁵² independently represent a fluorine atom or a hydrogen atom.

There are no particular limitations on the types of these compounds that can be combined, and a plurality of compounds represented by general formula (V) can be combined as appropriate in accordance with the level of performance required for properties such as the solubility at low temperature, the transition temperature, the electrical reliability and the birefringence. The type of compound used may, for example, be a single type of compound in one embodiment of the present invention. Alternatively, in another embodiment of the present invention, two types of compounds may be used. Further, in yet another embodiment of the present invention, three types of compounds may be used. Further, in yet another embodiment of the present invention, four types of compounds may be used.

In one embodiment of the present invention, the amount of the above compound relative to the total mass of the liquid crystal composition of the present invention is from 2 to 40% by mass. Moreover, in another embodiment of the present invention, the amount is from 4 to 40% by mass. Further, in yet another embodiment of the present invention, the amount is from 7 to 40% by mass. In yet another embodiment of the present invention, the amount is from 10 to 40% by mass. In yet another embodiment of the present invention, the amount is from 12 to 40% by mass. In yet another embodiment of the present invention, the amount is from 15 to 40% by mass. In yet another embodiment of the present invention, the amount is from 17 to 40% by mass. In yet another embodiment of the present invention, the amount is from 18 to 40% by mass. In yet another embodiment of the present invention, the amount is from 20 to 40% by mass. Further, in yet another embodiment of the present invention, the amount is from 22 to 40% by mass.

Furthermore, in one embodiment of the present invention, the amount of the above compound relative to the total mass of the liquid crystal composition of the present invention is from 2 to 40% by mass. Further, in another embodiment of the present invention, the amount of the compound is from 2 to 30% by mass. In yet another embodiment of the present invention, the amount of the compound is from 2 to 25% by mass. In yet another embodiment of the present invention, the amount of the compound is from 2 to 20% by mass. In yet another embodiment of the present invention, the amount of the compound is from 2 to 15% by mass. In yet another embodiment of the present invention, the amount of the compound is from 2 to 10% by mass. In yet another embodiment of the present invention, the amount of the compound is from 2 to 5% by mass. Further, in yet another embodiment of the present invention, the amount of the compound is from 2 to 4% by mass.

The compound represented by general formula (V) is preferably a compound represented by general formula (V-1).

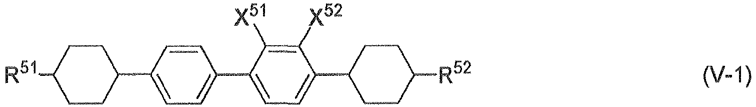

In the formula, R⁵¹ and R⁵² independently represent an alkyl group having 1 to 5 carbon atoms, an alkenyl group having 2 to 5 carbon atoms or an alkoxy group having 1 to 4 carbon atoms, and X⁵¹ and X⁵² independently represent a fluorine atom or a hydrogen atom.

Moreover, the compound represented by general formula (V-1) is preferably a compound represented by general formula (V-1-1). 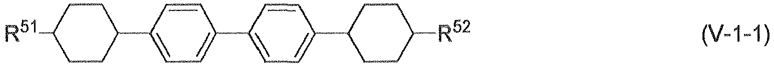 In the formula, R⁵¹ and R⁵² independently represent an alkyl group having 1 to 5 carbon atoms, an alkenyl group having 2 to 5 carbon atoms, or an alkoxy group having 1 to 4 carbon atoms.

The amount of the compound represented by general formula (V-1-1) relative to the total mass of the liquid crystal composition of the present invention is preferably at least 1% by mass but not more than 15% by mass, more preferably at least 2% by mass but not more than 15% by mass, still more preferably at least 3% by mass but not more than 10% by mass, and particularly preferably at least 4% by mass but not more than 8% by mass.

The compound represented by general formula (V-1-1) is preferably a compound represented by formula (20.1) to formula (20.4), and is more preferably a compound represented by formula (20.2).

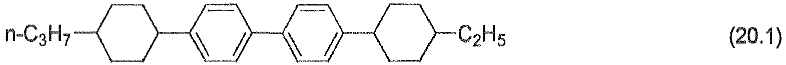

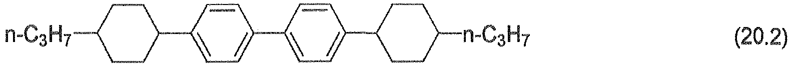

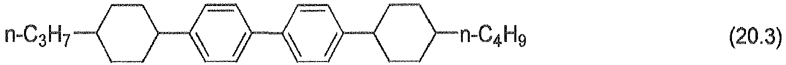

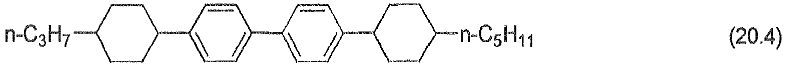

Moreover, the compound represented by general formula (V-1) is preferably a compound represented by general formula (V-1-2).

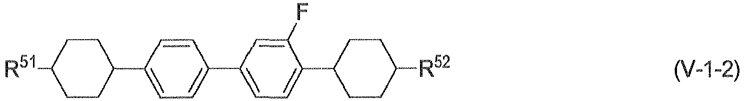

In the formula, R⁵¹ and R⁵² independently represent an alkyl group having 1 to 5 carbon atoms, an alkenyl group having 2 to 5 carbon atoms, or an alkoxy group having 1 to 4 carbon atoms.

The amount of the compound represented by general formula (V-1-2) relative to the total mass of the liquid crystal composition of the present invention is preferably at least 1% by mass but not more than 15% by mass, more preferably at least 2% by mass but not more than 15% by mass, still more preferably at least 3% by mass but not more than 10% by mass, and particularly preferably at least 4% by mass but not more than 8% by mass.

The compound represented by general formula (V-1-2) is preferably a compound represented by formula (21.1) to formula (21.3), and is more preferably a compound represented by formula (21.1).

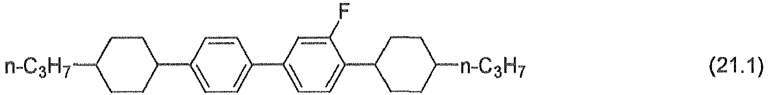

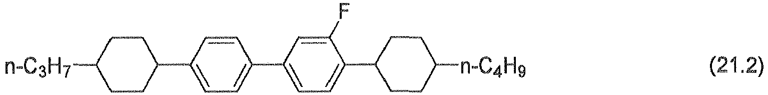

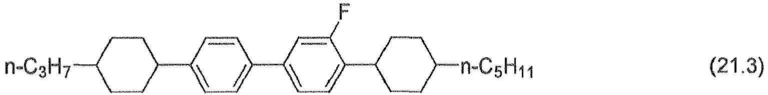

Moreover, the compound represented by general formula (V-1) is preferably a compound represented by general formula (V-1-3). 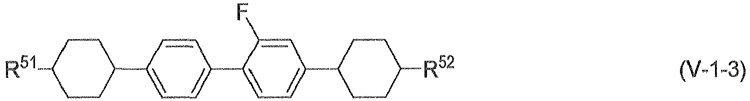 In the formula, R⁵¹ and R⁵² independently represent an alkyl group having 1 to 5 carbon atoms, an alkenyl group having 2 to 5 carbon atoms, or an alkoxy group having I to 4 carbon atoms.

The amount of the compound represented by general formula (V-1-3) relative to the total mass of the liquid crystal composition of the present invention is preferably at least 1% by mass but not more than 15% by mass, more preferably at least 2% by mass but not more than 15% by mass, still more preferably at least 3% by mass but not more than 10% by mass, and particularly preferably at least 4% by mass but not more than 8% by mass.

The compound represented by general formula (V-1-3) is preferably a compound represented by formula (22.1) to formula (22.3), and is more preferably a compound represented by formula (22.1).

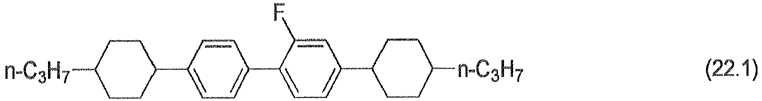

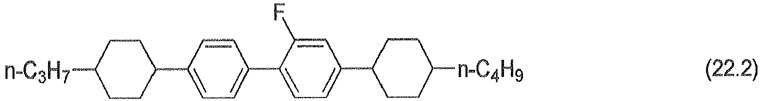

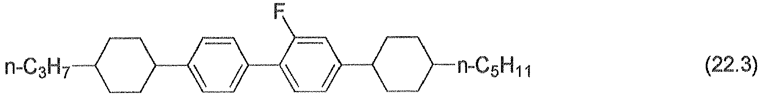

The compound represented by general formula (V) is preferably a compound represented by general formula (V-2).

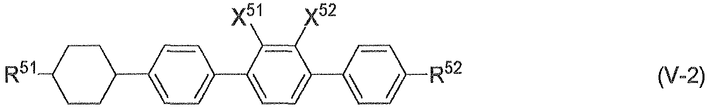

In the formula, R⁵¹ and R⁵² independently represent an alkyl group having 1 to 5 carbon atoms, an alkenyl group having 2 to 5 carbon atoms or an alkoxy group having 1 to 4 carbon atoms, and X⁵¹ and X⁵² independently represent a fluorine atom or a hydrogen atom.

There are no particular limitations on the types of these compounds that can be combined, and a plurality of compounds represented by general formula (V-2) can be combined as appropriate in accordance with the level of performance required for properties such as the solubility at low temperature, the transition temperature, the electrical reliability and the birefringence. The type of compound used may, for example, be a single type of compound in one embodiment of the present invention. Alternatively, in another embodiment of the present invention, two or more types of compounds may be used.

In one embodiment of the present invention, the amount of the above compound relative to the total mass of the liquid crystal composition of the present invention is from 2 to 40% by mass. Moreover, in another embodiment of the present invention, the amount is from 4 to 40% by mass. Further, in yet another embodiment of the present invention, the amount is from 7 to 40% by mass. In yet another embodiment of the present invention, the amount is from 10 to 40% by mass. In yet another embodiment of the present invention, the amount is from 12 to 40% by mass. In yet another embodiment of the present invention, the amount is from 15 to 40% by mass. In yet another embodiment of the present invention, the amount is from 17 to 40% by mass. In yet another embodiment of the present invention, the amount is from 18 to 40% by mass. In yet another embodiment of the present invention, the amount is from 20 to 40% by mass. Further, in yet another embodiment of the present invention, the amount is from 22 to 40% by mass.

Furthermore, in one embodiment of the present invention, the amount of the above compound relative to the total mass of the liquid crystal composition of the present invention is from 2 to 40% by mass. Further, in another embodiment of the present invention, the amount of the compound is from 2 to 30% by mass. In yet another embodiment of the present invention, the amount of the compound is from 2 to 25% by mass. In yet another embodiment of the present invention, the amount of the compound is from 2 to 20% by mass. In yet another embodiment of the present invention, the amount of the compound is from 2 to 15% by mass. In yet another embodiment of the present invention, the amount of the compound is from 2 to 10% by mass. In yet another embodiment of the present invention, the amount of the compound is from 2 to 5% by mass. Further, in yet another embodiment of the present invention, the amount of the compound is from 2 to 4% by mass.

When an embodiment in which the liquid crystal composition of the present invention has a high Tni value is required, the amount of the compound represented by formula (V-2) is preferably increased, whereas when an embodiment having a low viscosity is required, the amount is preferably reduced.

Moreover, the compound represented by general formula (V-2) is preferably a compound represented by general formula (V-2-1).

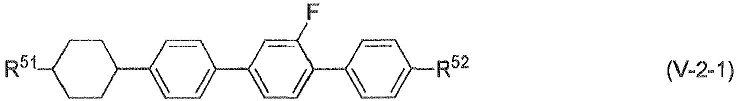

In the formula, R⁵¹ and R⁵² independently represent an alkyl group having 1 to 5 carbon atoms, an alkenyl group having 2 to 5 carbon atoms, or an alkoxy group having 1 to 4 carbon atoms.

The compound represented by general formula (V-2-1) is preferably a compound represented by formula (23.1) to formula (23.4), and is more preferably a compound represented by formula (23.1) or formula (23.2).

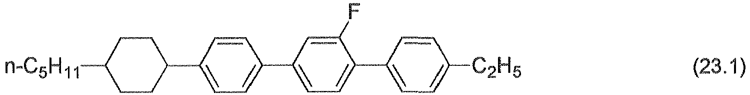

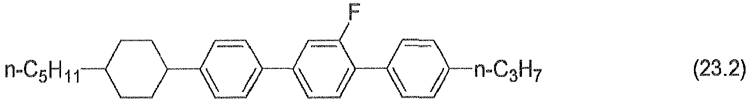

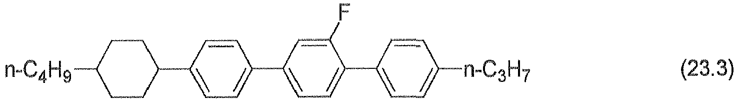

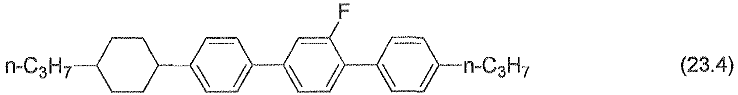

Moreover, the compound represented by general formula (V-2) is preferably a compound represented by general formula (V-2-2).

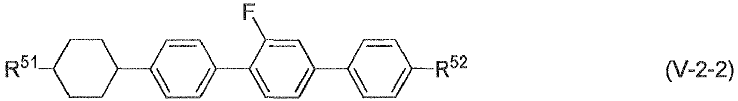

In the formula, R⁵¹ and R⁵² independently represent an alkyl group having 1 to 5 carbon atoms, an alkenyl group having 2 to 5 carbon atoms, or an alkoxy group having 1 to 4 carbon atoms.

The compound represented by general formula (V-2-2) is preferably a compound represented by formula (24.1) to formula (24.4), and is more preferably a compound represented by formula (24.1) or formula (24.2).

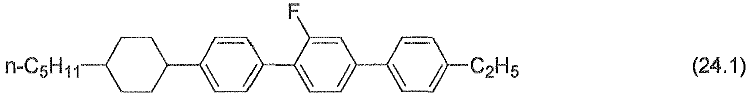

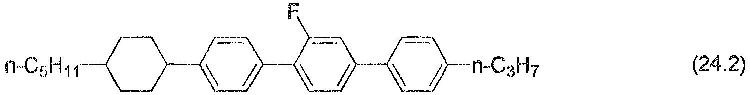

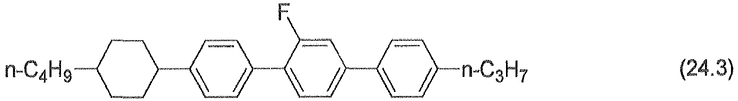

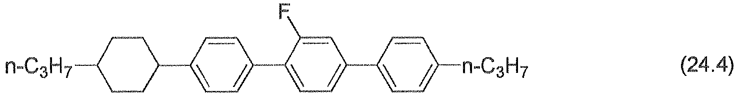

The compound represented by general formula (V) is preferably a compound represented by general formula (V-3).

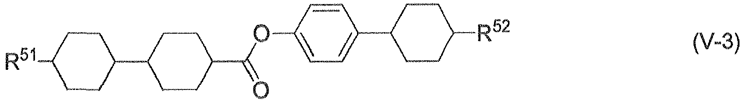

In the formula, R⁵¹ and R⁵² independently represent an alkyl group having 1 to 5 carbon atoms, an alkenyl group having 2 to 5 carbon atoms, or an alkoxy group having 1 to 4 carbon atoms.

There are no particular limitations on the types of these compounds that can be combined, and a plurality of compounds represented by general formula (V-3) can be combined as appropriate in accordance with the level of performance required for properties such as the solubility at low temperature, the transition temperature, the electrical reliability and the birefringence. The type of compound used may, for example, be a single type of compound in one embodiment of the present invention. Alternatively, in another embodiment of the present invention, two types of compounds may be used. Moreover, in yet another embodiment of the present invention, three or more types of compounds may be used.

The amount of the compound represented by general formula (V-3) relative to the total mass of the liquid crystal composition of the present invention is preferably at least 2% by mass but not more than 16% by mass, more preferably at least 4% by mass but not more than 16% by mass, still more preferably at least 7% by mass but not more than 13% by mass, and particularly preferably at least 8% by mass but not more than 11% by mass.

Moreover, the compound represented by general formula (V-3) is preferably a compound represented by formula (25.1) to formula (25.3).

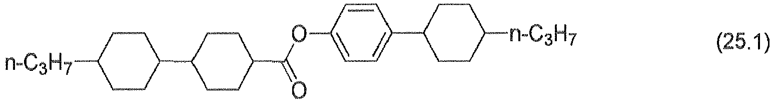

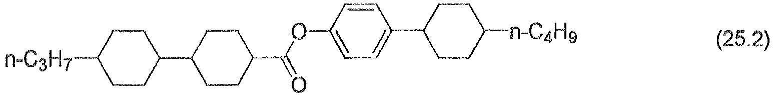

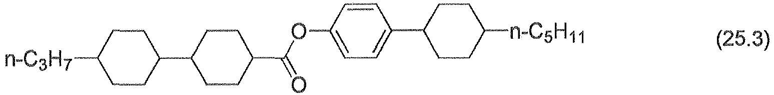

The liquid crystal composition of the present invention may also include one or more compounds represented by general formula (VI). 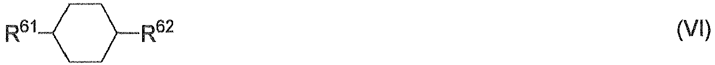 In the formula, R⁶¹ and R⁶² independently represent a linear alkyl group having 1 to 10 carbon atoms, a linear alkoxy group having 1 to 10 carbon atoms, or a linear alkenyl group having 2 to 10 carbon atoms.

Although there are no particular limitations on the types of these compounds that can be combined, one to three types of compounds are preferably selected from among the plurality of compounds represented by general formula (VI) in accordance with the level of performance required for properties such as the solubility at low temperature, the transition temperature, the electrical reliability and the birefringence, and a combination of 1 to 3 types of compounds is preferable, a combination of 1 to 4 types of compounds is more preferable, and a combination of 1 to 5 or more types of compounds is particularly preferable. The maximum amount of the above compound that can be included in the composition is preferably not more than 35% by mass, more preferably 25% by mass or less, and still more preferably 15% by mass or less.

Specific examples of the compound represented by general formula (VI) that can be used favorably include the compounds shown below.

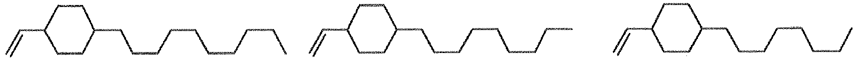

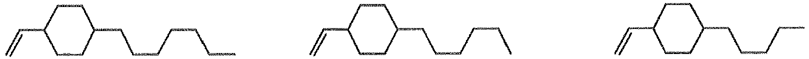

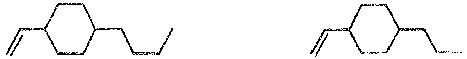

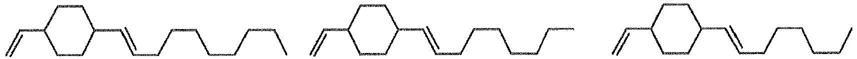

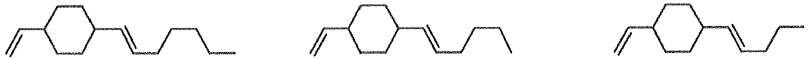

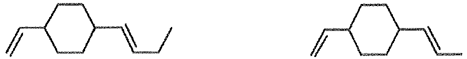

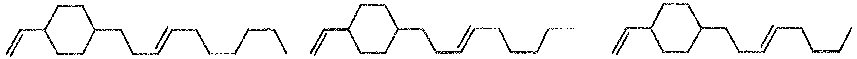

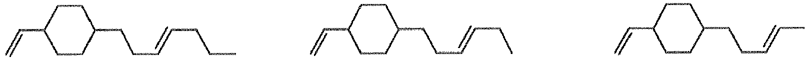

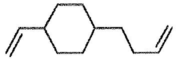

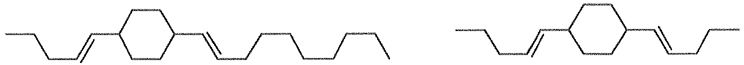

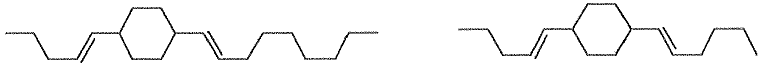

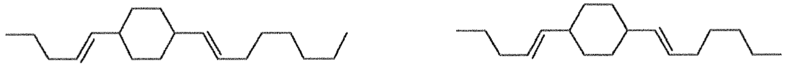

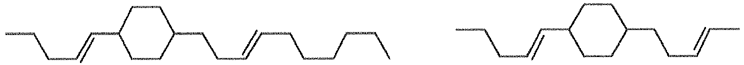

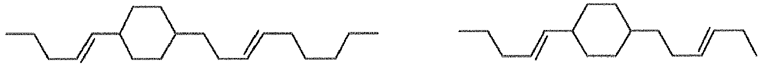

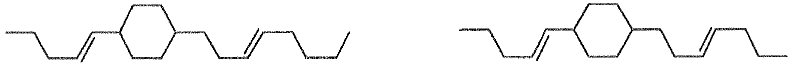

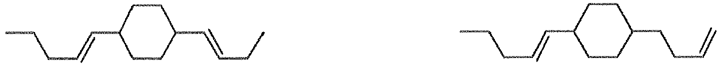

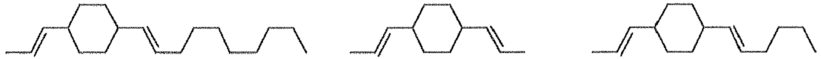

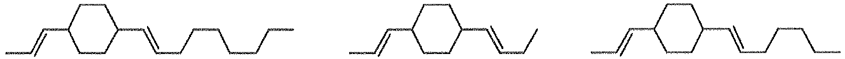

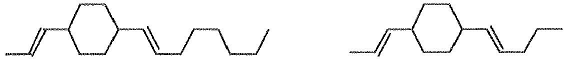

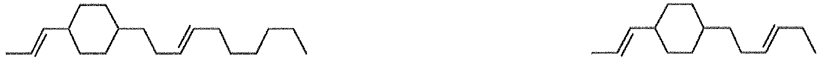

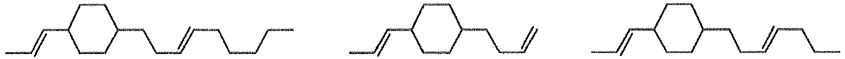

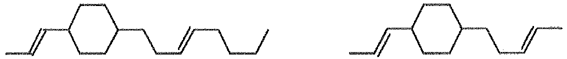

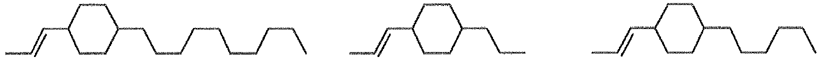

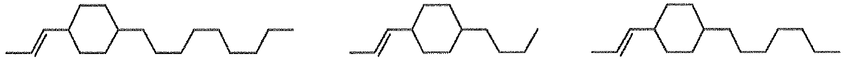

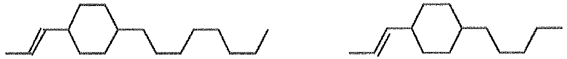

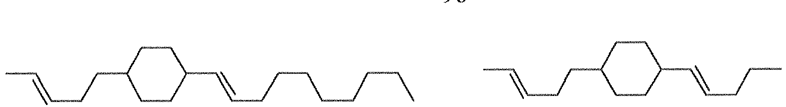

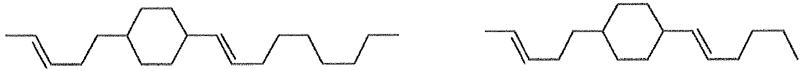

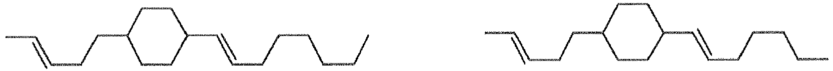

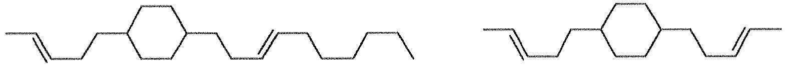

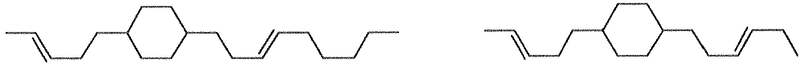

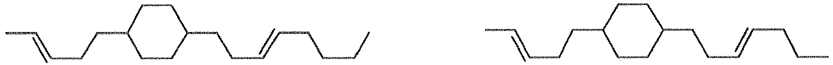

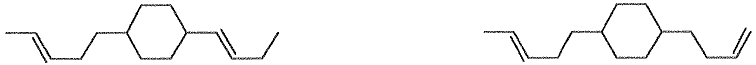

The liquid crystal composition of the present invention may also include one or more compounds represented by general formula (VII).

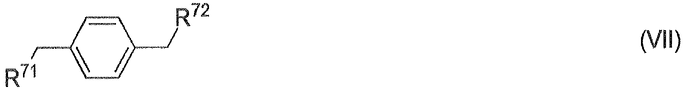

In the formula, R⁷¹ and R⁷² independently represent a linear alkyl group having 1 to 10 carbon atoms, a linear alkoxy group having 1 to 10 carbon atoms, or a linear alkenyl group having 4 to 10 carbon atoms.

Although there are no particular limitations on the types of these compounds that can be combined, one to three types of compounds are preferably selected from among the plurality of compounds represented by general formula (VII) in accordance with the level of performance required for properties such as the solubility at low temperature, the transition temperature, the electrical reliability and the birefringence, and a combination of 1 to 4 types of compounds is more preferable, and a combination of 1 to 5 or more types of compounds is particularly preferable. Further, the maximum amount of the above compound that can be included in the composition is preferably not more than 35% by mass, more preferably 25% by mass or less, and still more preferably 15% by mass or less.

Specific examples of the compound represented by general formula (VII) that can be used favorably include the compounds shown below.

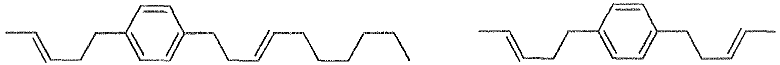

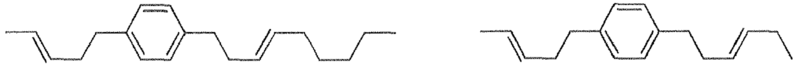

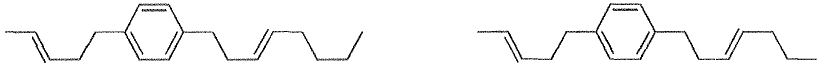

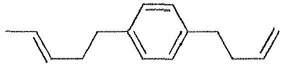

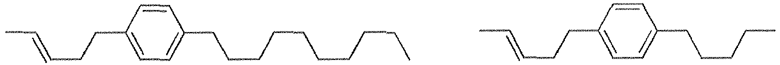

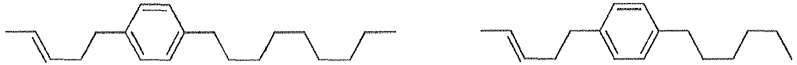

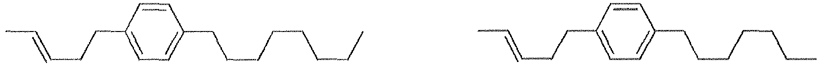

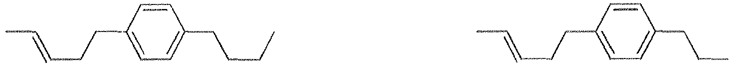

The liquid crystal composition of the present invention preferably includes at least one compound from among the compounds represented by general formula (M) shown below.

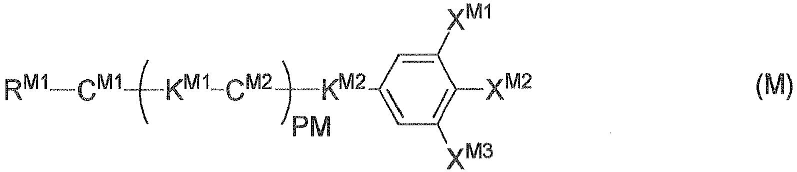

In the formula, R^{M1} represents an alkyl group having 1 to 8 carbon atoms, wherein one -CH₂- group or two or more non-adjacent -CH₂- groups within the alkyl group may each be independently substituted with -CH=CH-, -C≡C-, -O-, -CO-, -COO- or -OCO-,
PM represents 0, 1, 2, 3 or 4,
C^{M1} and C^{M2} independently represent a group selected from the group consisting of:
(d) a 1,4-cyclohexylene group (wherein one -CH₂- group or two or more non-adjacent -CH₂- groups that exist within the group may each be substituted with -O- or -S-), and
(e) a 1,4-phenylene group (wherein one -CH= group or two or more non-adjacent -CH= groups that exist within the group may each be substituted with -N=),
wherein the above group (d) and group (e) may each be independently substituted with a cyano group, a fluorine atom or a chlorine atom,
K^{M1} and K^{M2} independently represent a single bond, -CH₂CH₂-, -(CH₂)₄-, -OCH₂-, -CH₂O-, -OCF₂-, -CF₂O-, -COO-, -OCO- or -C≡C-,
when PM represents 2, 3 or 4 and a plurality of K^{M1} exists, the K^{M1} may be the same or different, when PM represents 2, 3 or 4 and a plurality of C^{M2} exists, the C^{M2} may be the same or different,
X^{M1} and X^{M3} independently represent a hydrogen atom, a chlorine atom or a fluorine atom, and
X^{M2} represents a hydrogen atom, fluorine atom, chlorine atom, cyano group, trifluoromethyl group, fluoromethoxy group, difluoromethoxy group, trifluoromethoxy group or 2,2,2-trifluoroethyl group, and
provided that the compound represented by general formula (M) excludes compounds represented by general formula (i) and general formula (ii) and the compounds represented by formulae (26.1), (26.2), (45.2), (45.3) and (45.4).

There are no particular limitations on the types of these compounds that can be combined, and a plurality of compounds represented by general formula (M) can be combined as appropriate in accordance with the level of performance required for properties such as the solubility at low temperature, the transition temperature, the electrical reliability and the birefringence. The type of compound used may, for example, be a single type of compound in one embodiment of the present invention. Alternatively, in another embodiment of the present invention, two types of compounds may be used. Further, in yet another embodiment of the present invention, three types of compounds may be used. Further, in yet another embodiment of the present invention, 4 types of compounds may be used. Furthermore, in yet another embodiment of the present invention, 5 types of compounds may be used. Furthermore, in yet another embodiment of the present invention, 6 types of compounds may be used. Moreover, in yet another embodiment of the present invention, 7 or more types of compounds may be used.

In the liquid crystal composition of the present invention, it is necessary to appropriately adjust the amount of the compound represented by general formula (M) in accordance with the level of performance required for properties such as the solubility at low temperature, the transition temperature, the electrical reliability, the birefringence, the process compatibility, dropping mark defects, burn-in and the dielectric anisotropy.

For example, in one embodiment of the present invention, the amount of the above compound relative to the total mass of the liquid crystal composition of the present invention is from 1 to 95% by mass. Moreover, in another embodiment of the present invention, the amount of the compound is from 10 to 95% by mass. Further, in yet another embodiment of the present invention, the amount of the compound is from 20 to 95% by mass. In yet another embodiment of the present invention, the amount of the compound is from 30 to 95% by mass. In yet another embodiment of the present invention, the amount of the compound is from 40 to 95% by mass. In yet another embodiment of the present invention, the amount of the compound is from 45 to 95% by mass. In yet another embodiment of the present invention, the amount of the compound is from 50 to 95% by mass. In yet another embodiment of the present invention, the amount of the compound is from 55 to 95% by mass. In yet another embodiment of the present invention, the amount of the compound is from 60 to 95% by mass. In yet another embodiment of the present invention, the amount of the compound is from 65 to 95% by mass. In yet another embodiment of the present invention, the amount of the compound is from 70 to 95% by mass. In yet another embodiment of the present invention, the amount of the compound is from 75 to 95% by mass. Further, in yet another embodiment of the present invention, the amount of the compound is from 80 to 95% by mass.

Moreover, in one embodiment of the present invention, the amount of the above compound relative to the total mass of the liquid crystal composition of the present invention is from 1 to 95%. Moreover, in another embodiment of the present invention, the amount of the compound is from 1 to 85%. Further, in yet another embodiment of the present invention, the amount of the compound is from 1 to 75%. In yet another embodiment of the present invention, the amount of the compound is from 1 to 65%. In yet another embodiment of the present invention, the amount of the compound is from 1 to 55%. In yet another embodiment of the present invention, the amount of the compound is from 1 to 45%. In yet another embodiment of the present invention, the amount of the compound is from 1 to 35%. Further, in yet another embodiment of the present invention, the amount of the compound is from 1 to 25%.

When it is necessary to maintain the viscosity of the liquid crystal composition of the present invention at a low value, and obtain a liquid crystal composition having a fast response speed, it is preferable that the lower limit and the upper limit mentioned above are set to low values. Moreover, when it is necessary to maintain the Tni of the liquid crystal composition of the present invention at a high value, and obtain a liquid crystal composition having good temperature stability, it is preferable that the lower limit and the upper limit mentioned above are set to low values. Further, when it is desirable to have a large dielectric anisotropy in order to ensure a low drive voltage, it is preferable that the lower limit and the upper limit mentioned above are set to high values.

When the cyclic structure to which R^{M1} is bonded is a phenyl group (aromatic group), R^{M1} is preferably a linear alkyl group having 1 to 5 carbon atoms, a linear alkoxy group having 1 to 4 carbon atoms, or an alkenyl group having 4 or 5 carbon atoms, whereas when the bonded cyclic structure is a saturated cyclic structure such as a cyclohexane, pyran or dioxane ring, R^{M1} is preferably a linear alkyl group having 1 to 5 carbon atoms, a linear alkoxy group having 1 to 4 carbon atoms, or a linear alkenyl group having 2 to 5 carbon atoms.

When the liquid crystal composition requires good chemical stability, the compound represented by general formula (M) preferably does not contain a chlorine atom within the molecule. Moreover, in the liquid crystal composition, the amount of compounds having a chlorine atom within is preferably not more than 5%, more preferably 3% or less, still more preferably 1% or less, still more preferably 0.5% or less, and most preferably essentially zero. The expression "essentially zero" means that only compounds containing chlorine atoms that are introduced unintentionally, such as compounds generated as impurities during compound production, are incorporated within the liquid crystal composition.

The compound represented by general formula (M) is, for example, preferably a compound selected from the group of compounds represented by general formula (VIII).

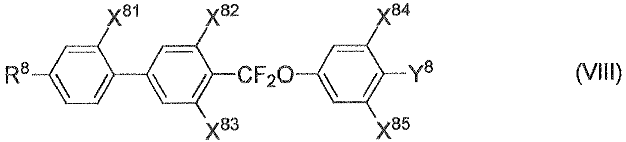

In the formula, R⁸ represents an alkyl group having 1 to 5 carbon atoms, an alkenyl group having 2 to 5 carbon atoms, or an alkoxy group having 1 to 4 carbon atoms, X⁸¹ to X⁸⁵ independently represent a hydrogen atom or a fluorine atom, and Y⁸ represents a fluorine atom or -OCF₃.

There are no particular limitations on the types of these compounds that can be combined, and a plurality of compounds represented by general formula (VIII) can be combined as appropriate in accordance with the level of performance required for properties such as the solubility at low temperature, the transition temperature, the electrical reliability and the birefringence. The type of compound used may, for example, be a single type of compound in one embodiment of the present invention. Alternatively, in another embodiment of the present invention, two types of compounds may be used. Further, in yet another embodiment of the present invention, three or more types of compounds may be used.

In the liquid crystal composition of the present invention, it is necessary to appropriately adjust the amount of the compound represented by general formula (VIII) in accordance with the level of performance required for properties such as the solubility at low temperature, the transition temperature, the electrical reliability, the birefringence, the process compatibility, dropping mark defects, burn-in and the dielectric anisotropy.

In one embodiment of the present invention, the amount of the above compound relative to the total mass of the liquid crystal composition of the present invention is from 2 to 40% by mass. Moreover, in another embodiment of the present invention, the amount of the compound is from 4 to 40% by mass. Further, in yet another embodiment of the present invention, the amount of the compound is from 5 to 40% by mass. In yet another embodiment of the present invention, the amount of the compound is from 6 to 40% by mass. In yet another embodiment of the present invention, the amount of the compound is from 7 to 40% by mass. In yet another embodiment of the present invention, the amount of the compound is from 8 to 40% by mass. In yet another embodiment of the present invention, the amount of the compound is from 9 to 40% by mass. In yet another embodiment of the present invention, the amount of the compound is from 10 to 40% by mass. In yet another embodiment of the present invention, the amount of the compound is from 11 to 40% by mass. In yet another embodiment of the present invention, the amount of the compound is from 12 to 40% by mass. In yet another embodiment of the present invention, the amount of the compound is from 14 to 40% by mass. In yet another embodiment of the present invention, the amount of the compound is from 15 to 40% by mass. In yet another embodiment of the present invention, the amount of the compound is from 21 to 40% by mass. Further, in yet another embodiment of the present invention, the amount is from 23 to 40% by mass.

Furthermore, in one embodiment of the present invention, the amount of the above compound relative to the total mass of the liquid crystal composition of the present invention is from 2 to 40% by mass. Further, in another embodiment of the present invention, the amount of the compound is from 2 to 30% by mass. In yet another embodiment of the present invention, the amount of the compound is from 2 to 25% by mass. In yet another embodiment of the present invention, the amount of the compound is from 2 to 21% by mass. In yet another embodiment of the present invention, the amount of the compound is from 2 to 1 6% by mass. In yet another embodiment of the present invention, the amount of the compound is from 2 to 12% by mass. In yet another embodiment of the present invention, the amount of the compound is from 2 to 8% by mass. Further, in yet another embodiment of the present invention, the amount of the compound is from 2 to 5% by mass.

When it is necessary to maintain the viscosity of the liquid crystal composition of the present invention at a low value, and obtain a liquid crystal composition having a fast response speed, it is preferable that the lower limit and the upper limit mentioned above are set to low values. Moreover, when it is necessary to maintain the Tni of the liquid crystal composition of the present invention at a high value, and obtain a liquid crystal composition having good temperature stability, it is preferable that the lower limit and the upper limit mentioned above are set to low values. Further, when it is desirable to have a large dielectric anisotropy in order to ensure a low drive voltage, it is preferable that the lower limit and the upper limit mentioned above are set to high values.

Moreover, the compound represented by general formula (VIII) is preferably a compound represented by general formula (VIII-1).

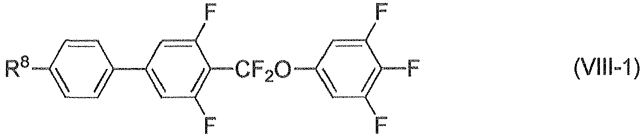

In the formula, R⁸ represents an alkyl group having 1 to 5 carbon atoms, an alkenyl group having 2 to 5 carbon atoms, or an alkoxy group having 1 to 4 carbon atoms.

There are no particular limitations on the types of these compounds that can be combined, and a plurality of compounds represented by general formula (VIII-1) can be combined as appropriate in accordance with the level of performance required for properties such as the solubility at low temperature, the transition temperature, the electrical reliability and the birefringence. The type of compound that is used may, for example, be a single type of compound in one embodiment of the present invention. Alternatively, in another embodiment of the present invention, two or more types of compounds may be used.

Specifically, the compound represented by general formula (VIII-1) is preferably a compound represented by formula (26.1) to formula (26.4), more preferably a compound represented by formula (26.1) or formula (26.2), and still more preferably a compound represented by formula (26.2). As indicated above, the composition contains one or two compounds selected from the group consisting of a compound represented by the formula (26.1) and a compound represented by the formula (26.2).

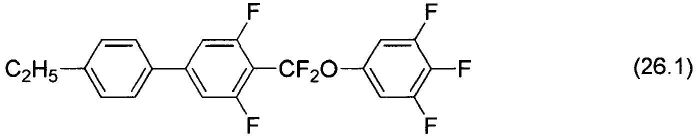

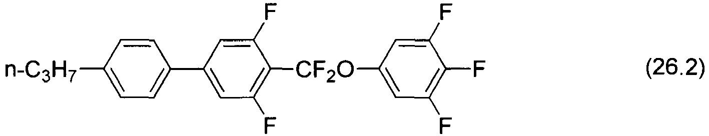

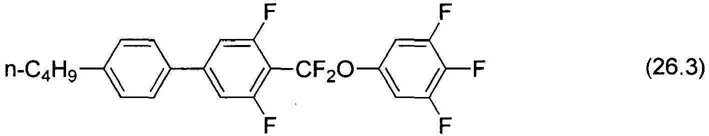

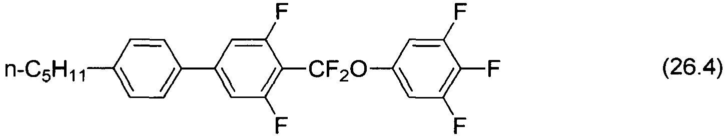

The amount of the compound represented by formula (26.1) is determined with due consideration of the solubility at low temperature, the transition temperature, the electrical reliability and the birefringence and the like, and relative to the total mass of the liquid crystal composition of the present invention, the amount is preferably at least 1% by mass but not more than 40% by mass, more preferably at least 1% by mass but not more than 30% by mass, still more preferably at least 1% by mass but not more than 20% by mass, still more preferably at least 2% by mass but not more than 15% by mass, still more preferably at least 2% by mass but not more than 10% by mass, and particularly preferably at least 2% by mass but not more than 9% by mass. Examples of particularly preferable ranges are from at least 2% by mass to not more than 7% by mass, from at least 2% by mass to not more than 6% by mass, from at least 2% by mass to not more than 5% by mass, from at least 2% by mass to not more than 4% by mass, from at least 2% by mass to not more than 3% by mass, from at least 3% by mass to not more than 9% by mass, from at least 4% by mass to not more than 9% by mass, from at least 5% by mass to not more than 9% by mass, and from at least 6% by mass to not more than 9% by mass.

The amount of the compound represented by formula (26.2) is determined with due consideration of the solubility at low temperature, the transition temperature, the electrical reliability and the birefringence and the like, and relative to the total mass of the liquid crystal composition of the present invention, the amount is preferably at least 2% by mass but not more than 40% by mass, more preferably at least 4% by mass but not more than 30% by mass, still more preferably at least 4% by mass but not more than 20% by mass, and particularly preferably at least 4% by mass but not more than 15% by mass. Examples of particularly preferable ranges are from at least 4% by mass to not more than 12% by mass, from at least 4% by mass to not more than 10% by mass, from at least 4% by mass to not more than 8% by mass, from at least 4% by mass to not more than 6% by mass, from at least 6% by mass to not more than 15% by mass, from at least 8% by mass to not more than 15% by mass, from at least 10% by mass to not more than 15% by mass, and from at least 12% by mass to not more than 15% by mass.

The combined amount of the compound represented by formula (26.1) and the compound represented by formula (26.2) relative to the total mass of the liquid crystal composition of the present invention is preferably from 5 to 40% by mass, more preferably from 10 to 30% by mass, still more preferably from 10 to 25% by mass, and particularly preferably from 10 to 20% by mass.

Moreover, the compound represented by general formula (VIII) is preferably a compound represented by general formula (VIII-2).

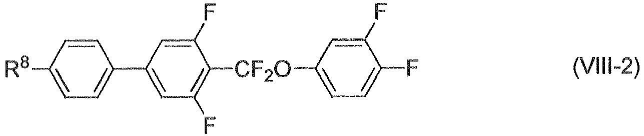

In the formula, R⁸ represents an alkyl group having 1 to 5 carbon atoms, an alkenyl group having 2 to 5 carbon atoms, or an alkoxy group having 1 to 4 carbon atoms.

There are no particular limitations on the types of these compounds that can be combined, and a plurality of compounds represented by general formula (VIII-2) can be combined as appropriate in accordance with the level of performance required for properties such as the solubility at low temperature, the transition temperature, the electrical reliability and the birefringence. The type of compound that is used may, for example, be a single type of compound in one embodiment of the present invention. Alternatively, in another embodiment of the present invention, two types of compounds may be used. Moreover, in yet another embodiment of the present invention, three or more types of compounds may be used.

The amount of the compound represented by general formula (VIII-2) is determined with due consideration of the solubility at low temperature, the transition temperature and the electrical reliability and the like, and is preferably at least 2.5% by mass but not more than 25% by mass, more preferably at least 8% by mass but not more than 25% by mass, still more preferably at least 10% by mass but not more than 20% by mass, and still more preferably at least 12% by mass but not more than 15% by mass.

Moreover, the compound represented by general formula (VIII-2) is preferably a compound represented by formula (27.1) to formula (27.4), and is more preferably a compound represented by formula (27.2).

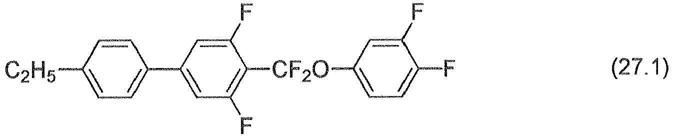

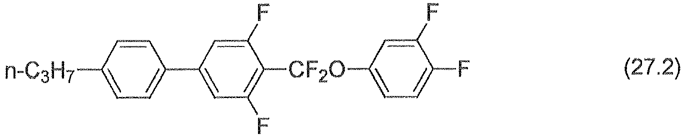

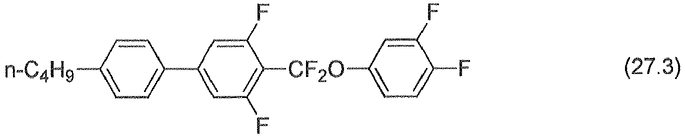

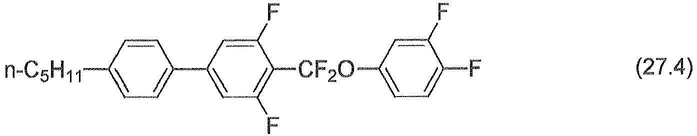

Moreover, the compound represented by general formula (VIII) is preferably a compound represented by general formula (VIII-3).

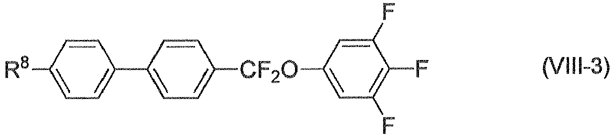

In the formula, R⁸ represents an alkyl group having 1 to 5 carbon atoms, an alkenyl group having 2 to 5 carbon atoms, or an alkoxy group having 1 to 4 carbon atoms.

There are no particular limitations on the types of these compounds that can be combined, and a plurality of compounds represented by general formula (VIII-3) can be combined as appropriate in accordance with the level of performance required for properties such as the solubility at low temperature, the transition temperature, the electrical reliability and the birefringence. The type of compound represented by general formula (VIII-3) that is used may, for example, be a single type of compound in one embodiment of the present invention. Alternatively, in another embodiment of the present invention, two or more types of compounds may be used.

More specifically, the compound represented by general formula (VIII-3) is preferably a compound represented by formula (26.11) to formula (26.14), is more preferably a compound represented by formula (26.11) or formula (26.12), and is still more preferably a compound represented by formula (26.12).

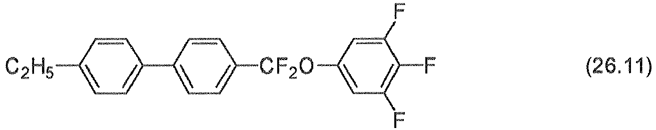

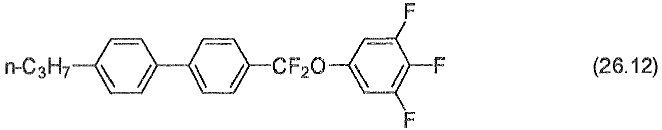

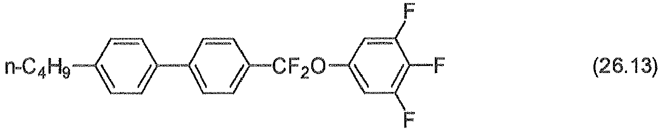

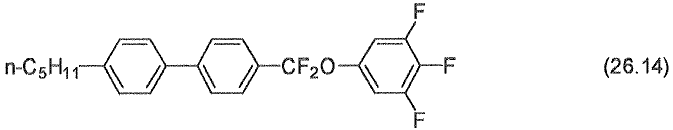

Further, the compound represented by general formula (M) is, for example, preferably a compound selected from the group of compounds represented by general formula (IX), excluding compounds represented by general formula (i). 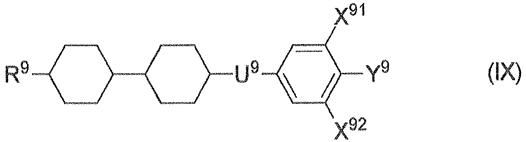 In the formula, R⁹ represents an alkyl group having 1 to 5 carbon atoms, an alkenyl group having 2 to 5 carbon atoms or an alkoxy group having 1 to 4 carbon atoms, X⁹¹ and X⁹² independently represent a hydrogen atom or a fluorine atom, Y⁹ represents a fluorine atom, a chlorine atom or -OCF₃, and U⁹ represents a single bond, -COO- or - CF₂O-.

There are no particular limitations on the types of these compounds that can be combined, and a plurality of compounds represented by general formula (IX) can be combined as appropriate in accordance with the level of performance required for properties such as the solubility at low temperature, the transition temperature, the electrical reliability and the birefringence. The type of compound used may, for example, be a single type of compound in one embodiment of the present invention. Alternatively, in another embodiment of the present invention, two types of compounds may be used. Further, in yet another embodiment of the present invention, three types of compounds may be used. Further, in yet another embodiment of the present invention, 4 types of compounds may be used. Furthermore, in yet another embodiment of the present invention, 5 types of compounds may be used. Moreover, in yet another embodiment of the present invention, 6 or more types of compounds may be used.

In the liquid crystal composition of the present invention, it is necessary to appropriately adjust the amount of the compound represented by general formula (IX) in accordance with the level of performance required for properties such as the solubility at low temperature, the transition temperature, the electrical reliability, the birefringence, the process compatibility, dropping mark defects, burn-in and the dielectric anisotropy.

For example, in one embodiment of the present invention, the amount of the above compound relative to the total mass of the liquid crystal composition of the present invention is from 3 to 70% by mass. Moreover, in another embodiment of the present invention, the amount of the compound is from 5 to 70% by mass. Further, in yet another embodiment of the present invention, the amount of the compound is from 8 to 70% by mass. In yet another embodiment of the present invention, the amount of the compound is from 10 to 70% by mass. In yet another embodiment of the present invention, the amount of the compound is from 12 to 70% by mass. In yet another embodiment of the present invention, the amount of the compound is from 15 to 70% by mass. In yet another embodiment of the present invention, the amount of the compound is from 17 to 70% by mass. In yet another embodiment of the present invention, the amount of the compound is from 20 to 70% by mass. In yet another embodiment of the present invention, the amount of the compound is from 24 to 70% by mass. In yet another embodiment of the present invention, the amount of the compound is from 28 to 70% by mass. In yet another embodiment of the present invention, the amount of the compound is from 30 to 70% by mass. In yet another embodiment of the present invention, the amount of the compound is from 34 to 70% by mass. In yet another embodiment of the present invention, the amount of the compound is from 39 to 70% by mass. In yet another embodiment of the present invention, the amount of the compound is from 40 to 70% by mass. In yet another embodiment of the present invention, the amount of the compound is from 42 to 70% by mass. Further, in yet another embodiment of the present invention, the amount of the compound is from 45 to 70% by mass.

Moreover, in one embodiment of the present invention, the amount of the above compound relative to the total mass of the liquid crystal composition of the present invention is from 3 to 70% by mass. Further, in another embodiment of the present invention, the amount of the compound is from 3 to 60% by mass. In yet another embodiment of the present invention, the amount of the compound is from 3 to 55% by mass. In yet another embodiment of the present invention, the amount of the compound is from 3 to 50% by mass. In yet another embodiment of the present invention, the amount of the compound is from 3 to 45% by mass. In yet another embodiment of the present invention, the amount of the compound is from 3 to 40% by mass. In yet another embodiment of the present invention, the amount of the compound is from 3 to 35% by mass. In yet another embodiment of the present invention, the amount of the compound is from 3 to 30% by mass. In yet another embodiment of the present invention, the amount of the compound is from 3 to 25% by mass. In yet another embodiment of the present invention, the amount of the compound is from 3 to 20% by mass. In yet another embodiment of the present invention, the amount of the compound is from 3 to 15% by mass. Further, in yet another embodiment of the present invention, the amount of the compound is from 3 to 10% by mass.

When it is necessary to maintain the viscosity of the liquid crystal composition of the present invention at a low value, and obtain a liquid crystal composition having a fast response speed, it is preferable that the lower limit and the upper limit mentioned above are set to low values. Moreover, when it is necessary to maintain the Tni of the liquid crystal composition of the present invention at a high value, and obtain a liquid crystal composition that is resistant to burn-in, it is preferable that the lower limit and the upper limit mentioned above are set to low values. Further, when it is desirable to have a large dielectric anisotropy in order to ensure a low drive voltage, it is preferable that the lower limit and the upper limit mentioned above are set to high values.

Moreover, the compound represented by general formula (IX) is preferably a compound represented by general formula (IX-1), excluding compounds represented by general formula (i).

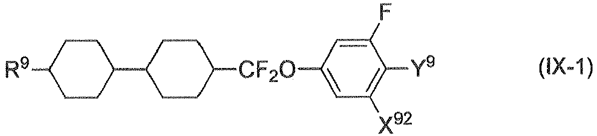

In the formula, R⁹ represents an alkyl group having 1 to 5 carbon atoms, an alkenyl group having 2 to 5 carbon atoms or an alkoxy group having 1 to 4 carbon atoms, X⁹² represents a hydrogen atom or a fluorine atom, and Y⁹ represents a fluorine atom or -OCF₃.

There are no particular limitations on the types of these compounds that can be combined, and a plurality of compounds represented by general formula (IX-1) can be combined as appropriate in accordance with the level of performance required for properties such as the solubility at low temperature, the transition temperature, the electrical reliability and the birefringence. The type of compound used may, for example, be a single type of compound in one embodiment of the present invention. Alternatively, in another embodiment of the present invention, two types of compounds may be used. Further, in yet another embodiment of the present invention, three types of compounds may be used. Further, in yet another embodiment of the present invention, 4 or more types of compounds may be used.

Moreover, the compound represented by general formula (IX-1) is preferably a compound represented by general formula (IX-1-2).

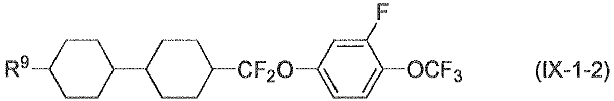

In the formula, R⁹ represents an alkyl group having 1 to 5 carbon atoms, an alkenyl group having 2 to 5 carbon atoms, or an alkoxy group having 1 to 4 carbon atoms.

Although there are no particular limitations on the types of these compounds that can be combined, one to three types of compounds are preferably selected from among the plurality of compounds represented by general formula (IX-1 -2), with due consideration of properties such as the solubility at low temperature, the transition temperature, the electrical reliability and the birefringence, and a combination of 1 to 4 types of compounds is more preferable.

The amount of the compound represented by general formula (IX-1-2) is determined with due consideration of the solubility at low temperature, the transition temperature and the electrical reliability and the like, and relative to the total mass of the liquid crystal composition of the present invention, the amount is preferably at least 1% by mass but not more than 30% by mass, more preferably at least 5% by mass but not more than 30% by mass, still more preferably at least 8% by mass but not more than 30% by mass, still more preferably at least 10% by mass but not more than 25% by mass, still more preferably at least 14% by mass but not more than 22% by mass, and particularly preferably at least 16% by mass but not more than 20% by mass.

Moreover, the compound represented by general formula (IX-1-2) is preferably a compound represented by formula (29.1) to formula (29.4), and is more preferably a compound represented by formula (29.2) or formula (29.4).

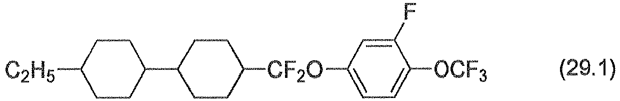

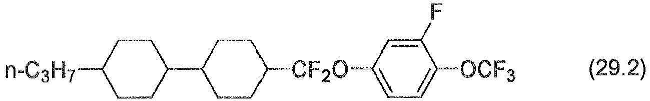

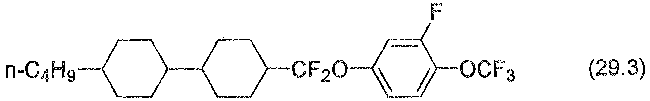

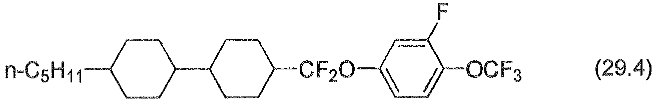

Moreover, the compound represented by general formula (IX) is preferably a compound represented by general formula (IX-2).

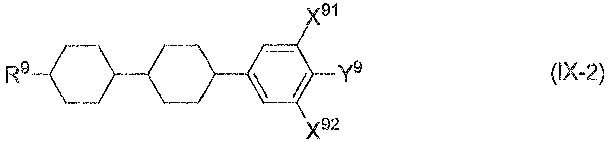

In the formula, R⁹ represents an alkyl group having 1 to 5 carbon atoms, an alkenyl group having 2 to 5 carbon atoms or an alkoxy group having 1 to 4 carbon atoms, X⁹¹ and X⁹² independently represent a hydrogen atom or a fluorine atom, and Y⁹ represents a fluorine atom, a chlorine atom or -OCF₃.

There are no particular limitations on the types of these compounds that can be combined, and a plurality of compounds represented by general formula (IX-2) can be combined as appropriate with due consideration of properties such as the solubility at low temperature, the transition temperature, the electrical reliability and the birefringence. For example, a single type of compound may be used in one embodiment of the present invention, two types of compounds may be used in another embodiment, three types of compounds may be used in yet another embodiment, 4 types of compounds may be used in yet another embodiment, 5 types of compounds may be used in yet another embodiment, and 6 or more types of compounds may be used in yet another embodiment.

Moreover, the compound represented by general formula (IX-2) is preferably a compound represented by general formula (IX-2-1).

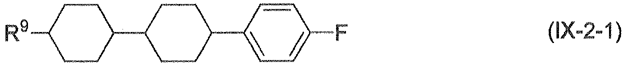

In the formula, R⁹ represents an alkyl group having 1 to 5 carbon atoms, an alkenyl group having 2 to 5 carbon atoms, or an alkoxy group having 1 to 4 carbon atoms.

Although there are no particular limitations on the types of these compounds that can be combined, one to three types of compounds are preferably selected from among the plurality of compounds represented by general formula (IX-2-1) in accordance with the level of performance required for properties such as the solubility at low temperature, the transition temperature, the electrical reliability and the birefringence.

The amount of the compound represented by general formula (IX-2-1) has a preferred upper limit and lower limit for each embodiment which are determined with due consideration of properties such as the solubility at low temperature, the transition temperature, the electrical properties and the birefringence.

For example, in one embodiment of the present invention, the amount of the above compound relative to the total mass of the liquid crystal composition of the present invention is from 1 to 40% by mass. In another embodiment, the amount of the compound is from 2 to 40% by mass, in yet another embodiment, the amount of the compound is from 4 to 40% by mass, in yet another embodiment, the amount of the compound is from 10 to 40% by mass, in yet another embodiment, the amount of the compound is from 14 to 40% by mass, in yet another embodiment, the amount of the compound is from 16 to 40% by mass, and in yet another embodiment, the amount of the compound is from 21 to 40% by mass.

Further, in one embodiment of the present invention, the amount of the above compound relative to the aforementioned total mass is from 1 to 40% by mass, in another embodiment, the amount of the compound is from 1 to 35% by mass, in yet another embodiment, the amount of the compound is from 1 to 30% by mass, in yet another embodiment, the amount of the compound is from 1 to 25% by mass, in yet another embodiment, the amount of the compound is from 1 to 22% by mass, in yet another embodiment, the amount of the compound is from 1 to 20% by mass, in yet another embodiment, the amount of the compound is from 1 to 10% by mass, in yet another embodiment, the amount of the compound is from 1 to 7% by mass, and in yet another embodiment, the amount of the compound is from 1 to 5% by mass.

Moreover, the compound represented by general formula (IX-2-1) is preferably a compound represented by formula (30.1) to formula (30.4), and is more preferably a compound represented by formula (30.1) or formula (30.2).

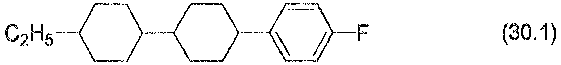

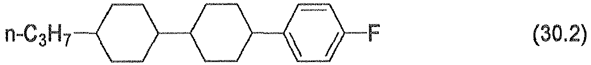

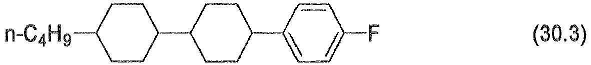

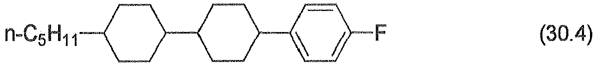

Further, the compound represented by general formula (IX-2) is preferably a compound represented by general formula (IX-2-2).

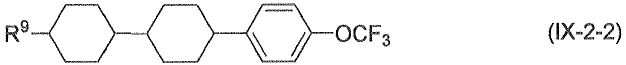

In the formula, R⁹ represents an alkyl group having 1 to 5 carbon atoms, an alkenyl group having 2 to 5 carbon atoms, or an alkoxy group having 1 to 4 carbon atoms.

Although there are no particular limitations on the types of these compounds that can be combined, one to three types of compounds are preferably combined from among the plurality of compounds represented by general formula (IX-2-2), with due consideration of properties such as the solubility at low temperature, the transition temperature, the electrical reliability and the birefringence, and a combination of 1 to 4 types of compounds is particularly preferable.

The amount of the compound represented by general formula (IX-2-2) has a preferred upper limit and lower limit for each embodiment which are determined with due consideration of properties such as the solubility at low temperature, the transition temperature, the electrical properties and the birefringence. For example, in one embodiment of the present invention, the amount of the above compound relative to the total mass of the liquid crystal composition of the present invention is from 1 to 40% by mass, in another embodiment, the amount of the compound is from 2 to 40% by mass, in yet another embodiment, the amount of the compound is from 4 to 40% by mass, in yet another embodiment, the amount of the compound is from 10 to 40% by mass, in yet another embodiment, the amount of the compound is from 14 to 40% by mass, in yet another embodiment, the amount of the compound is from 16 to 40% by mass, and in yet another embodiment, the amount of the compound is from 21 to 40% by mass.

Further, in one embodiment of the present invention, the amount of the above compound relative to the aforementioned total mass is from 1 to 40% by mass, in another embodiment, the amount of the compound is from 1 to 35% by mass, in yet another embodiment, the amount of the compound is from 1 to 30% by mass, in yet another embodiment, the amount of the compound is from 1 to 25% by mass, in yet another embodiment, the amount of the compound is from 1 to 22% by mass, in yet another embodiment, the amount of the compound is from 1 to 15% by mass, in yet another embodiment, the amount of the compound is from 1 to 12% by mass, in yet another embodiment, the amount of the compound is from 1 to 8% by mass, and in yet another embodiment, the amount of the compound is from 1 to 4% by mass.

The compound represented by general formula (IX-2-2) is preferably a compound represented by formula (31.1) to formula (31.4), is more preferably a compound represented by formula (31.2) to formula (31.4), and is still more preferably a compound represented by formula (31.2).

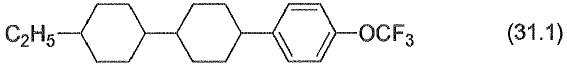

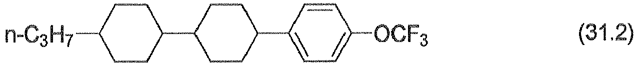

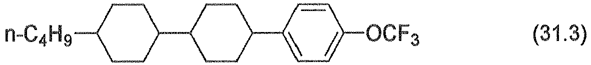

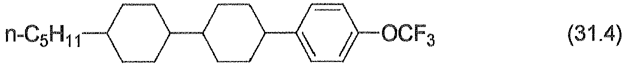

In the liquid crystal composition of the present invention, the amount of the compound represented by formula (31.2) relative to the total mass of the liquid crystal composition of the present invention is preferably at least 1% by mass but not more than 35% by mass, more preferably at least 2% by mass but not more than 25% by mass, still more preferably at least 3% by mass but not more than 20% by mass, particularly preferably at least 3% by mass but not more than 15% by mass, and most preferably at least 3% by mass but not more than 10% by mass. Examples of the most preferable ranges are from at least 3% by mass to not more than 8% by mass, from at least 3% by mass to not more than 6% by mass, from at least 3% by mass to not more than 4% by mass, from at least 4% by mass to not more than 10% by mass, from at least 6% by mass to not more than 10% by mass, and from at least 8% by mass to not more than 10% by mass.

In the liquid crystal composition of the present invention, the amount of the compound represented by formula (31.4) relative to the total mass of the liquid crystal composition of the present invention is preferably at least 1% by mass but not more than 35% by mass, more preferably at least 1% by mass but not more than 25% by mass, still more preferably at least 1% by mass but not more than 15% by mass, still more preferably at least 2% by mass but not more than 10% by mass, still more preferably at least 3% by mass but not more than 8% by mass, still more preferably at least 3% by mass but not more than 6% by mass, and particularly preferably at least 3% by mass but not more than 5% by mass.

Moreover, the compound represented by general formula (IX-2) is preferably a compound represented by general formula (IX-2-3).

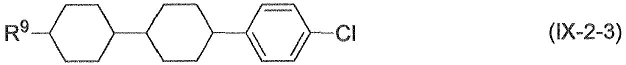

In the formula, R⁹ represents an alkyl group having 1 to 5 carbon atoms, an alkenyl group having 2 to 5 carbon atoms, or an alkoxy group having 1 to 4 carbon atoms.

There are no particular limitations on the types of these compounds that can be combined, and either one compound or a combination of two or more compounds are preferably combined from among the plurality of compounds represented by general formula (IX-2-3), with due consideration of properties such as the solubility at low temperature, the transition temperature, the electrical reliability and the birefringence.

The amount of the compound represented by general formula (IX-2-3) is determined with due consideration of the solubility at low temperature, the transition temperature and the electrical reliability and the like, and relative to the total mass of the liquid crystal composition of the present invention, the amount is preferably at least 1% by mass but not more than 30% by mass, more preferably at least 3% by mass but not more than 20% by mass, still more preferably at least 6% by mass but not more than 15% by mass, and still more preferably at least 8% by mass but not more than 10% by mass.

The compound represented by general formula (IX-2-3) is preferably a compound represented by formula (32.1) to formula (32.4), and is more preferably a compound represented by formula (32.2) and/or formula (32.4).

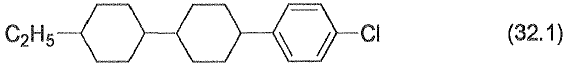

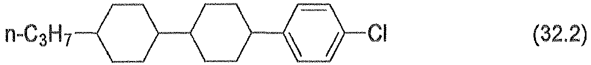

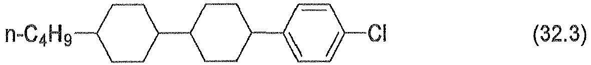

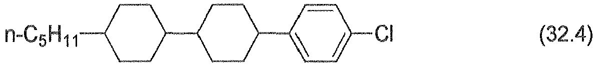

Moreover, the compound represented by general formula (IX-2) is preferably a compound represented by general formula (IX-2-4).

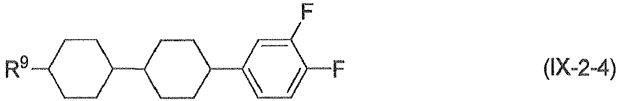

In the formula, R⁹ represents an alkyl group having 1 to 5 carbon atoms, an alkenyl group having 2 to 5 carbon atoms, or an alkoxy group having 1 to 4 carbon atoms.

The amount of the compound represented by general formula (IX-2-4) is determined with due consideration of the solubility at low temperature, the transition temperature and the electrical reliability and the like, and relative to the total mass of the liquid crystal composition of the present invention, the amount is preferably at least 1% by mass but not more than 30% by mass, more preferably at least 3% by mass but not more than 20% by mass, still more preferably at least 6% by mass but not more than 15% by mass, and particularly preferably at least 8% by mass but not more than 10% by mass.

The compound represented by general formula (IX-2-4) is preferably a compound represented by formula (33.1) to formula (33.5), and is more preferably a compound represented by formula (33.1) and/or formula (33.3).

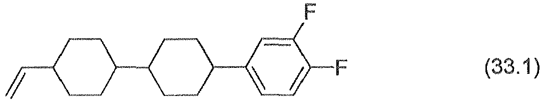

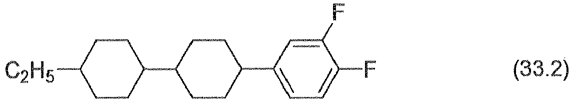

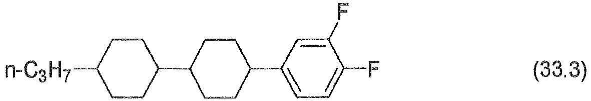

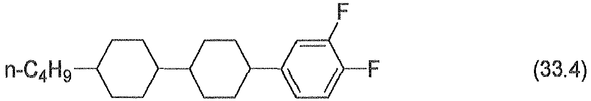

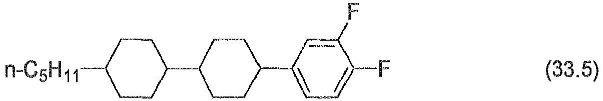

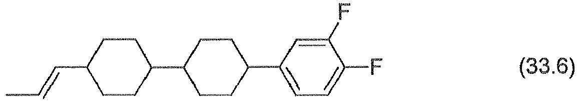

Moreover, the compound represented by general formula (IX-2) is preferably a compound represented by general formula (IX-2-5).

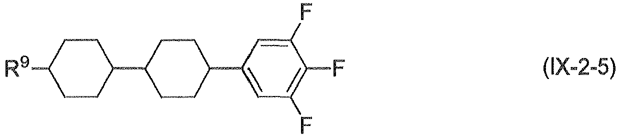

In the formula, R⁹ represents an alkyl group having 1 to 5 carbon atoms, an alkenyl group having 2 to 5 carbon atoms, or an alkoxy group having 1 to 4 carbon atoms.

There are no particular limitations on the types of these compounds that can be combined, and a plurality of compounds represented by general formula (IX-2-5) can be combined as appropriate in each embodiment with due consideration of properties such as the solubility at low temperature, the transition temperature, the electrical reliability and the birefringence. For example, in one embodiment of the present invention, a single type of compound may be used, in another embodiment, two types of compounds may be used, in yet another embodiment, three types of compounds may be used, and in yet another embodiment, 4 or more types of compounds may be used.

The amount of the compound represented by general formula (IX-2-5) has a preferred upper limit and lower limit for each embodiment which are determined with due consideration of properties such as the solubility at low temperature, the transition temperature, the electrical properties and the birefringence. For example, in one embodiment of the present invention, the amount of the above compound relative to the total mass of the liquid crystal composition of the present invention is from 4 to 45% by mass. In another embodiment, the amount of the compound is from 8 to 45% by mass, in yet another embodiment, the amount of the compound is from 12 to 45% by mass, in yet another embodiment, the amount of the compound is from 21 to 45% by mass, in yet another embodiment, the amount of the compound is from 30 to 45% by mass, in yet another embodiment, the amount of the compound is from 31 to 45% by mass, and in yet another embodiment, the amount of the compound is from 34 to 45% by mass. Furthermore, in one embodiment of the present invention, the amount of the above compound relative to the aforementioned total mass is from 4 to 45% by mass, in another embodiment, the amount of the compound is from 4 to 40% by mass, in yet another embodiment, the amount of the compound is from 4 to 35% by mass, in yet another embodiment, the amount of the compound is from 4 to 32% by mass, in yet another embodiment, the amount of the compound is from 4 to 22% by mass, in yet another embodiment, the amount of the compound is from 4 to 13% by mass, in yet another embodiment, the amount of the compound is from 4 to 9% by mass, in yet another embodiment, the amount of the compound is from 4 to 8% by mass, and in yet another embodiment, the amount of the compound is from 4 to 5% by mass.

When it is necessary to maintain the viscosity of the liquid crystal composition of the present invention at a low value, and obtain a liquid crystal composition having a fast response speed, it is preferable that the lower limit and the upper limit mentioned above are set to low values. Moreover, when it is necessary to maintain the Tni of the liquid crystal composition of the present invention at a high value, and obtain a liquid crystal composition having resistance to burn-in, it is preferable that the lower limit and the upper limit mentioned above are set to low values. Further, when it is desirable to have a large dielectric anisotropy in order to ensure a low drive voltage, it is preferable that the lower limit and the upper limit mentioned above are set to high values.

The compound represented by general formula (IX-2-5) is preferably a compound represented by formula (34.1) to formula (34.7), and is more preferably a compound represented by fonnula (34.1), formula (34.2), formula (34.4) and/or formula (34.5).

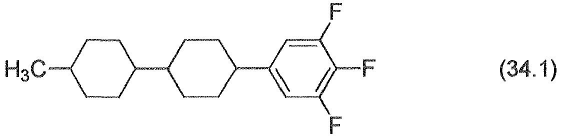

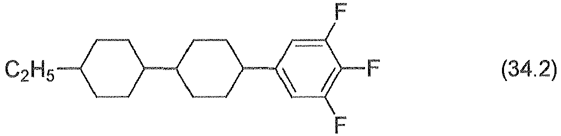

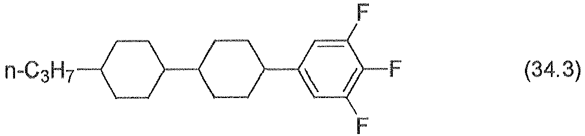

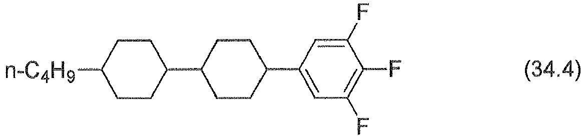

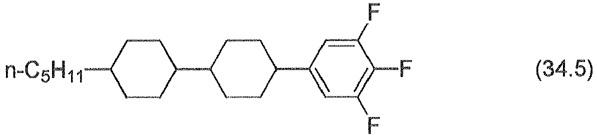

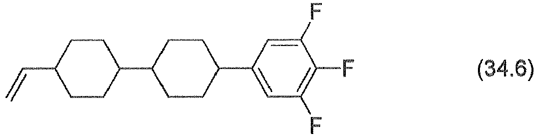

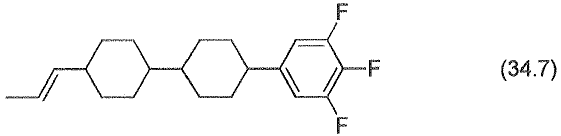

In addition, the compound represented by general formula (IX) is preferably a compound represented by general formula (IX-3).

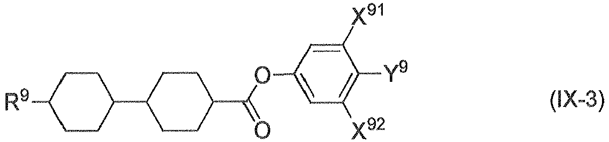

In the formula, R⁹ represents an alkyl group having 1 to 5 carbon atoms, an alkenyl group having 2 to 5 carbon atoms or an alkoxy group having 1 to 4 carbon atoms, X⁹¹ and X⁹² independently represent a hydrogen atom or a fluorine atom, and Y⁹ represents a fluorine atom, a chlorine atom or -OCF₃.

The compound represented by general formula (IX-3) is preferably a compound represented by general formula (IX-3-1).

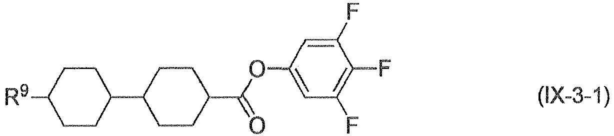

In the formula, R⁹ represents an alkyl group having 1 to 5 carbon atoms, an alkenyl group having 2 to 5 carbon atoms, or an alkoxy group having 1 to 4 carbon atoms.

There are no particular limitations on the types of these compounds that can be combined, and either one compound or a combination of two compounds are preferably combined from among the plurality of compounds represented by general formula (IX-3-1), with due consideration of properties such as the solubility at low temperature, the transition temperature, the electrical reliability and the birefringence.

The amount of the compound represented by general formula (IX-3-1) is determined with due consideration of the solubility at low temperature, the transition temperature and the electrical reliability and the like, and relative to the total mass of the liquid crystal composition of the present invention, the amount is preferably at least 3% by mass but not more than 30% by mass, more preferably at least 7% by mass but not more than 30% by mass, still more preferably at least 13% by mass but not more than 20% by mass, and particularly preferably at least 15% by mass but not more than 18% by mass.

Moreover, the compound represented by general formula (IX-3-1) is preferably a compound represented by formula (35.1) to formula (35.4), and is more preferably a compound represented by formula (35.1) and/or formula (35.2).

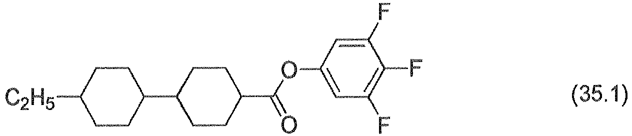

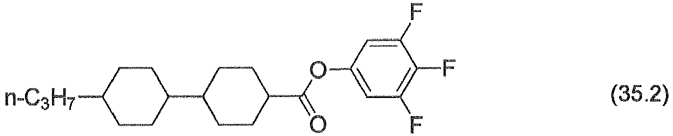

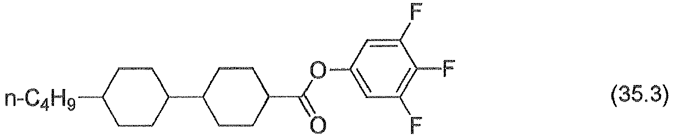

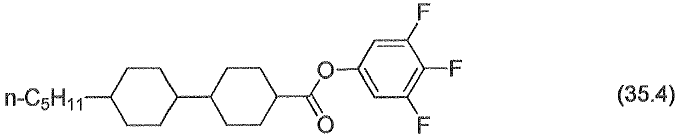

Further, the compound represented by general formula (M) is preferably a compound represented by general formula (X), excluding compounds represented by general formula (i) and compounds represented by general formula (ii). 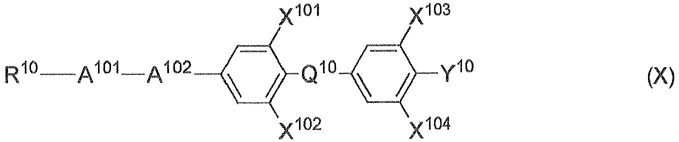 In the formula, X¹⁰¹ to X¹⁰⁴ independently represent a fluorine atom or a hydrogen atom, Y¹⁰ represents a fluorine atom, a chlorine atom or -OCF₃, Q¹⁰ represents a single bond or -CF₂O-, R¹⁰ represents an alkyl group having 1 to 5 carbon atoms, an alkenyl group having 2 to 5 carbon atoms or an alkoxy group having 1 to 4 carbon atoms, A¹⁰¹ and A¹⁰² independently represent a 1,4-cyclohexylene group, 1,4-phenylene group or a group represented by one of the formulae shown below, 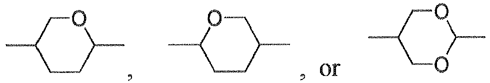 and a hydrogen atom on the 1,4-phenylene group may be substituted with a fluorine atom.

There are no particular limitations on the types of these compounds that can be combined, and a plurality of compounds represented by general formula (X) can be combined as appropriate in each embodiment with due consideration of properties such as the solubility at low temperature, the transition temperature, the electrical reliability and the birefringence. For example, in one embodiment of the present invention, a single type of compound may be used. In another embodiment, two types of compounds may be used. In yet another embodiment, three types of compounds may be used, and in yet another embodiment, 4 or more types of compounds may be used. Moreover, in yet another embodiment, 5 or more types of compounds may be used.

The amount of the compound represented by general formula (X) has a preferred upper limit and lower limit for each embodiment which are determined with due consideration of properties such as the solubility at low temperature, the transition temperature, the electrical properties and the birefringence. For example, in one embodiment of the present invention, the amount of the above compound relative to the total mass of the liquid crystal composition of the present invention is from 2 to 45% by mass, whereas in another embodiment, the amount of the compound is from 3 to 45% by mass, in yet another embodiment, the amount of the compound is from 6 to 45% by mass, in yet another embodiment, the amount of the compound is from 8 to 45% by mass, in yet another embodiment, the amount of the compound is from 9 to 45% by mass, in yet another embodiment, the amount of the compound is from 11 to 45% by mass, and in yet another embodiment, the amount of the compound is from 12 to 45% by mass. Further, in yet another embodiment, the amount of the compound is from 18 to 45% by mass. In yet another embodiment, the amount of the compound is from 19 to 45% by mass. In yet another embodiment, the amount of the compound is from 23 to 45% by mass. Moreover, in yet another embodiment, the amount of the compound is from 25 to 45% by mass. Furthermore, in one embodiment of the present invention, the amount of the above compound relative to the aforementioned total mass is from 2 to 45% by mass, in another embodiment, the amount of the compound is from 2 to 35% by mass, in yet another embodiment, the amount of the compound is from 2 to 30% by mass, in yet another embodiment, the amount of the compound is from 2 to 25% by mass, in yet another embodiment, the amount of the compound is from 2 to 20% by mass, in yet another embodiment, the amount of the compound is from 2 to 13% by mass, in yet another embodiment, the amount of the compound is from 2 to 9% by mass, in yet another embodiment, the amount of the compound is from 2 to 6% by mass, and in yet another embodiment, the amount of the compound is from 2 to 3% by mass.

When it is necessary to maintain the viscosity of the liquid crystal composition of the present invention at a low value, and obtain a liquid crystal composition having a fast response speed, it is preferable that the lower limit and the upper limit mentioned above are set to low values. Moreover, when it is necessary to obtain a liquid crystal composition having resistance to burn-in, it is preferable that the lower limit and the upper limit mentioned above are set to low values. Further, when it is desirable to have a large dielectric anisotropy in order to ensure a low drive voltage, it is preferable that the lower limit and the upper limit mentioned above are set to high values.

The compound represented by general formula (X) used in the liquid crystal composition of the present invention is preferably a compound represented by general formula (X-1).

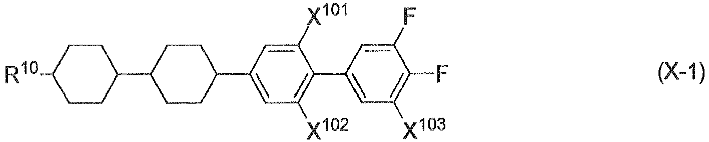

In the formula, X¹⁰¹ to X¹⁰³ independently represent a fluorine atom or a hydrogen atom, and R¹⁰ represents an alkyl group having 1 to 5 carbon atoms, an alkenyl group having 2 to 5 carbon atoms, or an alkoxy group having 1 to 4 carbon atoms.

There are no particular limitations on the types of these compounds that can be combined, and a plurality of compounds represented by general formula (X-1) can be combined as appropriate in each embodiment with due consideration of properties such as the solubility at low temperature, the transition temperature, the electrical reliability and the birefringence. For example, in one embodiment of the present invention, a single type of compound may be used. In another embodiment, two types of compounds may be used. In yet another embodiment, three types of compounds may be used, and in yet another embodiment, 4 or more types of compounds may be used. Moreover, in yet another embodiment, 5 or more types of compounds may be used.

The amount of the compound represented by general formula (X-1) has a preferred upper limit and lower limit for each embodiment which are determined with due consideration of properties such as the solubility at low temperature, the transition temperature, the electrical properties and the birefringence. For example, in one embodiment of the present invention, the amount of the above compound relative to the total mass of the liquid crystal composition of the present invention is from 2 to 40% by mass, whereas in another embodiment, the amount of the compound is from 3 to 40% by mass, in yet another embodiment, the amount of the compound is from 5 to 40% by mass, in yet another embodiment, the amount of the compound is from 6 to 40% by mass, in yet another embodiment, the amount of the compound is from 7 to 40% by mass, in yet another embodiment, the amount of the compound is from 8 to 40% by mass, and in yet another embodiment, the amount of the compound is from 9 to 40% by mass. Further, in yet another embodiment, the amount of the compound is from 13 to 40% by mass. In yet another embodiment, the amount of the compound is from 18 to 40% by mass. In yet another embodiment, the amount of the compound is from 23 to 40% by mass.

Furthermore, in one embodiment of the present invention, the amount of the above compound relative to the aforementioned total mass is from 2 to 40% by mass, in another embodiment, the amount of the compound is from 2 to 30% by mass, in yet another embodiment, the amount of the compound is from 2 to 25% by mass, in yet another embodiment, the amount of the compound is from 2 to 20% by mass, in yet another embodiment, the amount of the compound is from 2 to 15% by mass, in yet another embodiment, the amount of the compound is from 2 to 10% by mass, in yet another embodiment, the amount of the compound is from 2 to 6% by mass, and in yet another embodiment, the amount of the compound is from 2 to 4% by mass.

The compound represented by general formula (X-1) used in the liquid crystal composition of the present invention is preferably a compound represented by general formula (X-1-1).

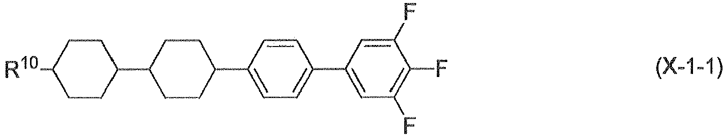

In the formula, R¹⁰ represents an alkyl group having 1 to 5 carbon atoms, an alkenyl group having 2 to 5 carbon atoms, or an alkoxy group having 1 to 4 carbon atoms.

There are no particular limitations on the types of these compounds that can be combined, and a plurality of compounds represented by general formula (X-1-1) can be combined as appropriate in each embodiment with due consideration of properties such as the solubility at low temperature, the transition temperature, the electrical reliability and the birefringence. For example, in one embodiment of the present invention, a single type of compound may be used. Further, in another embodiment, two types of compounds may be used, and in yet another embodiment, three types of compounds may be used. Moreover, in yet another embodiment, 4 or more types of compounds may be used.

The amount of the compound represented by general formula (X-1-1) has a preferred upper limit and lower limit for each embodiment which are determined with due consideration of properties such as the solubility at low temperature, the transition temperature, the electrical properties and the birefringence. For example, in one embodiment of the present invention, the amount of the above compound relative to the total mass of the liquid crystal composition of the present invention is from 3 to 30% by mass, whereas in another embodiment, the amount of the compound is from 4 to 30% by mass, in yet another embodiment, the amount of the compound is from 6 to 30% by mass, in yet another embodiment, the amount of the compound is from 9 to 30% by mass, in yet another embodiment, the amount of the compound is from 12 to 30% by mass, in yet another embodiment, the amount of the compound is from 15 to 30% by mass, in yet another embodiment, the amount of the compound is from 18 to 30% by mass, and in yet another embodiment, the amount of the compound is from 21 to 30% by mass.

Furthermore, in one embodiment of the present invention, the amount of the above compound relative to the aforementioned total mass is from 3 to 30% by mass, in another embodiment, the amount of the compound is from 3 to 20% by mass, in yet another embodiment, the amount of the compound is from 3 to 13% by mass, in yet another embodiment, the amount of the compound is from 3 to 10% by mass, and in yet another embodiment, the amount of the compound is from 3 to 7% by mass.

More specifically, the compound represented by general formula (X-1-1) used in the liquid crystal composition of the present invention is preferably a compound represented by formula (36.1) to formula (36.4), and of these compounds, preferably includes a compound represented by formula (36.1) and/or formula (36.2).

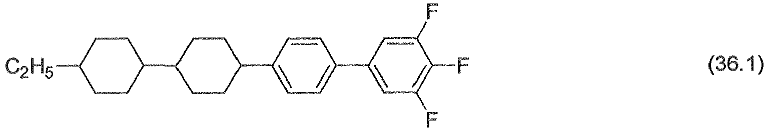

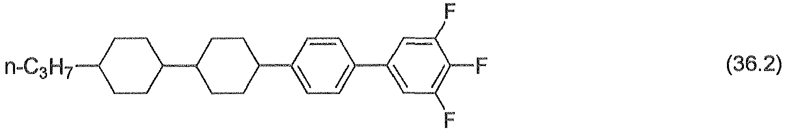

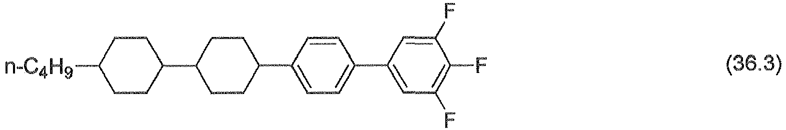

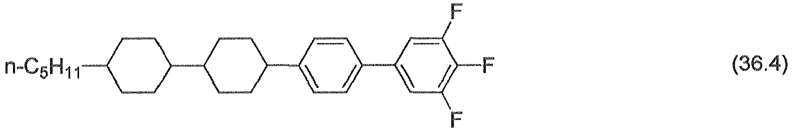

Further, the compound represented by general formula (X-1) used in the liquid crystal composition of the present invention is preferably a compound represented by general formula (X-1-2).

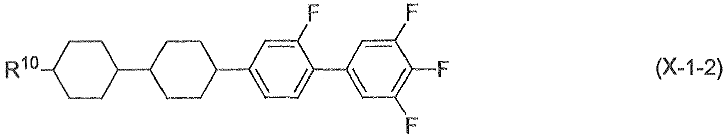

In the formula, R¹⁰ represents an alkyl group having 1 to 5 carbon atoms, an alkenyl group having 2 to 5 carbon atoms, or an alkoxy group having 1 to 4 carbon atoms.

The amount of the compound represented by general formula (X-1-2) relative to the total mass of the liquid crystal composition of the present invention is preferably at least 1 % by mass, more preferably 2% by mass or more, and still more preferably 6% by mass or more. Further, considering the solubility at low temperature, the transition temperature and the electrical reliability and the like, the maximum amount is preferably restricted to not more than 20% by mass, and is more preferably 16% by mass or less, still more preferably 12% by mass or less, and particularly preferably 10% by mass or less.

More specifically, the compound represented by general formula (X-1-2) used in the liquid crystal composition of the present invention is preferably a compound represented by formula (37.1) to formula (37.4), and of these compounds, preferably includes a compound represented by formula (37.2).

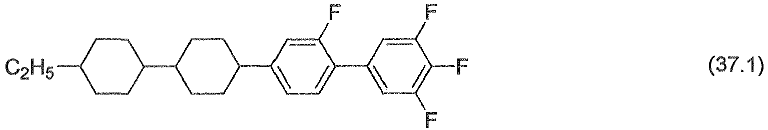

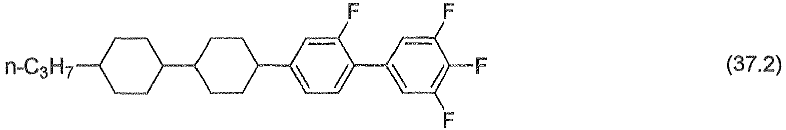

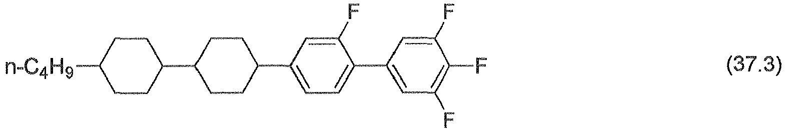

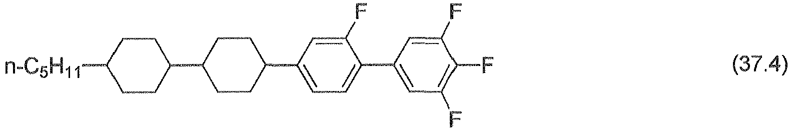

In the liquid crystal composition of the present invention, the amount of the compound represented by formula (37.2) is determined with due consideration of the solubility at low temperature, the transition temperature and the electrical reliability and the like, and is preferably at least 1% by mass but not more than 20% by mass, more preferably at least 2% by mass but not more than 15% by mass, still more preferably at least 3% by mass but not more than 10% by mass, and particularly preferably at least 3% by mass but not more than 6% by mass, relative to the total mass of the liquid crystal composition of the present invention.

Further, the compound represented by general formula (X-1) used in the liquid crystal composition of the present invention is preferably a compound represented by general formula (X-1-3).

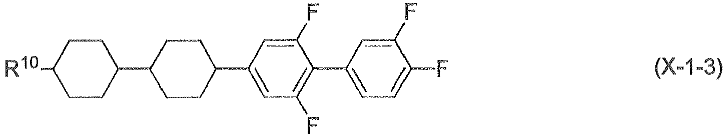

In the formula, R¹⁰ represents an alkyl group having 1 to 5 carbon atoms, an alkenyl group having 2 to 5 carbon atoms, or an alkoxy group having 1 to 4 carbon atoms.

Although there are no particular limitations on the types of these compounds that can be combined, one compound or two or more compounds are preferably combined from among the plurality of compounds represented by general formula (X-1-3), with due consideration of properties such as the solubility at low temperature, the transition temperature, the electrical reliability and the birefringence.

The amount of the compound represented by general formula (X-1-3) relative to the total mass of the liquid crystal composition of the present invention is preferably at least 1% by mass, more preferably 2% by mass or more, and still more preferably 6% by mass or more. Further, considering the solubility at low temperature, the transition temperature and the electrical reliability and the like, the maximum amount is preferably restricted to not more than 20% by mass, and is more preferably 16% by mass or less, still more preferably 12% by mass or less, and particularly preferably 10% by mass or less.

More specifically, the compound represented by general formula (X-1-3) used in the liquid crystal composition of the present invention is preferably a compound represented by formula (38.1) to formula (38.4), and of these compounds, preferably includes a compound represented by formula (38.2).

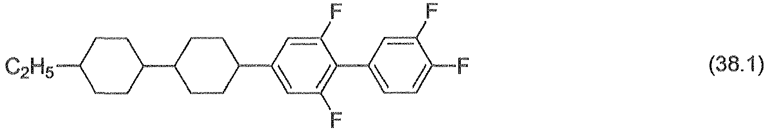

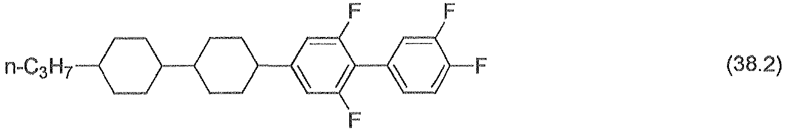

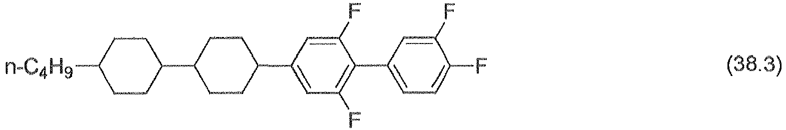

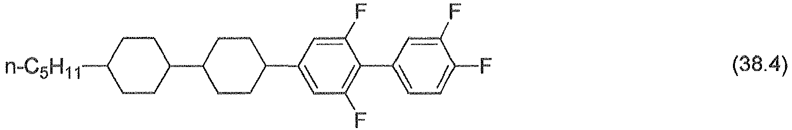

In the liquid crystal composition of the present invention, the amount of the compound represented by formula (38.2) relative to the total mass of the liquid crystal composition of the present invention is preferably at least 1% by mass but not more than 35% by mass, more preferably at least 2% by mass but not more than 25% by mass, still more preferably at least 3% by mass but not more than 20% by mass, still more preferably at least 3% by mass but not more than 15% by mass, still more preferably at least 3% by mass but not more than 10% by mass, still more preferably at least 3% by mass but not more than 8% by mass, and particularly preferably at least 4% by mass but not more than 5% by mass.

Moreover, the compound represented by general formula (X) used in the liquid crystal composition of the present invention is preferably a compound represented by general formula (X-2).

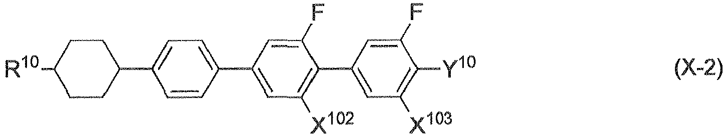

In the formula, X¹⁰² and X¹⁰³ independently represent a fluorine atom or a hydrogen atom, Y¹⁰ represents a fluorine atom, a chlorine atom or -OCF₃, and R¹⁰ represents an alkyl group having 1 to 5 carbon atoms, an alkenyl group having 2 to 5 carbon atoms, or an alkoxy group having 1 to 4 carbon atoms.

Although there are no particular limitations on the types of these compounds that can be combined, either one compound or two or more compounds are preferably combined from among the plurality of compounds represented by general formula (X-2), with due consideration of properties such as the solubility at low temperature, the transition temperature, the electrical reliability and the birefringence.

Further, the compound represented by general formula (X-2) used in the liquid crystal composition of the present invention is preferably a compound represented by general formula (X-2-1).

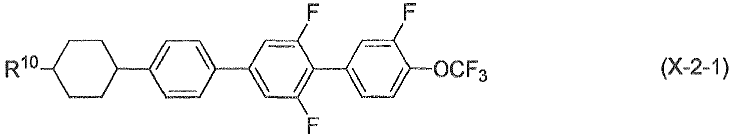

In the formula, R¹⁰ represents an alkyl group having 1 to 5 carbon atoms, an alkenyl group having 2 to 5 carbon atoms, or an alkoxy group having 1 to 4 carbon atoms.

Although there are no particular limitations on the types of these compounds that can be combined, one compound or two or more types of compounds are preferably combined from among the plurality of compounds represented by general formula (X-2-1), with due consideration of properties such as the solubility at low temperature, the transition temperature, the electrical reliability and the birefringence, and a combination of one to three or more types of compounds is particularly preferable.

The amount of the compound represented by general formula (X-2-1) is determined with due consideration of the solubility at low temperature, the transition temperature and the electrical reliability and the like, and relative to the total mass of the liquid crystal composition of the present invention, the amount is preferably at least 3% by mass but not more than 20% by mass, more preferably at least 6% by mass but not more than 16% by mass, still more preferably at least 9% by mass but not more than 12% by mass, and particularly preferably at least 9% by mass but not more than 10% by mass.

More specifically, the compound represented by general formula (X-2-1) used in the liquid crystal composition of the present invention is preferably a compound represented by formula (39.1) to formula (39.4), and of these compounds, preferably includes a compound represented by formula (39.2).

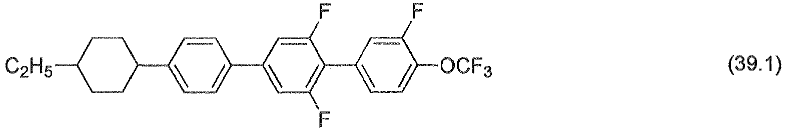

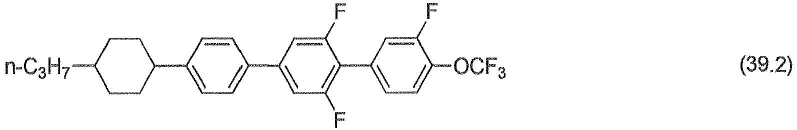

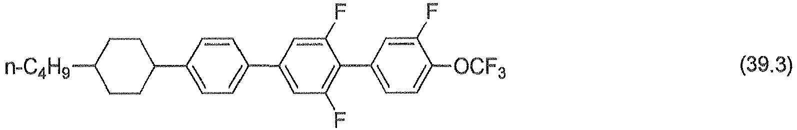

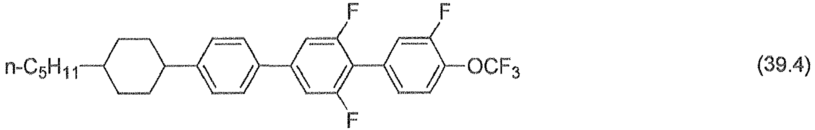

In the liquid crystal composition of the present invention, the amount of the compound represented by formula (39.2) relative to the total mass of the liquid crystal composition of the present invention is preferably at least 1% by mass but not more than 35% by mass, more preferably at least 2% by mass but not more than 25% by mass, still more preferably at least 3% by mass but not more than 20% by mass, still more preferably at least 3% by mass but not more than 15% by mass, still more preferably at least 3% by mass but not more than 10% by mass, still more preferably at least 4% by mass but not more than 8% by mass, and particularly preferably at least 4% by mass but not more than 6% by mass.

Moreover, the compound represented by general formula (X-2) used in the liquid crystal composition of the present invention is preferably a compound represented by general formula (X-2-2).

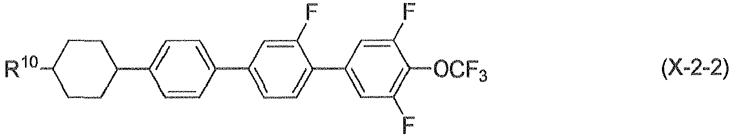

In the formula, R¹⁰ represents an alkyl group having 1 to 5 carbon atoms, an alkenyl group having 2 to 5 carbon atoms, or an alkoxy group having 1 to 4 carbon atoms.

Although there are no particular limitations on the types of these compounds that can be combined, one compound or two or more types of compounds are preferably combined from among the plurality of compounds represented by general formula (X-2-2), with due consideration of properties such as the solubility at low temperature, the transition temperature, the electrical reliability and the birefringence.

The amount of the compound represented by general formula (X-2-2) is determined with due consideration of the solubility at low temperature, the transition temperature and the electrical reliability and the like, and relative to the total mass of the liquid crystal composition of the present invention, the amount is preferably at least 3% by mass but not more than 20% by mass, more preferably at least 6% by mass but not more than 16% by mass, still more preferably at least 9% by mass but not more than 12% by mass, and particularly preferably at least 9% by mass but not more than 10% by mass.

More specifically, the compound represented by general formula (X-2-2) used in the liquid crystal composition of the present invention is preferably a compound represented by formula (40.1) to formula (40.4), and of these compounds, preferably includes a compound represented by formula (40.2).

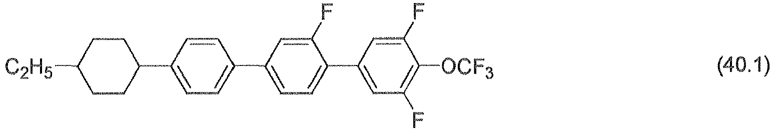

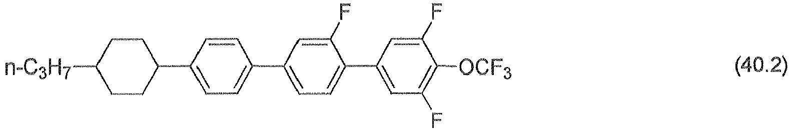

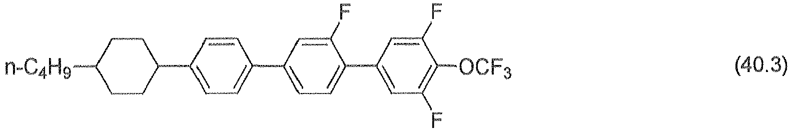

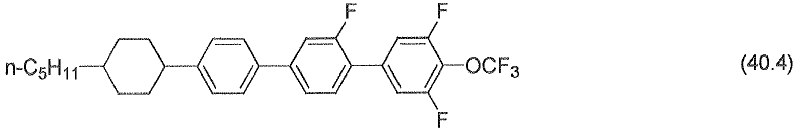

The compound represented by general formula (X) is preferably a compound represented by general formula (X-3).

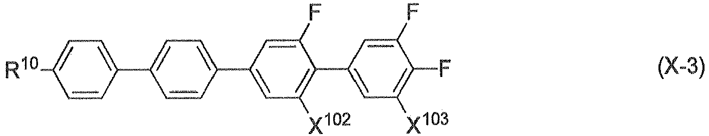

In the formula, X¹⁰² and X¹⁰³ independently represent a fluorine atom or a hydrogen atom, and R¹⁰ represents an alkyl group having 1 to 5 carbon atoms, an alkenyl group having 2 to 5 carbon atoms, or an alkoxy group having 1 to 4 carbon atoms.

Although there are no particular limitations on the types of these compounds that can be combined, either one compound or two or more compounds are preferably combined from among the plurality of compounds represented by general formula (X-3), with due consideration of properties such as the solubility at low temperature, the transition temperature, the electrical reliability and the birefringence.

Further, the compound represented by general formula (X-3) used in the liquid crystal composition of the present invention is preferably a compound represented by general formula (X-3-1).

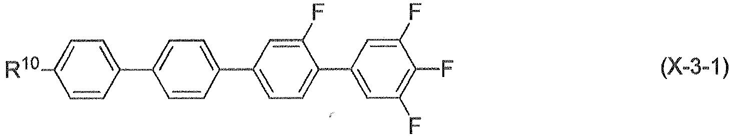

In the formula, R¹⁰ represents an alkyl group having 1 to 5 carbon atoms, an alkenyl group having 2 to 5 carbon atoms, or an alkoxy group having 1 to 4 carbon atoms.

Although there are no particular limitations on the types of these compounds that can be combined, one compound or two or more types of compounds are preferably combined from among the plurality of compounds represented by general formula (X-3-1), with due consideration of properties such as the solubility at low temperature, the transition temperature, the electrical reliability and the birefringence.

The amount of the compound represented by general formula (X-3-1) relative to the total mass of the liquid crystal composition of the present invention, the amount is preferably at least 1% by mass, more preferably 2% by mass or more, and still more preferably 3% by mass or more. Further, considering the solubility at low temperature, the transition temperature and the electrical reliability and the like, the maximum amount is preferably restricted to not more than 10% by mass, and is more preferably 8% by mass or less, still more preferably 6% by mass or less, and particularly preferably 4% by mass or less.

More specifically, the compound represented by general formula (X-3-1) used in the liquid crystal composition of the present invention is preferably a compound represented by formula (41.1) to formula (41.4), and of these compounds, preferably includes a compound represented by formula (41.2).

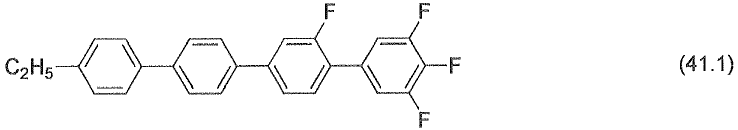

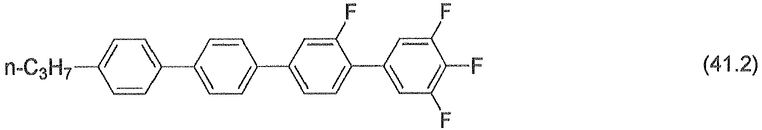

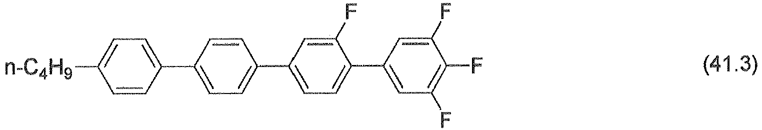

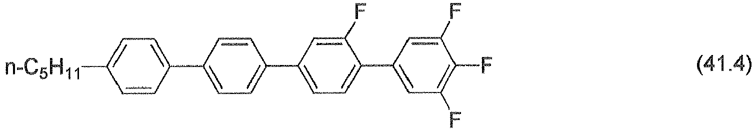

In addition, the compound represented by general formula (X) is preferably a compound represented by general formula (X-4).

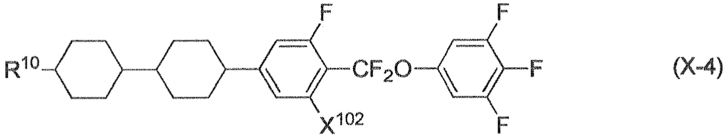

In the formula, X¹⁰² represents a fluorine atom or a hydrogen atom, and R¹⁰ represents an alkyl group having 1 to 5 carbon atoms, an alkenyl group having 2 to 5 carbon atoms, or an alkoxy group having 1 to 4 carbon atoms.

Although there are no particular limitations on the types of these compounds that can be combined, one compound or two or more types of compounds are preferably combined from among the plurality of compounds represented by general formula (X-4), with due consideration of properties such as the solubility at low temperature, the transition temperature, the electrical reliability and the birefringence, and a combination of one to three or more types of compounds is particularly preferable.

The compound represented by general formula (X-4) used in the liquid crystal composition of the present invention is preferably a compound represented by general formula (X-4-1).

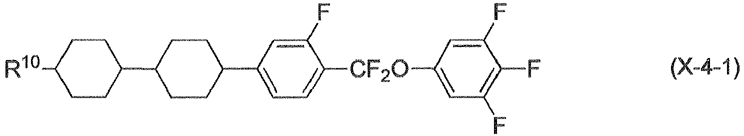

In the formula, R¹⁰ represents an alkyl group having 1 to 5 carbon atoms, an alkenyl group having 2 to 5 carbon atoms, or an alkoxy group having 1 to 4 carbon atoms.

Although there are no particular limitations on the types of these compounds that can be combined, one compound or two or more types of compounds are preferably combined from among the plurality of compounds represented by general formula (X-4-1), with due consideration of properties such as the solubility at low temperature, the transition temperature, the electrical reliability and the birefringence, and a combination of one to three or more types of compounds is particularly preferable.

The amount of the compound represented by general formula (X-4-1) is determined with due consideration of the solubility at low temperature, the transition temperature and the electrical reliability and the like, and relative to the total mass of the liquid crystal composition of the present invention, the amount is preferably at least 2% by mass but not more than 20% by mass, more preferably at least 5% by mass but not more than 17% by mass, still more preferably at least 10% by mass but not more than 15% by mass, and particularly preferably at least 10% by mass but not more than 13% by mass.

More specifically, the compound represented by general formula (X-4-1) used in the liquid crystal composition of the present invention is preferably a compound represented by formula (42.1) to formula (42.4), and of these compounds, preferably includes a compound represented by formula (42.3).

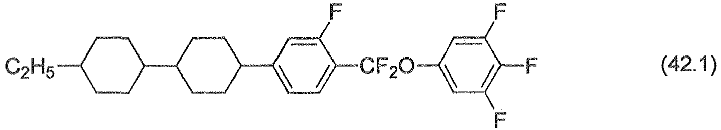

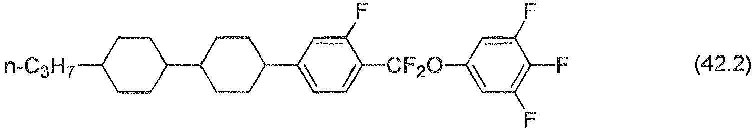

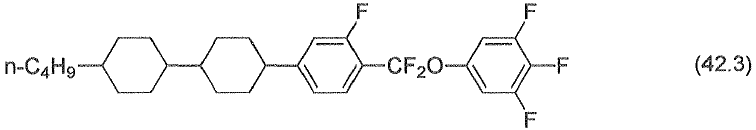

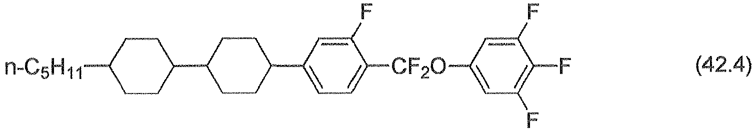

Moreover, the compound represented by general formula (X-4) used in the liquid crystal composition of the present invention is preferably a compound represented by general formula (X-4-2).

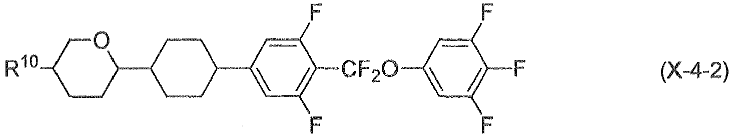

In the formula, R¹⁰ represents an alkyl group having 1 to 5 carbon atoms, an alkenyl group having 2 to 5 carbon atoms, or an alkoxy group having 1 to 4 carbon atoms.

Although there are no particular limitations on the types of these compounds that can be combined, one compound or two or more types of compounds are preferably combined from among the plurality of compounds represented by general formula (X-4-2), with due consideration of properties such as the solubility at low temperature, the transition temperature, the electrical reliability and the birefringence, and a combination of one to three or more types of compounds is particularly preferable.

The amount of the compound represented by general formula (X-4-2) is determined with due consideration of the solubility at low temperature, the transition temperature and the electrical reliability and the like, and relative to the total mass of the liquid crystal composition of the present invention, the amount is preferably at least 2% by mass but not more than 20% by mass, more preferably at least 5% by mass but not more than 17% by mass, still more preferably at least 10% by mass but not more than 15% by mass, and particularly preferably at least 10% by mass but not more than 13% by mass.

More specifically, the compound represented by general formula (X-4-2) used in the liquid crystal composition of the present invention is preferably a compound represented by formula (42.11) to formula (42.14), and of these compounds, preferably includes a compound represented by formula (42.13) or formula (42.14).

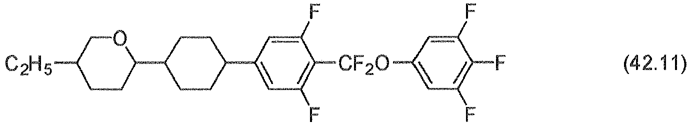

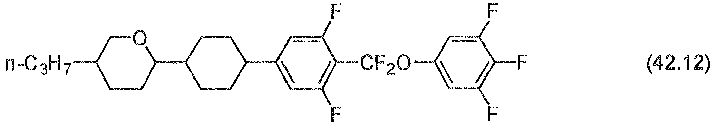

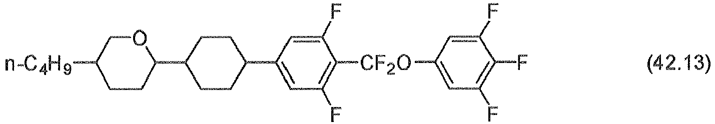

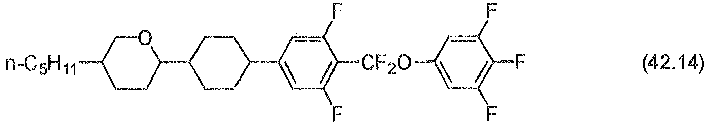

Moreover, the compound represented by general formula (X-4) used in the liquid crystal composition of the present invention is preferably a compound represented by general formula (X-4-3). 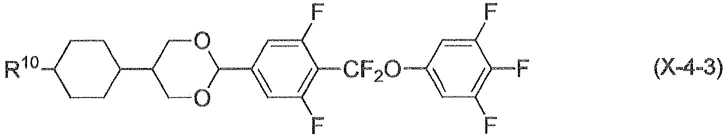 In the formula, R¹⁰ represents an alkyl group having 1 to 5 carbon atoms, an alkenyl group having 2 to 5 carbon atoms, or an alkoxy group having 1 to 4 carbon atoms.

Although there are no particular limitations on the types of these compounds that can be combined, one compound or two or more types of compounds are preferably combined from among the plurality of compounds represented by general formula (X-4-3), with due consideration of properties such as the solubility at low temperature, the transition temperature, the electrical reliability and the birefringence, and a combination of one to three or more types of compounds is particularly preferable.

The amount of the compound represented by general formula (X-4-3) is determined with due consideration of the solubility at low temperature, the transition temperature and the electrical reliability and the like, and relative to the total mass of the liquid crystal composition of the present invention, the amount is preferably at least 2% by mass but not more than 20% by mass, more preferably at least 5% by mass but not more than 17% by mass, still more preferably at least 10% by mass but not more than 15% by mass, and particularly preferably at least 10% by mass but not more than 13% by mass.

More specifically, the compound represented by general formula (X-4-3) used in the liquid crystal composition of the present invention is preferably a compound represented by formula (42.21) to formula (42.24), and of these compounds, preferably includes a compound represented by formula (42.22).

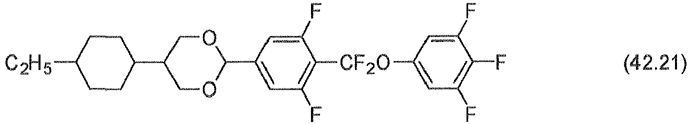

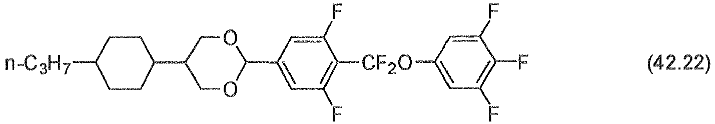

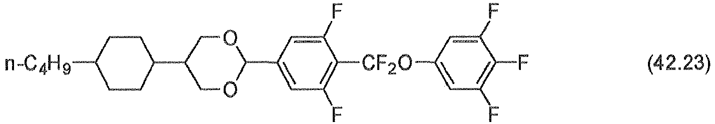

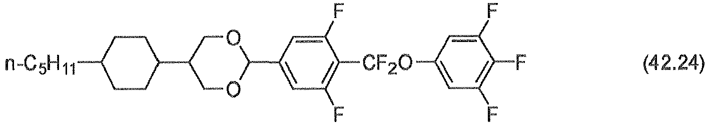

In addition, the compound represented by general formula (X) is preferably a compound represented by general formula (X-5).

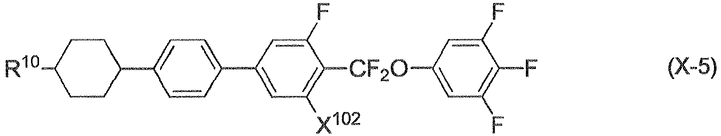

In the formula, X¹⁰² represents a fluorine atom or a hydrogen atom, and R¹⁰ represents an alkyl group having 1 to 5 carbon atoms, an alkenyl group having 2 to 5 carbon atoms, or an alkoxy group having 1 to 4 carbon atoms.

Although there are no particular limitations on the types of these compounds that can be combined, one compound or two or more types of compounds are preferably combined from among the plurality of compounds represented by general formula (X-5), with due consideration of properties such as the solubility at low temperature, the transition temperature, the electrical reliability and the birefringence, and a combination of one to three or more types of compounds is particularly preferable.

The compound represented by general formula (X-5) used in the liquid crystal composition of the present invention is preferably a compound represented by general formula (X-5-1).

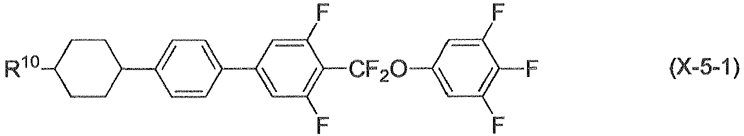

In the formula, R¹⁰ represents an alkyl group having 1 to 5 carbon atoms, an alkenyl group having 2 to 5 carbon atoms, or an alkoxy group having 1 to 4 carbon atoms.

Although there are no particular limitations on the types of these compounds that can be combined, one compound or two or more types of compounds are preferably combined from among the plurality of compounds represented by general formula (X-5-1), with due consideration of properties such as the solubility at low temperature, the transition temperature, the electrical reliability and the birefringence, and a combination of one to three or more types of compounds is particularly preferable.

More specifically, the compound represented by general formula (X-5-1) used in the liquid crystal composition of the present invention is preferably a compound represented by formula (43.1) to formula (43.4), and of these compounds, preferably includes a compound represented by formula (43.2).

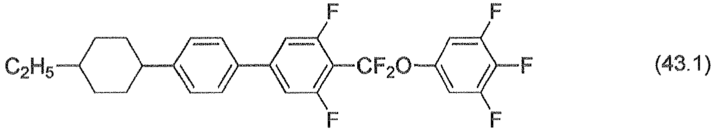

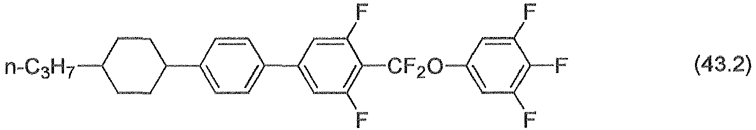

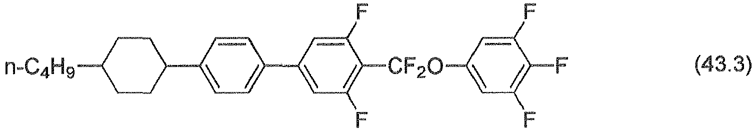

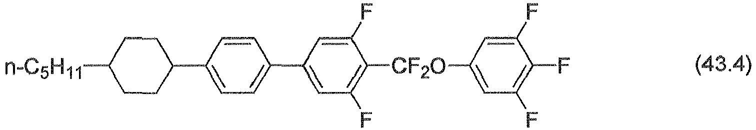

Further, a compound represented by general formula (X'-7), which is similar to the compound represented by the aforementioned general formula (X), may be included in the liquid crystal composition of the present invention.

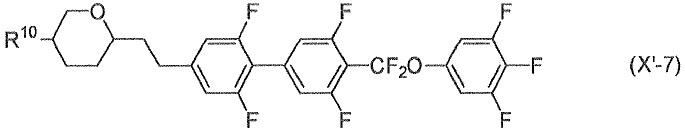

In the formula, R¹⁰ represents an alkyl group having 1 to 5 carbon atoms, an alkenyl group having 2 to 5 carbon atoms, or an alkoxy group having 1 to 4 carbon atoms.

Although there are no particular limitations on the types of these compounds that can be combined, one compound or two or more types of compounds are preferably combined from among the plurality of compounds represented by general formula (X'-7), with due consideration of properties such as the solubility at low temperature, the transition temperature, the electrical reliability and the birefringence.

The amount of the compound represented by general formula (X'-7) has a preferred upper limit and lower limit for each embodiment which are determined with due consideration of properties such as the solubility at low temperature, the transition temperature, the electrical properties and the birefringence.

For example, in one embodiment of the present invention, the amount of the above compound relative to the total mass of the liquid crystal composition of the present invention is from 4 to 30% by mass, in another embodiment, the amount of the compound is from 5 to 30% by mass, in yet another embodiment, the amount of the compound is from 6 to 30% by mass, in yet another embodiment, the amount of the compound is from 8 to 30% by mass, in yet another embodiment, the amount of the compound is from 9 to 30% by mass, in yet another embodiment, the amount of the compound is from 11 to 30% by mass, and in yet another embodiment, the amount of the compound is from 14 to 30% by mass. Moreover, in yet another embodiment, the amount of the compound is from 18 to 30% by mass,

Further, in one embodiment of the present invention, the amount of the above compound relative to the aforementioned total mass is from 4 to 30% by mass, in another embodiment, the amount of the compound is from 4 to 20% by mass, in yet another embodiment, the amount of the compound is from 4 to 13% by mass, in yet another embodiment, the amount of the compound is from 4 to 10% by mass, and in yet another embodiment, the amount of the compound is from 4 to 7% by mass.

More specifically, the compound represented by general formula (X'-7) used in the liquid crystal composition of the present invention is preferably a compound represented by formula (44.11) to formula (44.14), and of these compounds, preferably includes a compound represented by formula (44.13).

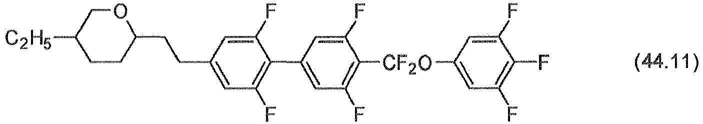

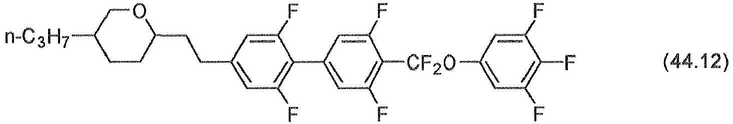

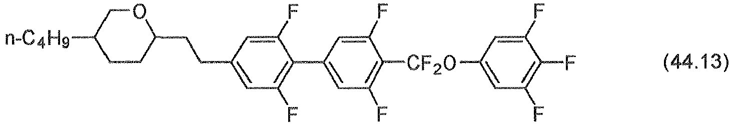

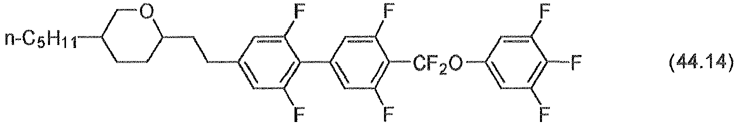

Moreover, the compound represented by general formula (X) is preferably a compound selected from the group of compounds represented by general formula (XI).

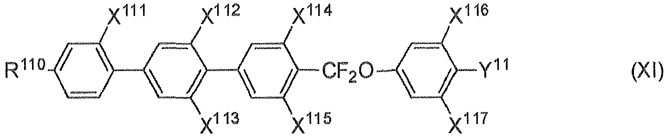

In the formula, X¹¹¹ to X¹¹⁷ independently represent a fluorine atom or a hydrogen atom, provided that at least one of X¹¹¹ to X¹¹⁷ represents a fluorine atom, R¹¹⁰ represents an alkyl group having 1 to 5 carbon atoms, an alkenyl group having 2 to 5 carbon atoms or an alkoxy group having 1 to 4 carbon atoms, and Y¹¹ represents a fluorine atom or - OCF₃.

Although there are no particular limitations on the types of these compounds that can be combined, one to three or more types of compounds are preferably combined from among the plurality of compounds represented by general formula (XI), with due consideration of properties such as the solubility at low temperature, the transition temperature, the electrical reliability and the birefringence.

The amount of the compound represented by general formula (XI) has a preferred upper limit and lower limit for each embodiment which are determined with due consideration of properties such as the solubility at low temperature, the transition temperature, the electrical properties and the birefringence. For example, in one embodiment of the present invention, the amount of the above compound relative to the total mass of the liquid crystal composition of the present invention is from 2 to 30% by mass, in another embodiment, the amount of the compound is from 4 to 30% by mass, in yet another embodiment, the amount of the compound is from 5 to 30% by mass, in yet another embodiment, the amount of the compound is from 7 to 30% by mass, in yet another embodiment, the amount of the compound is from 9 to 30% by mass, in yet another embodiment, the amount of the compound is from 10 to 30% by mass, and in yet another embodiment, the amount of the compound is from 12 to 30% by mass. Further, in yet another embodiment, the amount of the compound is from 13 to 30% by mass. In yet another embodiment, the amount of the compound is from 15 to 30% by mass. In yet another embodiment, the amount of the compound is from 18 to 30% by mass.

Furthermore, in one embodiment of the present invention, the amount of the above compound relative to the aforementioned total mass is from 2 to 30% by mass, in another embodiment, the amount of the compound is from 2 to 25% by mass, in yet another embodiment, the amount of the compound is from 2 to 20% by mass, in yet another embodiment, the amount of the compound is from 2 to 15% by mass, in yet another embodiment, the amount of the compound is from 2 to 10% by mass, and in yet another embodiment, the amount of the compound is from 2 to 5% by mass.

When the liquid crystal composition of the present invention is used for a liquid crystal display element having a small cell gap, it is appropriate to increase the amount of the compound represented by general formula (XI). When the liquid crystal composition is used in a liquid crystal display element having a low drive voltage, it is appropriate to increase the amount of the compound represented by general formula (XI). Further, when the liquid crystal composition is used for a liquid crystal display element used in a low-temperature environment, it is appropriate to reduce the amount of the compound represented by general formula (XI). In the case of a liquid crystal composition used for a liquid crystal display element having a fast response speed, it is appropriate to reduce the amount of the compound represented by general formula (XI).

Moreover, the compound represented by general formula (XI) used in the liquid crystal composition of the present invention is preferably a compound represented by general formula (XI-1).

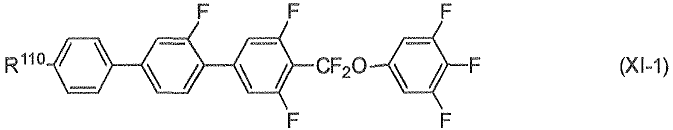

In the formula, R¹¹⁰ represents an alkyl group having 1 to 5 carbon atoms, an alkenyl group having 2 to 5 carbon atoms or an alkoxy group having 1 to 4 carbon atoms.

There are no particular limitations on the types of these compounds that can be combined, and a plurality of compounds represented by general formula (XI-1) can be combined as appropriate in each embodiment, with due consideration of properties such as the solubility at low temperature, the transition temperature, the electrical reliability and the birefringence. For example, in one embodiment of the present invention, a single type of compound may be used, in another embodiment, two types of compounds may be combined, and in yet another embodiment, three or more types of compounds may be combined.

The amount of the compound represented by general formula (XI-1) is determined with due consideration of the solubility at low temperature, the transition temperature and the electrical reliability and the like, and relative to the total mass of the liquid crystal composition of the present invention, the amount is preferably at least 1% by mass but not more than 20% by mass, more preferably at least 3% by mass but not more than 20% by mass, still more preferably at least 4% by mass but not more than 20% by mass, still more preferably at least 6% by mass but not more than 15% by mass, and particularly preferably at least 9% by mass but not more than 12% by mass.

More specifically, the compound represented by general formula (XI-1) used in the liquid crystal composition of the present invention is preferably a compound represented by formula (45.1) to formula (45.4), and of these compounds, preferably includes a compound represented by formula (45.2) to formula (45.4), and more preferably includes a compound represented by formula (45.2). As indicated above, the composition contains one or two or more compounds selected from the group consisting of a compound represented by the formula (45.2), a compound represented by the formula (45.3), and a compound represented by the formula (45.4).

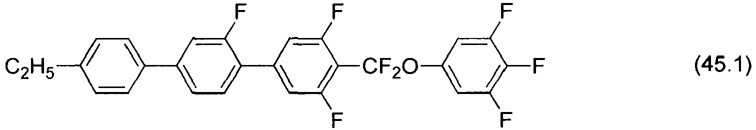

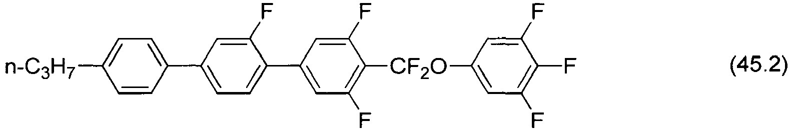

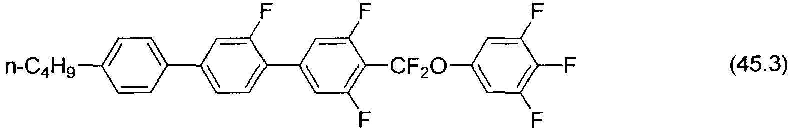

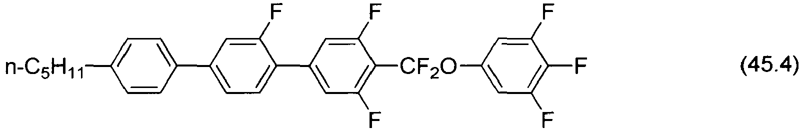

In the liquid crystal composition of the present invention, the amount of the compound represented by formula (45.2) is determined with due consideration of the solubility at low temperature, the transition temperature and the electrical reliability and the like, and relative to the total mass of the liquid crystal composition of the present invention, the amount is preferably at least 1% by mass but not more than 25% by mass, more preferably at least 3% by mass but not more than 20% by mass, still more preferably at least 3% by mass but not more than 15% by mass, and particularly preferably at least 3% by mass but not more than 10% by mass. Examples of particularly preferable ranges are from at least 3% by mass to not more than 10% by mass, from at least 3% by mass to not more than 8% by mass, from at least 3% by mass to not more than 6% by mass, from at least 3% by mass to not more than 4% by mass, from at least 4% by mass to not more than 10% by mass, from at least 6% by mass to not more than 10% by mass, and from at least 8% by mass to not more than 10% by mass.

In the liquid crystal composition of the present invention, the amount of the compound represented by formula (45.3) is determined with due consideration of the solubility at low temperature, the transition temperature and the electrical reliability and the like, and relative to the total mass of the liquid crystal composition of the present invention, the amount is preferably at least 1% by mass but not more than 25% by mass, more preferably at least 3% by mass but not more than 20% by mass, still more preferably at least 3% by mass but not more than 15% by mass, and particularly preferably at least 3% by mass but not more than 10% by mass. Examples of particularly preferable ranges are from at least 3% by mass to not more than 10% by mass, from at least 3% by mass to not more than 8% by mass, from at least 3% by mass to not more than 6% by mass, from at least 3% by mass to not more than 4% by mass, from at least 4% by mass to not more than 10% by mass, from at least 6% by mass to not more than 10% by mass, and from at least 8% by mass to not more than 10% by mass.

In the liquid crystal composition of the present invention, the amount of the compound represented by formula (45.4) is determined with due consideration of the solubility at low temperature, the transition temperature and the electrical reliability and the like, and relative to the total mass of the liquid crystal composition of the present invention, the amount is preferably at least 1% by mass but not more than 25% by mass, more preferably at least 3% by mass but not more than 20% by mass, still more preferably at least 3% by mass but not more than 15% by mass, and particularly preferably at least 3% by mass but not more than 10% by mass.

Moreover, the compound represented by general formula (XI) used in the liquid crystal composition of the present invention is preferably a compound represented by general formula (XI-2).

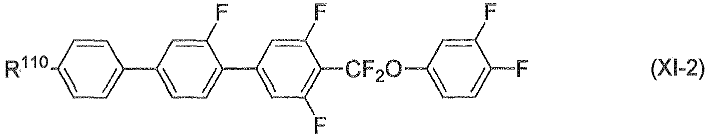

In the formula, R¹¹⁰ represents an alkyl group having 1 to 5 carbon atoms, an alkenyl group having 2 to 5 carbon atoms or an alkoxy group having 1 to 4 carbon atoms.

There are no particular limitations on the types of these compounds that can be combined, and a plurality of compounds represented by general formula (XI-2) can be combined as appropriate in each embodiment, with due consideration of properties such as the solubility at low temperature, the transition temperature, the electrical reliability and the birefringence. For example, in one embodiment of the present invention, a single type of compound may be used, in another embodiment, two types of compounds may be combined, and in yet another embodiment, three or more types of compounds may be combined.

The amount of the compound represented by general formula (XI-2) is determined with due consideration of the solubility at low temperature, the transition temperature and the electrical reliability and the like, and relative to the total mass of the liquid crystal composition of the present invention, the amount is preferably at least 1% by mass but not more than 20% by mass, more preferably at least 3% by mass but not more than 20% by mass, still more preferably at least 4% by mass but not more than 20% by mass, still more preferably at least 6% by mass but not more than 15% by mass, and particularly preferably at least 9% by mass but not more than 12% by mass.

More specifically, the compound represented by general formula (XI-2) used in the liquid crystal composition of the present invention is preferably a compound represented by formula (45.11) to formula (45.14), and of these compounds, preferably includes a compound represented by formula (45.12) to formula (45.14), and more preferably includes a compound represented by formula (45.12).

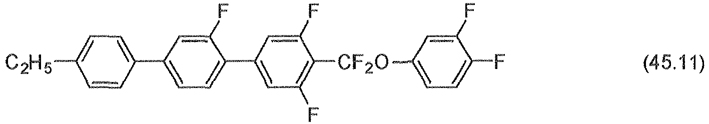

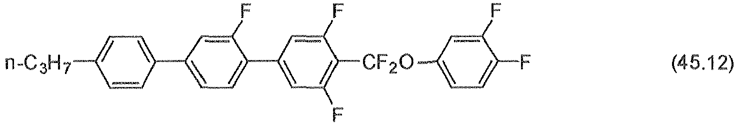

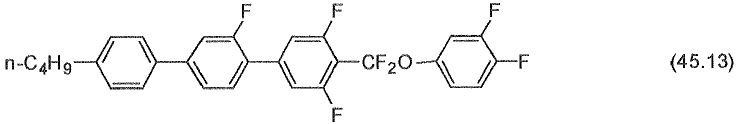

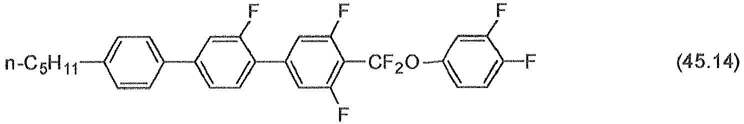

Moreover, the compound represented by general formula (X) is preferably a compound selected from the group of compounds represented by general formula (XII).

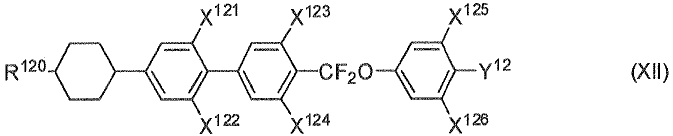

In the formula, X¹²¹ to X¹²⁶ independently represent a fluorine atom or a hydrogen atom, R¹²⁰ represents an alkyl group having 1 to 5 carbon atoms, an alkenyl group having 2 to 5 carbon atoms or an alkoxy group having 1 to 4 carbon atoms, and Y¹² represents a fluorine atom or -OCF₃.

Although there are no particular limitations on the types of these compounds that can be combined, one to three or more types of compounds are preferably combined from among the plurality of compounds represented by general formula (XII), with due consideration of properties such as the solubility at low temperature, the transition temperature, the electrical reliability and the birefringence, and a combination of 1 to 4 or more types of compounds is particularly preferable.

Moreover, the compound represented by general formula (XII) used in the liquid crystal composition of the present invention is preferably a compound represented by general formula (XII-1).

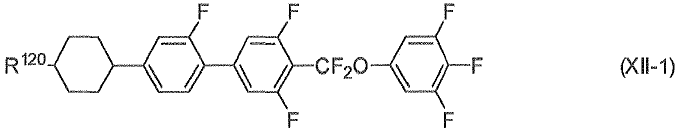

In the formula, R¹²⁰ represents an alkyl group having 1 to 5 carbon atoms, an alkenyl group having 2 to 5 carbon atoms or an alkoxy group having 1 to 4 carbon atoms.

Although there are no particular limitations on the types of these compounds that can be combined, one compound or two or more types of compounds are preferably combined from among the plurality of compounds represented by general formula (XII-1), with due consideration of properties such as the solubility at low temperature, the transition temperature, the electrical reliability and the birefringence, and a combination of one to three or more types of compounds is particularly preferable.

The amount of the compound represented by general formula (XII-1) is determined with due consideration of the solubility at low temperature, the transition temperature and the electrical reliability and the like, and relative to the total mass of the liquid crystal composition of the present invention, the amount is preferably at least 1% by mass but not more than 15% by mass, more preferably at least 2% by mass but not more than 10% by mass, still more preferably at least 3% by mass but not more than 8% by mass, and particularly preferably at least 4% by mass but not more than 6% by mass.

More specifically, the compound represented by general formula (XII-1) used in the liquid crystal composition of the present invention is preferably a compound represented by formula (46.1) to formula (46.4), and of these compounds, preferably includes a compound represented by formula (46.2) to formula (46.4).

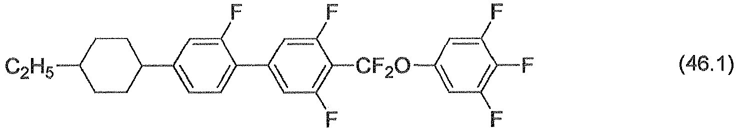

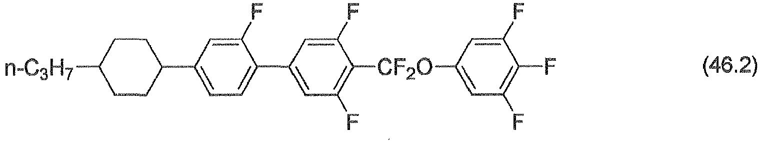

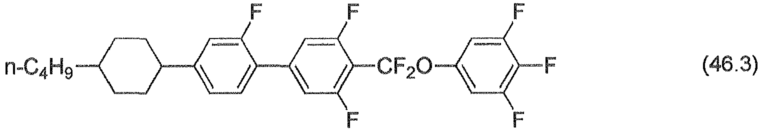

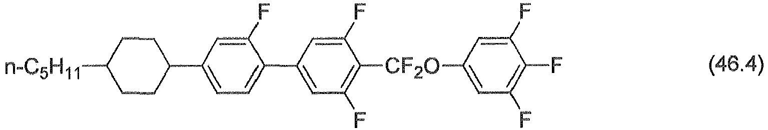

Further, the compound represented by general formula (XII) used in the liquid crystal composition of the present invention is preferably a compound represented by general formula (XII-2). 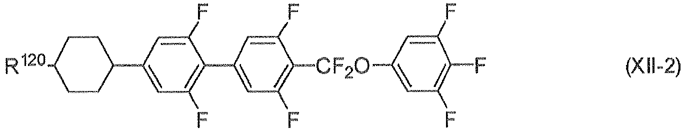 In the formula, R¹²⁰ represents an alkyl group having 1 to 5 carbon atoms, an alkenyl group having 2 to 5 carbon atoms or an alkoxy group having 1 to 4 carbon atoms.

Although there are no particular limitations on the types of these compounds that can be combined, one compound or two or more types of compounds are preferably combined from among the plurality of compounds represented by general formula (XII-2), with due consideration of properties such as the solubility at low temperature, the transition temperature, the electrical reliability and the birefringence, and a combination of one to three or more types of compounds is particularly preferable.

The amount of the compound represented by general formula (XII-2) is determined with due consideration of the solubility at low temperature, the transition temperature and the electrical reliability and the like, and relative to the total mass of the liquid crystal composition of the present invention, the amount is preferably at least 1% by mass but not more than 20% by mass, more preferably at least 3% by mass but not more than 20% by mass, still more preferably at least 4% by mass but not more than 17% by mass, still more preferably at least 6% by mass but not more than 15% by mass, and particularly preferably at least 9% by mass but not more than 13% by mass.

More specifically, the compound represented by general formula (XII-2) used in the liquid crystal composition of the present invention is preferably a compound represented by formula (47.1) to formula (47.4), and of these compounds, preferably includes a compound represented by formula (47.2) to formula (47.4).

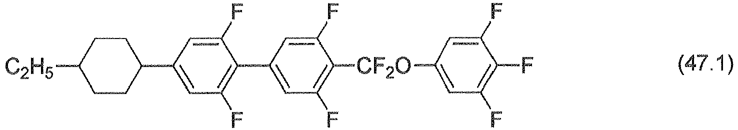

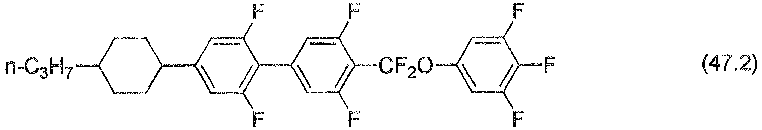

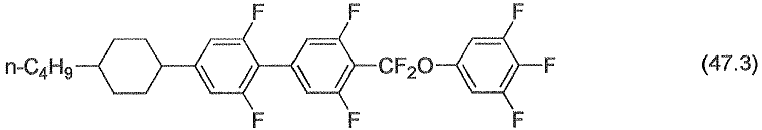

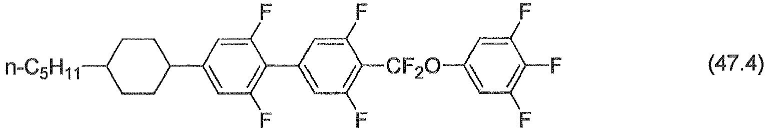

In addition, the compound represented by general formula (M) is preferably a compound selected from the group of compounds represented by general formula (XIII).

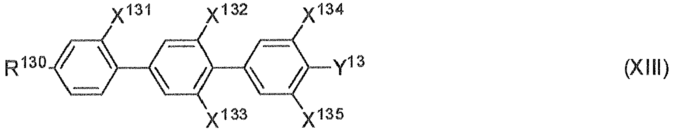

In the formula, X¹³¹ to X¹³⁵ independently represent a fluorine atom or a hydrogen atom, R¹³⁰ represents an alkyl group having 1 to 5 carbon atoms, an alkenyl group having 2 to 5 carbon atoms or an alkoxy group having 1 to 4 carbon atoms, and Y¹³ represents a fluorine atom or -OCF₃.

Although there are no particular limitations on the types of these compounds that can be combined, one or two types of compounds are preferably combined from among the plurality of compounds represented by general formula (XIII), and a combination of one to three types of compounds is more preferable, and a combination of 1 to 4 types is even more preferable.

The amount of the compound represented by general formula (XIII) has an upper limit and lower limit for each embodiment which are determined with due consideration of properties such as the solubility at low temperature, the transition temperature, the electrical properties and the birefringence.

For example, in one embodiment of the present invention, the amount of the above compound relative to the total mass of the liquid crystal composition of the present invention is from 2 to 30% by mass, whereas in another embodiment, the amount of the compound is from 4 to 30% by mass, in yet another embodiment, the amount of the compound is from 5 to 30% by mass, in yet another embodiment, the amount of the compound is from 7 to 30% by mass, in yet another embodiment, the amount of the compound is from 9 to 30% by mass, in yet another embodiment, the amount of the compound is from 11 to 30% by mass, and in yet another embodiment, the amount of the compound is from 13 to 30% by mass. Further, in yet another embodiment, the amount of the compound is from 14 to 30% by mass. In yet another embodiment, the amount of the compound is from 16 to 30% by mass. In yet another embodiment, the amount of the compound is from 20 to 30% by mass.

Furthermore, in one embodiment of the present invention, the amount of the above compound relative to the aforementioned total mass is from 2 to 30% by mass, in another embodiment, the amount of the compound is from 2 to 25% by mass, in yet another embodiment, the amount of the compound is from 2 to 20% by mass, in yet another embodiment, the amount of the compound is from 2 to 15% by mass, in yet another embodiment, the amount of the compound is from 2 to 10% by mass, and in yet another embodiment, the amount of the compound is from 2 to 5% by mass.

When the liquid crystal composition of the present invention is used for a liquid crystal display element having a small cell gap, it is appropriate to increase the amount of the compound represented by general formula (XIII). When the liquid crystal composition is used in a liquid crystal display element having a low drive voltage, it is appropriate to increase the amount of the compound represented by general formula (XIII). Further, when the liquid crystal composition is used for a liquid crystal display element used in a low-temperature environment, it is appropriate to reduce the amount of the compound represented by general formula (XIII). In the case of a liquid crystal composition used for a liquid crystal display element having a fast response speed, it is appropriate to reduce the amount of the compound represented by general formula (XIII).

Further, the compound represented by general formula (XIII) is preferably a compound represented by general formula (XIII-1).

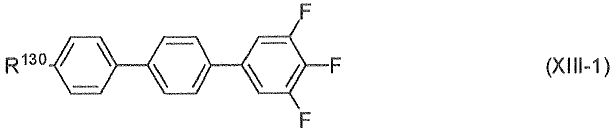

In the formula, R¹³⁰ represents an alkyl group having 1 to 5 carbon atoms, an alkenyl group having 2 to 5 carbon atoms or an alkoxy group having 1 to 4 carbon atoms.

The amount of the compound represented by general formula (XIII-1) relative to the total mass of the liquid crystal composition of the present invention is preferably at least 1% by mass but not more than 25% by mass, more preferably at least 3% by mass but not more than 25% by mass, still more preferably at least 5% by mass but not more than 20% by mass, and particularly preferably at least 10% by mass but not more than 15% by mass.

The compound represented by general formula (XIII-1) is preferably a compound represented by formula (48.1) to formula (48.4), and is more preferably a compound represented by formula (48.2).

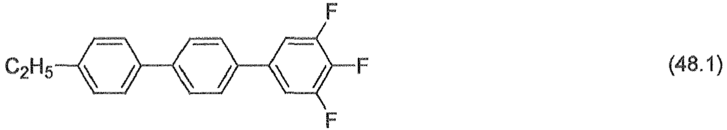

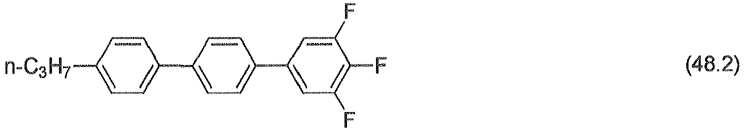

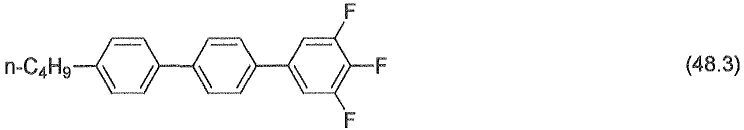

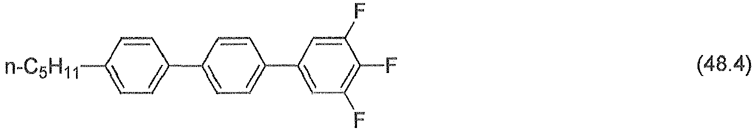

Moreover, the compound represented by general formula (XIII) is preferably a compound represented by general formula (XIII-2).

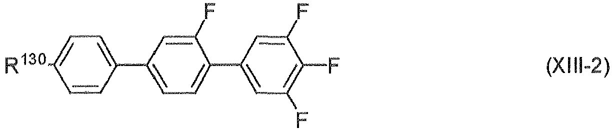

In the formula, R¹³⁰ represents an alkyl group having 1 to 5 carbon atoms, an alkenyl group having 2 to 5 carbon atoms or an alkoxy group having 1 to 4 carbon atoms.

Although there are no particular limitations on the types of these compounds that can be combined, one compound or two or more types of compounds are preferably combined from among the plurality of compounds represented by general formula (XIII-2).

The amount of the compound represented by general formula (XIII-2) relative to the total mass of the liquid crystal composition of the present invention is preferably at least 5% by mass but not more than 25% by mass, more preferably at least 6% by mass but not more than 25% by mass, still more preferably at least 8% by mass but not more than 20% by mass, and particularly preferably at least 10% by mass but not more than 15% by mass.

The compound represented by general formula (XIII-2) is preferably a compound represented by formula (49.1) to formula (49.4), and is more preferably a compound represented by formula (49.1) or formula (49.2).

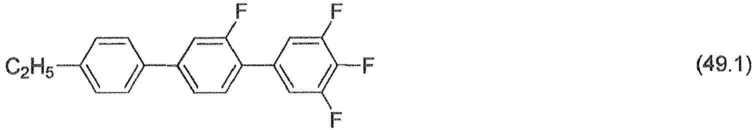

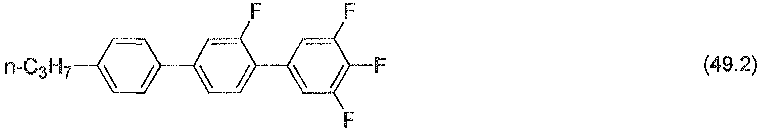

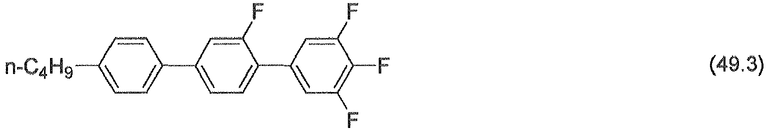

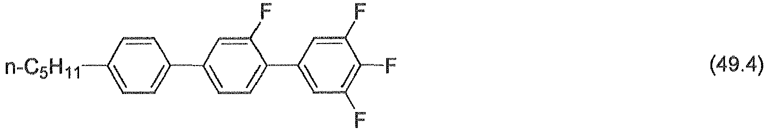

Moreover, the compound represented by general formula (XIII) is preferably a compound represented by general formula (XIII-3).

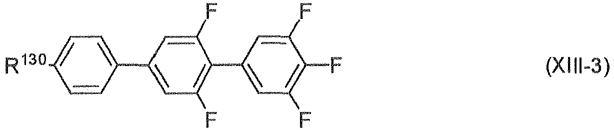

In the formula, R¹³⁰ represents an alkyl group having 1 to 5 carbon atoms, an alkenyl group having 2 to 5 carbon atoms or an alkoxy group having 1 to 4 carbon atoms.

Although there are no particular limitations on the types of these compounds that can be combined, one compound or two or more types of compounds are preferably combined from among the plurality of compounds represented by general formula (XIII-3).

The amount of the compound represented by general formula (XIII-3) relative to the total mass of the liquid crystal composition of the present invention is preferably at least 2% by mass but not more than 20% by mass, more preferably at least 4% by mass but not more than 20% by mass, still more preferably at least 9% by mass but not more than 17% by mass, and particularly preferably at least 11% by mass but not more than 14% by mass.

The compound represented by general formula (XIII-3) is preferably a compound represented by formula (50.1) to formula (50.4), and is more preferably a compound represented by formula (50.1) or formula (50.2).

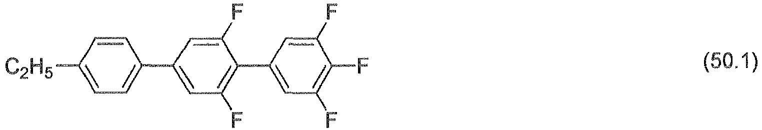

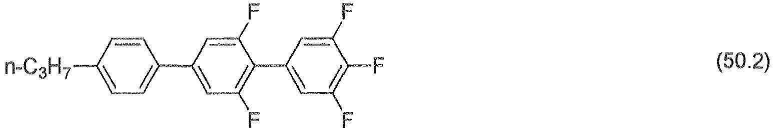

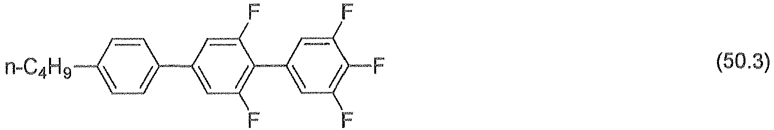

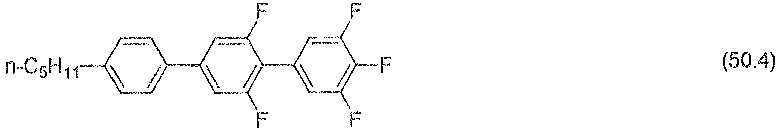

In addition, the compound represented by general formula (M) is preferably a compound selected from the group of compounds represented by general formula (XIV).

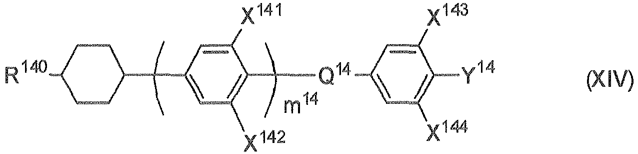

In the formula, R¹⁴⁰ represents an alkyl group having 1 to 7 carbon atoms, an alkenyl group having 2 to 7 carbon atoms or an alkoxy group having 1 to 7 carbon atoms, X¹⁴¹ to X¹⁴⁴ independently represent a fluorine atom or a hydrogen atom, Y¹⁴ represents a fluorine atom, a chlorine atom or -OCF₃, Q¹⁴ represents a single bond, -COO- or -CF₂O-, and m¹⁴ represents 0 or 1.

There are no particular limitations on the types of these compounds that can be combined, and a plurality of compounds represented by general formula (XIV) can be combined as appropriate with due consideration of properties such as the solubility at low temperature, the transition temperature, the electrical reliability and the birefringence. For example, in one embodiment of the present invention, a single compound may be used. Alternatively, in another embodiment of the present invention, two types of compounds may be used. Further, in yet another embodiment of the present invention, three types of compounds may be used. Further, in yet another embodiment of the present invention, 4 types of compounds may be used. Furthermore, in yet another embodiment of the present invention, 5 types of compounds may be used. Moreover, in yet another embodiment of the present invention, 6 or more types of compounds may be used.

The amount used of the compound represented by general formula (XIV) has a preferred upper limit and lower limit which is determined for each embodiment with due consideration of the solubility at low temperature, the transition temperature, the electrical reliability, and the birefringence and the like.

For example, in one embodiment of the present invention, the amount of the above compound relative to the total mass of the liquid crystal composition of the present invention is from 3 to 40% by mass, in another embodiment, the amount of the compound is from 7 to 40% by mass, in yet another embodiment, the amount of the compound is from 8 to 40% by mass, in yet another embodiment, the amount of the compound is from 11 to 40% by mass, in yet another embodiment, the amount of the compound is from 12 to 40% by mass, in yet another embodiment, the amount of the compound is from 16 to 40% by mass, and in yet another embodiment, the amount of the compound is from 18 to 40% by mass. Further, in yet another embodiment, the amount of the compound is from 19 to 40% by mass. In yet another embodiment, the amount of the compound is from 22 to 40% by mass. Moreover, in yet another embodiment, the amount of the compound is from 25 to 40% by mass.

Further, in one embodiment of the present invention, the amount of the above compound relative to the aforementioned total mass is from 3 to 40% by mass, in another embodiment, the amount of the compound is from 3 to 35% by mass, in yet another embodiment, the amount of the compound is from 3 to 30% by mass, in yet another embodiment, the amount of the compound is from 3 to 25% by mass, in yet another embodiment, the amount of the compound is from 3 to 20% by mass, and in yet another embodiment, the amount of the compound is from 3 to 15% by mass.

When the liquid crystal composition of the present invention is used in a liquid crystal display element having a low drive voltage, it is appropriate to increase the amount of the compound represented by general formula (XIV). Further, in the case of a liquid crystal composition used for a liquid crystal display element having a fast response speed, it is appropriate to reduce the amount of the compound represented by general formula (XIV).

Moreover, the compound represented by general formula (XIV) is preferably a compound represented by general formula (XIV-1).

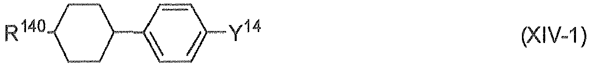

In the formula, R¹⁴⁰ represents an alkyl group having 1 to 7 carbon atoms, an alkenyl group having 2 to 7 carbon atoms or an alkoxy group having 1 to 7 carbon atoms, and Y¹⁴ represents a fluorine atom, a chlorine atom or -OCF₃.

There are no particular limitations on the types of these compounds that can be combined, and one to three types of compounds are preferably combined from among the plurality of compounds represented by general formula (XIV-1), with due consideration of properties such as the solubility at low temperature, the transition temperature, the electrical reliability and the birefringence.

Further, the compound represented by general formula (XIV-1) is preferably a compound represented by general formula (XIV-1-1).

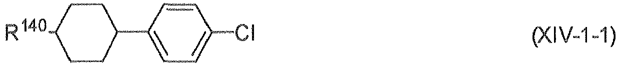

In the formula, R¹⁴⁰ represents an alkyl group having 1 to 7 carbon atoms, an alkenyl group having 2 to 7 carbon atoms or an alkoxy group having 1 to 7 carbon atoms.

The amount of the compound represented by general formula (XIV-1-1) relative to the total mass of the liquid crystal composition of the present invention is preferably at least 2% by mass, more preferably 4% by mass or more, still more preferably 7% by mass or more, still more preferably 10% by mass or more, and particularly preferably 18% by mass or more. Further, considering the solubility at low temperature, the transition temperature and the electrical reliability and the like, the maximum amount is preferably restricted to not more than 30% by mass, and is more preferably 27% by mass or less, still more preferably 24% by mass or less, and particularly preferably less than 21% by mass.

More specifically, the compound represented by general formula (XIV-1-1) is preferably a compound represented by formula (51.1) to formula (51.4), and is more preferably a compound represented by formula (51.1).

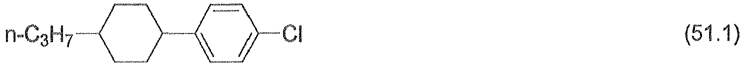

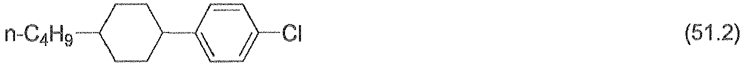

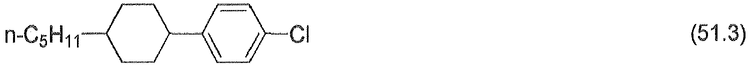

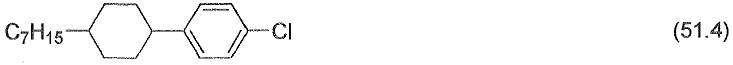

Moreover, the compound represented by general formula (XIV-1) is preferably a compound represented by general formula (XIV-1-2).

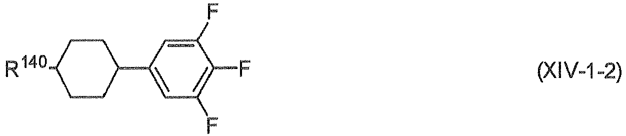

In the formula, R¹⁴⁰ represents an alkyl group having 1 to 7 carbon atoms, an alkenyl group having 2 to 7 carbon atoms or an alkoxy group having 1 to 7 carbon atoms.

The amount of the compound represented by general formula (XIV-1-2) is determined with due consideration of the solubility at low temperature, the transition temperature and the electrical reliability and the like, and relative to the total mass of the liquid crystal composition of the present invention, the amount is preferably at least 1% by mass but not more than 15% by mass, more preferably at least 3% by mass but not more than 13% by mass, still more preferably at least 5% by mass but not more than 11% by mass, and particularly preferably at least 7% by mass but not more than 9% by mass.

More specifically, the compound represented by general formula (XIV-1-2) is preferably a compound represented by formula (52.1) to formula (52.4), and of these compounds, preferably includes a compound represented by formula (52.4).

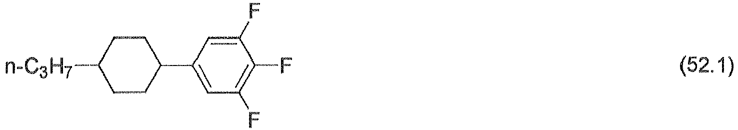

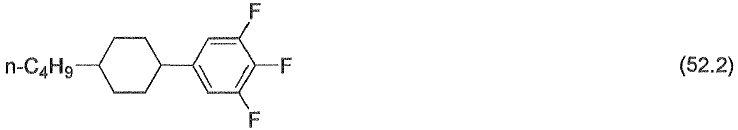

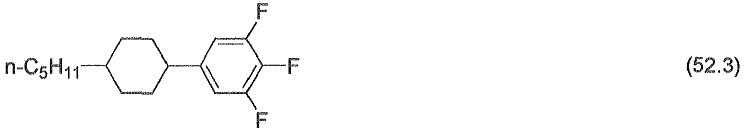

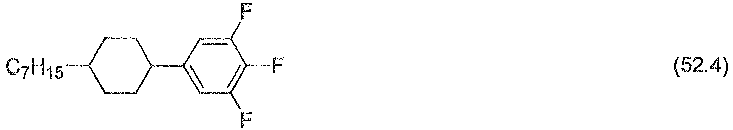

Furthermore, the compound represented by general formula (XIV) is preferably a compound represented by general formula (XIV-2).

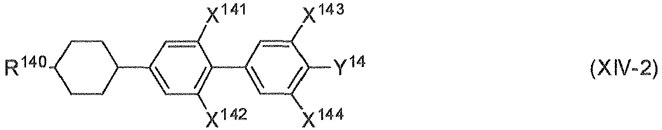

In the formula, R¹⁴⁰ represents an alkyl group having 1 to 5 carbon atoms, an alkenyl group having 2 to 5 carbon atoms or an alkoxy group having 1 to 4 carbon atoms, X¹⁴¹ to X¹⁴⁴ independently represent a fluorine atom or a hydrogen atom, and Y¹⁴ represents a fluorine atom, a chlorine atom or -OCF₃.

There are no particular limitations on the types of these compounds that can be combined, and a plurality of compounds represented by general formula (XIV-2) can be combined as appropriate with due consideration of properties such as the solubility at low temperature, the transition temperature, the electrical reliability and the birefringence. For example, in one embodiment of the present invention, a single compound may be used. Alternatively, in another embodiment of the present invention, two types of compounds may be used. Further, in yet another embodiment of the present invention, three types of compounds may be used. Further, in yet another embodiment of the present invention, 4 types of compounds may be used. Furthermore, in yet another embodiment of the present invention, 5 or more types of compounds may be used.

The amount used of the compound represented by general formula (XIV-2) has a preferred upper limit and lower limit which is determined for each embodiment with due consideration of properties such as the solubility at low temperature, the transition temperature, the electrical reliability, and the birefringence.

For example, in one embodiment of the present invention, the amount of the above compound relative to the total mass of the liquid crystal composition of the present invention is from 3 to 40% by mass, in another embodiment, the amount of the compound is from 7 to 40% by mass, in yet another embodiment, the amount of the compound is from 8 to 40% by mass, in yet another embodiment, the amount of the compound is from 10 to 40% by mass, in yet another embodiment, the amount of the compound is from 11 to 40% by mass, in yet another embodiment, the amount of the compound is from 12 to 40% by mass, and in yet another embodiment, the amount of the compound is from 18 to 40% by mass. Further, in yet another embodiment, the amount of the compound is from 19 to 40% by mass. In yet another embodiment, the amount of the compound is from 21 to 40% by mass. Moreover, in yet another embodiment, the amount of the compound is from 22 to 40% by mass.

Further, in one embodiment of the present invention, the amount of the above compound relative to the aforementioned total mass is from 3 to 40% by mass, in another embodiment, the amount of the compound is from 3 to 35% by mass, in yet another embodiment, the amount of the compound is from 3 to 25% by mass, in yet another embodiment, the amount of the compound is from 3 to 20% by mass, in yet another embodiment, the amount of the compound is from 3 to 15% by mass, and in yet another embodiment, the amount of the compound is from 3 to 10% by mass.

When the liquid crystal composition of the present invention is used in a liquid crystal display element having a low drive voltage, it is appropriate to increase the amount of the compound represented by general formula (XIV-2). Further, in the case of a liquid crystal composition used for a liquid crystal display element having a fast response speed, it is appropriate to reduce the amount of the compound represented by general formula (XIV-2).

The compound represented by general formula (XIV-2) is preferably a compound represented by general formula (XIV-2-1).

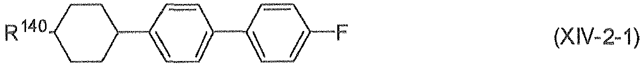

In the formula, R¹⁴⁰ represents an alkyl group having 1 to 5 carbon atoms, an alkenyl group having 2 to 5 carbon atoms, or an alkoxy group having 1 to 4 carbon atoms.

The amount of the compound represented by general formula (XIV-2-1) is determined with due consideration of the solubility at low temperature, the transition temperature and the electrical reliability and the like, and relative to the total mass of the liquid crystal composition of the present invention, the amount is preferably at least 1% by mass but not more than 15% by mass, more preferably at least 3% by mass but not more than 13% by mass, still more preferably at least 5% by mass but not more than 11% by mass, and particularly preferably at least 7% by mass but not more than 9% by mass.

More specifically, the compound represented by general formula (XIV-2-1) is preferably a compound represented by formula (53.1) to formula (53.4), and of these compounds, preferably includes a compound represented by formula (53.4).

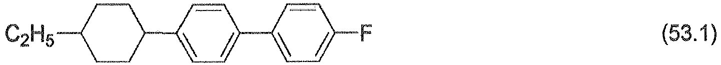

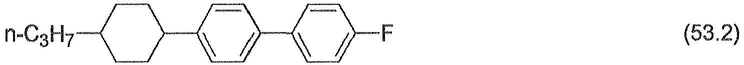

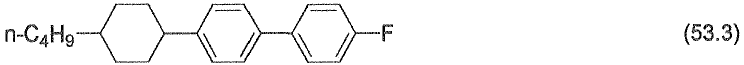

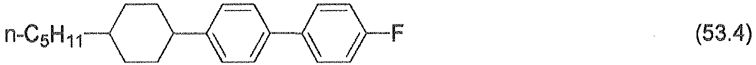

Moreover, the compound represented by general formula (XIV-2) is preferably a compound represented by general formula (XIV-2-2).

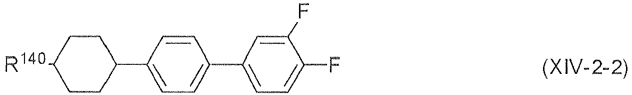

In the formula, R¹⁴⁰ represents an alkyl group having 1 to 5 carbon atoms, an alkenyl group having 2 to 5 carbon atoms, or an alkoxy group having 1 to 4 carbon atoms.

The amount of the compound represented by general formula (XIV-2-2) is determined with due consideration of the solubility at low temperature, the transition temperature and the electrical reliability and the like, and relative to the total mass of the liquid crystal composition of the present invention, the amount is preferably at least 3% by mass but not more than 20% by mass, more preferably at least 6% by mass but not more than 17% by mass, still more preferably at least 9% by mass but not more than 15% by mass, and particularly preferably at least 12% by mass but not more than 14% by mass.

More specifically, the compound represented by general formula (XIV-2-2) is preferably a compound represented by formula (54.1) to formula (54.4), and of these compounds, preferably includes a compound represented by formula (54.2) and/or formula (54.4).

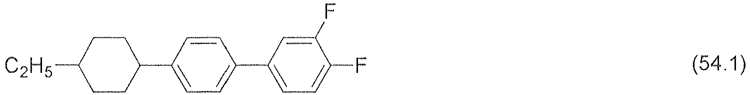

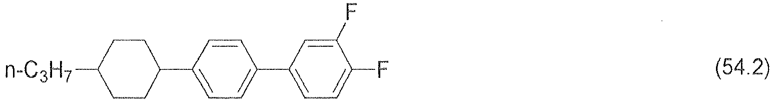

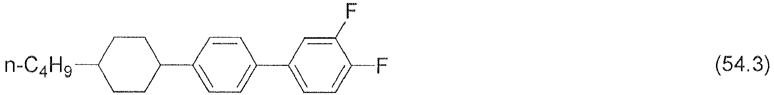

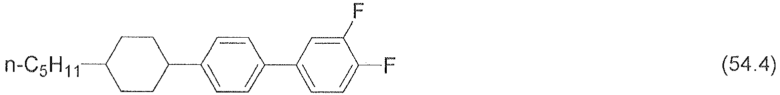

In the liquid crystal composition of the present invention, the amount of the compound represented by formula (54.2), relative to the total mass of the liquid crystal composition of the present invention, is preferably at least 5% by mass but not more than 35% by mass, more preferably at least 5% by mass but not more than 25% by mass, still more preferably at least 5% by mass but not more than 22% by mass, still more preferably at least 8% by mass but not more than 20% by mass, still more preferably at least 10% by mass but not more than 17% by mass, still more preferably at least 10% by mass but not more than 15% by mass, and particularly preferably at least 10% by mass but not more than 12% by mass.

Moreover, the compound represented by general formula (XIV-2) is preferably a compound represented by general formula (XIV-2-3).

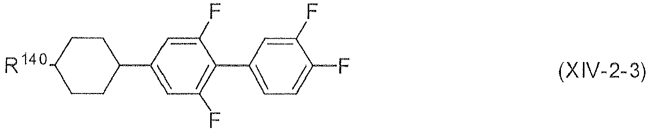

In the formula, R¹⁴⁰ represents an alkyl group having 1 to 5 carbon atoms, an alkenyl group having 2 to 5 carbon atoms, or an alkoxy group having 1 to 4 carbon atoms.

The amount of the compound represented by general formula (XIV-2-3) is determined with due consideration of the solubility at low temperature, the transition temperature and the electrical reliability and the like, and relative to the total mass of the liquid crystal composition of the present invention, the amount is preferably at least 5% by mass but not more than 30% by mass, more preferably at least 9% by mass but not more than 27% by mass, still more preferably at least 12% by mass but not more than 24% by mass, and particularly preferably at least 12% by mass but not more than 20% by mass.

More specifically, the compound represented by general formula (XIV-2-3) is preferably a compound represented by formula (55.1) to formula (55.4), and of these compounds, preferably includes a compound represented by formula (55.2) and/or formula (55.4).

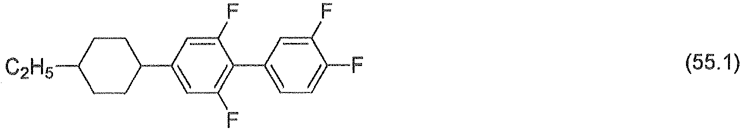

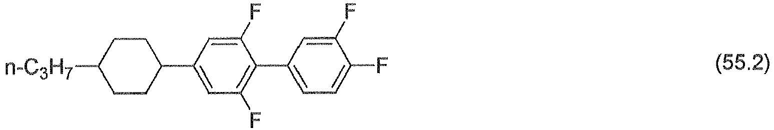

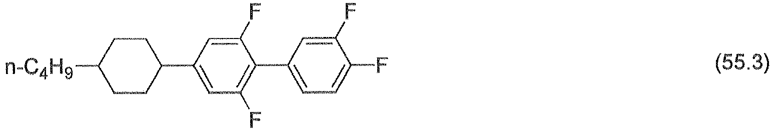

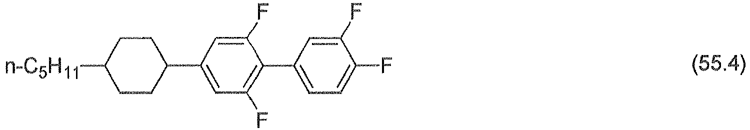

Moreover, the compound represented by general formula (XIV-2) is preferably a compound represented by general formula (XIV-2-4).

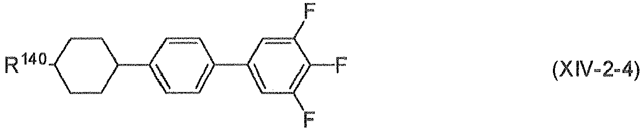

In the formula, R¹⁴⁰ represents an alkyl group having 1 to 5 carbon atoms, an alkenyl group having 2 to 5 carbon atoms, or an alkoxy group having 1 to 4 carbon atoms.

There are no particular limitations on the types of these compounds that can be combined, and a plurality of compounds represented by general formula (XIV-2-4) can be combined as appropriate in each embodiment, with due consideration of properties such as the solubility at low temperature, the transition temperature, the electrical reliability and the birefringence. For example, in one embodiment of the present invention, a single type of compound may be used. Further, in another embodiment of the present invention, two types of compounds may be used. In yet another embodiment, three or more types of compounds may be used.

The amount of the compound represented by general formula (XIV-2-4) has a preferred upper limit and lower limit for each embodiment which are determined with due consideration of properties such as the solubility at low temperature, the transition temperature, the electrical properties and the birefringence.

For example, in one embodiment of the present invention, the amount of the above compound relative to the total mass of the liquid crystal composition of the present invention is from 2 to 35% by mass, whereas in another embodiment, the amount of the compound is from 5 to 35% by mass, in yet another embodiment, the amount of the compound is from 8 to 35% by mass, in yet another embodiment, the amount of the compound is from 9 to 35% by mass, in yet another embodiment, the amount of the compound is from 10 to 35% by mass, in yet another embodiment, the amount of the compound is from 18 to 35% by mass, and in yet another embodiment, the amount of the compound is from 21 to 35% by mass. Further, in yet another embodiment, the amount of the compound is from 22 to 35% by mass. In yet another embodiment, the amount of the compound is from 24 to 35% by mass.

Furthermore, in one embodiment of the present invention, the amount of the above compound relative to the aforementioned total mass is from 2 to 35% by mass, in another embodiment, the amount of the compound is from 2 to 30% by mass, in yet another embodiment, the amount of the compound is from 2 to 25% by mass, in yet another embodiment, the amount of the compound is from 2 to 20% by mass, in yet another embodiment, the amount of the compound is from 2 to 15% by mass, and in yet another embodiment, the amount of the compound is from 2 to 10% by mass.

When the liquid crystal composition of the present invention is used in a liquid crystal display element having a low drive voltage, it is appropriate to increase the amount of the compound represented by general formula (XIV-2-4). Further, in the case of a liquid crystal composition used for a liquid crystal display element having a fast response speed, it is appropriate to reduce the amount of the compound represented by general formula (XIV-2-4).

More specifically, the compound represented by general formula (XIV-2-4) is preferably a compound represented by formula (56.1) to formula (56.4), and of these compounds, preferably includes a compound represented by formula (56.1), formula (56.2) and/or formula (56.4).

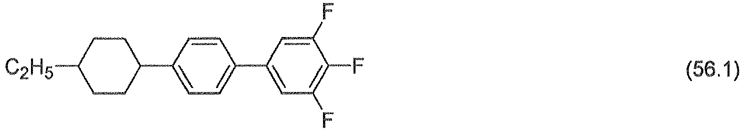

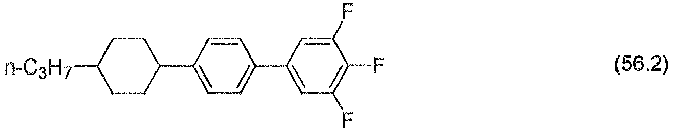

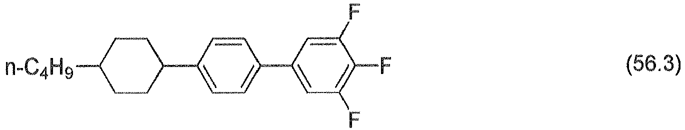

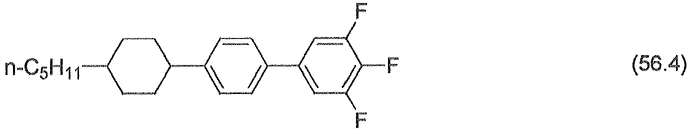

Moreover, the compound represented by general formula (XIV-2) is preferably a compound represented by general formula (XIV-2-5).

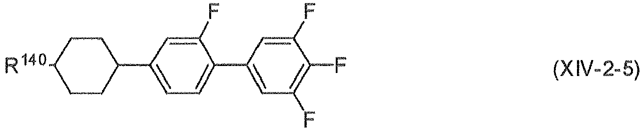

In the formula, R¹⁴⁰ represents an alkyl group having 1 to 5 carbon atoms, an alkenyl group having 2 to 5 carbon atoms, or an alkoxy group having 1 to 4 carbon atoms.

The amount of the compound represented by general formula (XIV-2-5) is determined with due consideration of the solubility at low temperature, the transition temperature and the electrical reliability and the like, and relative to the total mass of the liquid crystal composition of the present invention, the amount is preferably at least 5% by mass but not more than 25% by mass, more preferably at least 10% by mass but not more than 22% by mass, still more preferably at least 13% by mass but not more than 18% by mass, and particularly preferably at least 13% by mass but not more than 15% by mass.

More specifically, the compound represented by general formula (XIV-2-5) is preferably a compound represented by formula (57.1) to formula (57.4), and of these compounds, preferably includes a compound represented by formula (57.1).

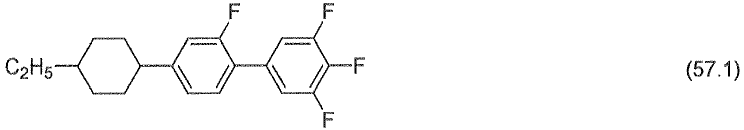

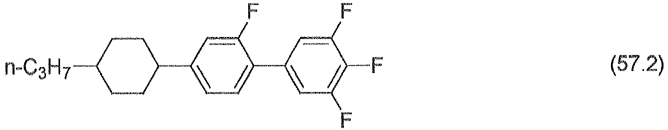

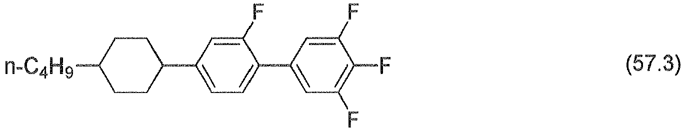

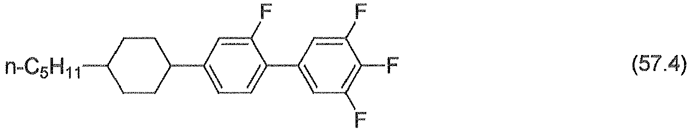

Moreover, the compound represented by general formula (XIV-2) is preferably a compound represented by general formula (XIV-2-6).

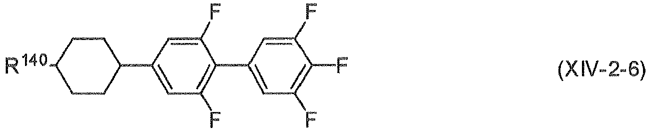

In the formula, R¹⁴⁰ represents an alkyl group having 1 to 5 carbon atoms, an alkenyl group having 2 to 5 carbon atoms, or an alkoxy group having 1 to 4 carbon atoms.

The amount of the compound represented by general formula (XIV-2-6) is determined with due consideration of the solubility at low temperature, the transition temperature and the electrical reliability and the like, and relative to the total mass of the liquid crystal composition of the present invention, the amount is preferably at least 5% by mass but not more than 25% by mass, more preferably at least 10% by mass but not more than 22% by mass, still more preferably at least 15% by mass but not more than 20% by mass, and particularly preferably at least 15% by mass but not more than 17% by mass.

More specifically, the compound represented by general formula (XIV-2-6) is preferably a compound represented by formula (58.1) to formula (58.4), and of these compounds, preferably includes a compound represented by formula (58.2).

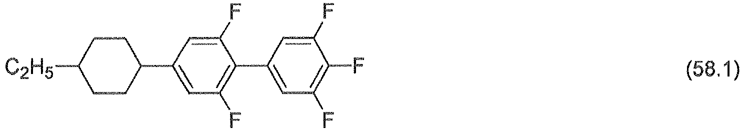

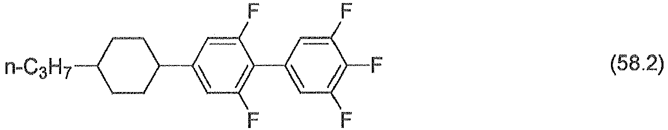

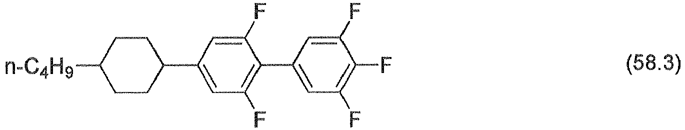

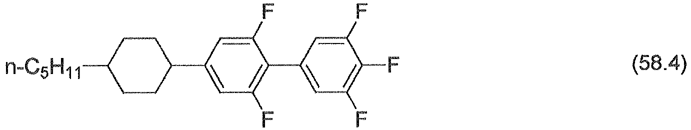

The compounds used in the present invention do not have a peracid (-CO-OO-) structure within the molecule. Further, when the reliability and long-term stability of the liquid crystal composition are deemed important, it is preferable not to use compounds having a carbonyl group. Further, when stability relative to UV irradiation is deemed important, it is desirable not to use compounds that have been substituted with one or more chlorine atoms. It is also preferable to use only compounds in which all of the cyclic structures within the molecule are 6-membered rings.

The liquid crystal composition of the present invention preferably does not contain any compounds having structures within the molecule in which oxygen atoms are bonded together such as a peracid (-CO-OO-) structure.

When reliability and long-term stability of the liquid crystal composition are deemed important, the amount of compounds having a carbonyl group relative to the total mass of the composition is preferably not more than 5% by mass, more preferably 3% by mass or less, still more preferably 1% by mass or less, and most preferably essentially zero.

When stability relative to UV irradiation is deemed important, the amount of compounds that have been substituted with one or more chlorine atoms relative to the total mass of the composition is preferably not more than 15% by mass, more preferably 10% by mass or less, still more preferably 5% by mass or less, and most preferably essentially zero.

The amount of compounds in which all of the cyclic structures within the molecule are 6-membered rings is preferably as large as possible, and the amount of such compounds in which all of the cyclic structures within the molecule are 6-membered rings relative to the total mass of the composition is preferably at least 80% by mass, more preferably 90% by mass or more, and still more preferably 95% by mass or more, and it is most desirable that essentially the entire liquid crystal composition is composed only of compounds in which all of the cyclic structures within the molecule are 6-membered rings.

In order to suppress deterioration caused by oxidation of the liquid crystal composition, the amount of compounds having a cyclohexenylene group as a cyclic structure is preferably minimized, and the amount of such compounds having a cyclohexenylene group relative to the total mass of the composition is preferably not more than 10% by mass, more preferably 5% by mass or less, and still more preferably essentially zero.

When improving the viscosity and improving the Tni value are deemed important, the amount of compounds having, within the molecule, a 2-methylbenzene-1,4-diyl group in which a hydrogen atom may be substituted with a halogen is preferably minimized, and the amount of such compounds having a 2-methylbenzene-1,4-diyl group within the molecule relative to the total mass of the composition is preferably not more than 10% by mass, more preferably 5% by mass or less, and still more preferably essentially zero.

When a compound contained within the composition of the first embodiment of the present invention has an alkenyl group as a side chain, in those cases where the alkenyl group is bonded to a cyclohexane, the number of carbon atoms within the alkenyl group is preferably from 2 to 5 carbon atoms, whereas in those cases where the alkenyl group is bonded to a benzene, the number of carbon atoms within the alkenyl group is preferably 4 or 5 carbon atoms, and the unsaturated bond of the alkenyl group and the benzene are preferably not bonded directly.

In order to enable fabrication of a liquid crystal display element such as a PS mode device, a horizontal electric field PSA mode device, or a horizontal electric field PSVA mode device, a polymerizable compound may be included in the liquid crystal composition of the present invention. Examples of polymerizable compounds which may be used include photopolymerizable monomers and the like which undergo polymerization in the presence of energy rays such as light, and examples of the structures of these compounds include polymerizable compounds having a liquid crystal backbone in which a plurality of 6-membered rings are linked together, such as biphenyl derivatives and terphenyl derivatives. More specifically, difunctional monomers represented by general formula (XX) are preferable.

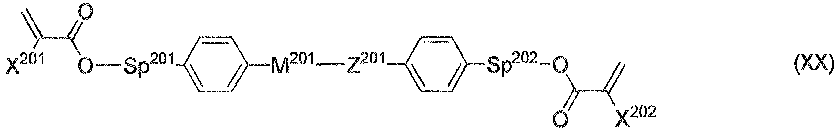

In the formula, X²⁰¹ and X²⁰² independently represent a hydrogen atom or a methyl group,
Sp²⁰¹ and Sp²⁰² independently represent a single bond, an alkylene having 1 to 8 carbon atoms, or -O-(CH₂)ₛ- (wherein s represents an integer of 2 to 7, and the oxygen atom is bonded to the aromatic ring),
Z²⁰¹ represents -OCH₂-, -CH₂O-, -COO-, -OCO-, -CF₂O-, -OCF₂-, -CH₂CH₂-,-CF₂CF₂-, -CH=CH-COO-, -CH=CH-OCO-, -COO-CH=CH-, -OCO-CH=CH-, -COO-CH₂CH₂-, -OCO-CH₂CH₂-, -CH₂CH₂-COO-, -CH₂CH₂-OCO-, -COO-CH₂-,-OCO-CH₂-, -CH₂-COO-, -CH₂-OCO-, -CY¹=CY²- (wherein Y¹ and Y² independently represent a fluorine atom or a hydrogen atom), -C≡C-, or a single bond,
M²⁰¹ represents a 1,4-phenylene group, atrans-1,4-cyclohexylene group or a single bond, and in all of the 1,4-phenylene groups within the formula, any arbitrary hydrogen atom may be substituted with a fluorine atom.

A diacrylate derivative in which X²⁰¹ and X²⁰² both represent hydrogen atoms and a dimethacrylate derivative in which X²⁰¹ and X²⁰² both represent methyl groups are both preferable, and a compound in which one of X²⁰¹ and X²⁰² represents a hydrogen atom and the other represents a methyl group is also preferred. In terms of the polymerization rates of these compounds, the diacrylate derivative is the fastest, the dimethacrylate derivative is the slowest, and the asymmetrical compound is midway between the other two, and the most appropriate configuration can be used depending on the intended application. In a PSA display element, a dimethacrylate derivative is particularly desirable.

Sp²⁰¹ and Sp²⁰² independently represent a single bond, an alkylene having 1 to 8 carbon atoms, or -O-(CH₂)ₛ-, and in a PSA display element, at least one of Sp²⁰¹ and Sp²⁰² is preferably a single bond, and compounds in which Sp²⁰¹ and Sp²⁰² both represents single bonds, or compounds in which one represents a single bond and the other represents an alkylene having 1 to 8 carbon atoms, or -O-(CH₂)ₛ- are preferred. In this case, an alkyl group having 1 to 4 carbon atoms is preferable, meaning s is preferably 1 to 4.

Z²⁰¹ preferably represents -OCH₂-, -CH₂O-, -COO-, -OCO-, -CF₂O-, -OCF₂-, -CH₂CH₂-, -CF₂CF₂- or a single bond, and more preferably represents -COO-, -OCO- or a single bond. A single bond is particularly preferable.

M²⁰¹ represents a 1,4-phenylene group in which any arbitrary hydrogen atom may be substituted with a fluorine atom, a trans-1,4-cyclohexylene group or a single bond, and is preferably a 1,4-phenylene group or a single bond. When M²⁰¹ represents a cyclic structure and not a single bond, Z²⁰¹ is preferably a linking group other than a single bond, whereas when M²⁰¹ is a single bond, Z²⁰¹ is preferably a single bond.

On the basis of these points, the cyclic structure between Sp²⁰¹ and Sp²⁰² in general formula (XX) is preferably one of the specific structures described below.

In general formula (XX), when M²⁰¹ represents a single bond and the cyclic structure is formed from two rings, cyclic structures represented by the following formula (XXa-1) to formula (XXa-5) are preferable, structures represented by formula (XXa-1) to formula (XXa-3) are more preferable, and a structure represented by formula (XXa-1) is particularly preferable.

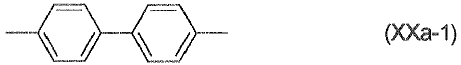

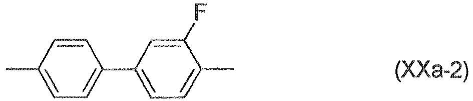

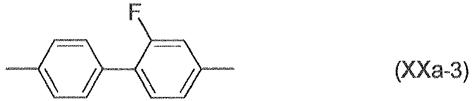

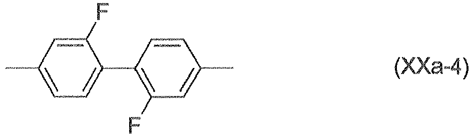

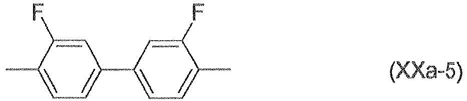

In the formulae, the two terminals are bonded to Sp²⁰¹ and Sp²⁰² respectively.

Polymerizable compounds containing these types of structures produce an alignment regulating force following polymerization which is ideal for PSA liquid crystal display elements, and because a favorable alignment state can be obtained, display irregularities are inhibited or eliminated.

For the reasons outlined above, compounds represented by general formula (XX-1) to general formula (XX-4) are particularly preferable as the polymerizable monomer, and of these, monomers of general formula (XX-2) are the most desirable.

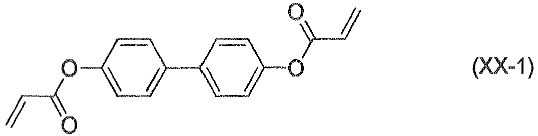

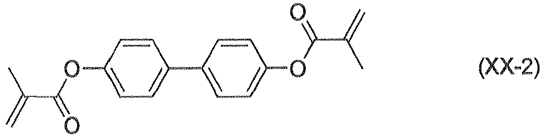

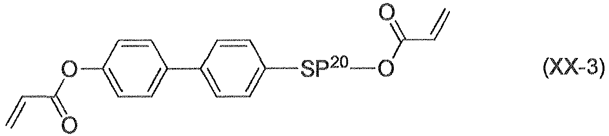

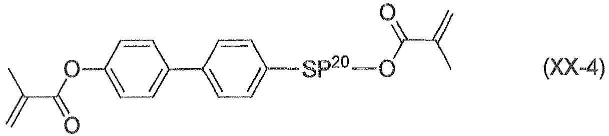

In the formulae, SP²⁰ represents an alkylene having 2 to 5 carbon atoms.

In those cases where a monomer is added to the liquid crystal composition of the present invention, the polymerization proceeds even in the absence of a polymerization initiator, but a polymerization initiator may be added to accelerate the polymerization. Examples of the polymerization initiator include benzoin ethers, benzophenones, acetophenones, benzyl ketals and acylphosphine oxides.

The liquid crystal composition in the present invention may also include a compound represented by general formula (Q).

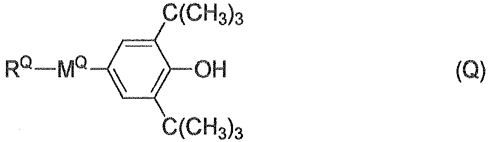

In the formula, R^{Q} represents a linear alkyl group or branched alkyl group having 1 to 22 carbon atoms, wherein one CH₂ group or two or more CH₂ groups within the alkyl group may be substituted with -O-, -CH=CH-, -CO-, -OCO, -COO-, -C≡C-, -CF₂O-or -OCF₂- such that oxygen atoms are not positioned directly adjacent to one another, and M^{Q} represents a trans-1,4-cyclohexylene group, a 1,4-phenylene group or a single bond.

R^{Q} represents a linear or branched alkyl group having 1 to 22 carbon atoms or a linear or branched alkoxy group having 1 to 22 carbon atoms, wherein one CH₂ group or two or more CH₂ groups within the alkyl group may be substituted with -O-, -CH=CH-,-CO-, -OCO, -COO-, -C≡C-, -CF₂O- or -OCF₂- such that oxygen atoms are not positioned directly adjacent to one another. R^{Q} is preferably a having 1 to 20 carbon atoms that is a linear alkyl group, a linear alkoxy group, a linear alkyl group in which one CH₂ group has been substituted with -OCO- or -COO-, a branched alkyl group, a branched alkoxy group, or a branched alkyl group in which one CH₂ group has been substituted with - OCO- or -COO-, and is more preferably a group having 1 to 10 carbon atoms that is a linear alkyl group, a linear alkyl group in which one CH₂ group has been substituted with -OCO- or -COO-, a branched alkyl group, a branched alkoxy group, or a branched alkyl group in which one CH₂ group has been substituted with -OCO- or -COO-. M^{Q} represents a trans-1,4-cyclohexylene group, a 1,4-phenylene group or a single bond, but is preferably a trans-1,4-cyclohexylene group or 1,4-phenylene group.

More specifically, the compound represented by general formula (Q) is preferably a compound represented by general formula (Q-a) to general formula (Q-d) shown below.

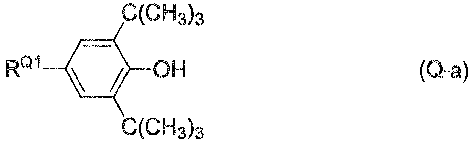

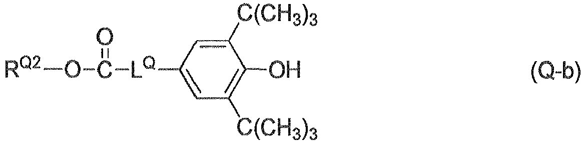

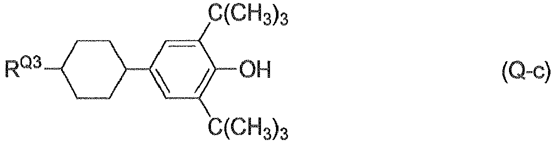

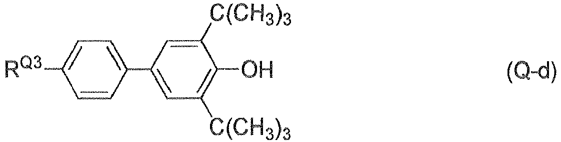

In the above formulae, R^{Q1} is preferably a linear alkyl group or branched alkyl group having 1 to 10 carbon atoms, R^{Q2} is preferably a linear alkyl group or branched alkyl group having 1 to 20 carbon atoms, R^{Q3} is preferably a linear alkyl group, branched alkyl group, linear alkoxy group or branched alkoxy group having 1 to 8 carbon atoms, and L^{Q} is preferably a linear alkylene group or branched alkylene group having 1 to 8 carbon atoms. Among the compounds represented by general formula (Q-a) to general formula (Q-d), compounds represented by general formula (Q-c) and general formula (Q-d) are particularly preferable.

The liquid crystal composition of the present invention preferably contains one or two compounds represented by general formula (Q), and more preferably contains from 1 to 5 compounds represented by general formula (Q), wherein the amount of the compound(s) is preferably from 0.001 to 1% by mass, more preferably from 0.001 to 0.1% by mass, and particularly preferably from 0.001 to 0.05% by mass.

### <Liquid Crystal Display Element>

The liquid crystal composition containing a polymerizable compound according to the present invention can be used in liquid crystal display element in which a liquid crystal alignment capability is imparted by polymerizing the polymerizable compound within the composition by irradiation with ultraviolet rays, and the amount of transmitted light is controlled using the birefringence of the liquid crystal composition. Examples of liquid crystal display elements for which the liquid crystal composition is useful include ECB-LCD, VA-LCD, FFS-LCD, AM-LCD (active matrix liquid crystal display element), TN (nematic liquid crystal display element), STN-LCD (super twisted nematic liquid crystal display element), OCB-LCD and IPS-LCD (in-plane switching liquid crystal display element), but the composition is particularly useful in AM-LCD, and can be used in transmission-type and reflection-type liquid crystal display elements.

The two substrates of the liquid crystal cell used in the liquid crystal display element can employ a transparent material such as glass or a flexible plastic, or a non-transparent material such as silicon. A transparent substrate having a transparent electrode layer can be obtained, for example, by forming a layer of indium tin oxide (ITO) by sputtering on the surface of a transparent substrate such as glass.

Color filters can be formed by a pigment dispersion method, a printing method, an electrodeposition method, or a staining method or the like. In one example of a method of preparing a color filter by the pigment dispersion method, a curable colored composition for a color filter is applied to the transparent substrate, a patterning process is performed, and the colored composition is then cured by heat or light irradiation. By performing this process for the three colors of red, green and blue, a color filter pixel portion can be produced. In addition, a pixel electrode provided with an active element such as a TFT or thin-film diode may also be installed on the substrate.

The aforementioned substrates are positioned facing each other with the transparent electrode layers facing inward. A spacer may be provided to adjust the spacing between the substrates. At this time, the thickness of the obtained light adjustment layer is preferably altered to 1 to 100 µm. A thickness of 1.5 to 10 µm is particularly preferable, and in those cases where a polarization plate is used, the product of the refractive index anisotropy Δn of the liquid crystal and the cell thickness d is preferably adjusted to achieve maximum contrast. Further, in the case of two polarization plates, the polarization axis of each polarization plate can be adjusted to ensure a favorable viewing angle and contrast. Moreover, a phase difference film may also be used to widen the viewing angle. Examples of the spacer include glass particles, plastic particles, alumina particles, and columnar spacers formed from a photoresist material or the like. Subsequently, a sealant such as an epoxy-based heat-curable composition is screen printed onto the substrate in a form that provides a liquid crystal injection port, and the substrates are then bonded together and heated to cure the sealant.

In terms of the method used for sandwiching the polymerizable compound-containing liquid crystal composition between the two substrates, a typical vacuum injection method or ODF method or the like can be used. Although dropping mark defects do not occur in the vacuum injection method, another problem arises in that injection traces tend to be retained. The present invention can be employed particularly favorably in display elements produced using the ODF method. In a liquid crystal display element production process using the ODF method, a sealant such as an epoxy-based light and heat curable sealant is applied using a dispenser to form a closed loop ridge on the substrate of either the back plane or the front plane, a prescribed amount of the liquid crystal composition is dropped into the closed loop under vacuum conditions, and the front plane and the back plane are then bonded together to complete production of the liquid crystal display element. The liquid crystal composition of the present invention enables the dropping of the liquid crystal composition during the ODF process to be performed with good stability, and can therefore be used very favorably in the ODF method.

In the method of polymerizing the polymerizable compound, an appropriate polymerization rate is desirable in order to achieve good alignment of the liquid crystal, and therefore a method is preferably used in which polymerization is performed by irradiation with an active energy beam such as ultraviolet rays or an electron beam, which may be used individually, consecutively or sequentially. When ultraviolet rays are used, a polarized light source or a non-polarized light source may be used. Further, in those cases where the polymerization is performed with the polymerizable compound-containing liquid crystal composition sandwiched between the two substrates, at least the substrate on the irradiated surface must have an appropriate level of transparency relative to the active energy beam. Furthermore, a technique may also be used in which a mask is used during the irradiation process so that only a specific portion of the composition is polymerized, the conditions such as the electric filed, magnetic field or temperature or the like are then altered to change the state of alignment of the unpolymerized portion, and additional active energy rays are then irradiated to complete the polymerization. Particularly in the case of exposure using ultraviolet rays, the ultraviolet exposure is preferably performed while an AC electric field is applied to the polymerizable compound-containing liquid crystal composition. The applied AC electric field preferably has an AC frequency of 10 Hz to 10 kHz, and a frequency of 60 Hz to 10 kHz is more preferable. The voltage is selected in accordance with the desired pretilt angle for the liquid crystal display element. In other words, the pretilt angle of the liquid crystal display element can be controlled using the applied voltage. In a horizontal electric field MVA mode liquid crystal display element, from the viewpoints of the alignment stability and the contrast, the pretilt angle is preferably controlled within a range from 80 degrees to 89.9 degrees.

The temperature during irradiation is preferably within a temperature range that maintains the liquid crystal state of the liquid crystal composition of the present invention. The polymerization is preferably performed at a temperature close to room temperature, typically within a range from 15 to 35°C. Examples of lamps that can be used to generate the ultraviolet rays include a metal halide lamp, a high-pressure mercury lamp, and an ultra high-pressure mercury lamp. Further the wavelength of the irradiated ultraviolet rays is preferably within a wavelength region outside of the absorption wavelength region for the liquid crystal composition, and if necessary, the ultraviolet rays may be cut prior to use. The intensity of the irradiated ultraviolet rays is preferably from 0.1 mW/cm² to 100 W/cm², and more preferably from 2 mW/cm² to 50 W/cm². The amount of energy of the irradiated ultraviolet rays may be adjusted as appropriate, but is preferably from 10 mJ/cm² to 500 J/cm², and is more preferably from 100 mJ/cm² to 200 J/cm². The intensity may be varied during the irradiation of the ultraviolet rays. The time of the ultraviolet irradiation may be selected appropriately in accordance with the intensity of the irradiated ultraviolet rays, but is preferably from 10 seconds to 3,600 seconds, and more preferably from 10 seconds to 600 seconds.

A liquid crystal display element using the liquid crystal composition of the present invention is useful in combining a fast response speed with good suppression of display defects, and is useful in active matrix driven liquid crystal display elements, and particularly effective for use in VA mode, PSVA mode, PSA mode, IPS (in-plane switching) mode, FSS (fringe field switching) mode and ECB mode liquid crystal display elements.

A detailed description of a preferred embodiment of a liquid crystal display apparatus (liquid crystal display) according to the present invention is presented below with reference to the drawings.

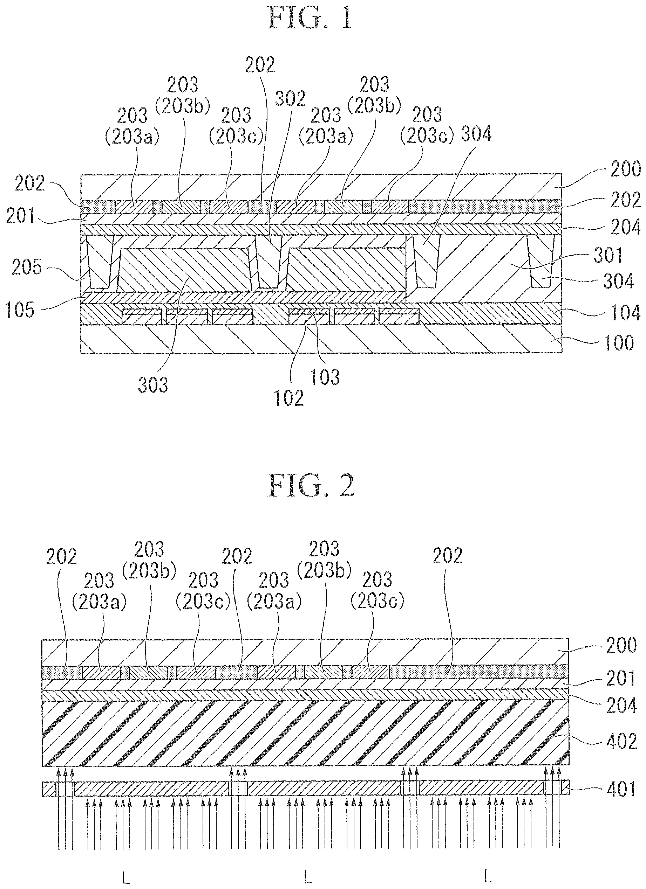

FIG. 1 is a cross-sectional view illustrating a liquid crystal display element having two mutually opposing substrates, a sealing material provided between the substrates, and a liquid crystal that is injected into a sealed region surrounding by the sealing material.

Specifically, a specific configuration of a liquid crystal display element is illustrated which includes a back plane in which a TFT layer 102 and a pixel electrode 103 are provided on a first substrate 100, and a passivation film 104 and a first alignment film 105 are then provided thereon, a front plane in which a black matrix 202, a color filter 203, a smoothing film (overcoat layer) 201 and a transparent electrode 204 are provided on a second substrate 200, a second alignment film 205 is provided thereon, and the resulting structure is then positioned facing the front plane, a sealing material 301 that is provided between the substrates, and a liquid crystal layer 303 that is injected into a sealed region surrounded by the sealing material, wherein protrusions (columnar spacers) 302 and 304 are provided on the surface of the substrate that contacts the sealing material 301.

There are no particular limitations on the material of the first substrate or the second substrate, provided the material is substantially transparent, and glass, ceramics and plastics and the like can be used. Examples of plastic substrates that can be used include cellulose and cellulose derivatives such as triacetyl cellulose and diacetyl cellulose, polycycloolefin derivatives, polyesters such as polyethylene terephthalate and polyethylene naphthalate, polyolefins such as polypropylene and polyethylene, polycarbonate, polyvinyl alcohol, polyvinyl chloride, polyvinylidene chloride, polyamide, polyimide, polyimide-amide, polystyrene, polyacrylate, poly(methyl methacrylate), polyethersulfone and polyarylate, as well as inorganic-organic composite materials such as glass fiber-epoxy resins and glass fiber-acrylic resins.

When a plastic substrate is used, a barrier film is preferably provided. The functions of the barrier film are to reduce the inherent moisture permeability of the plastic substrate and improve the reliability of the electrical properties of the liquid crystal display element. There are no particular limitations on the barrier film provided it exhibits high transparency and minimal water vapor permeability, and generally, a thin film of an inorganic material such as silicon oxide is formed by vapor deposition, sputtering or chemical vapor deposition (CVD).

In the present invention, the first substrate and the second substrate may be formed using the same material, or formed from different materials, and there are no particular limitations. The use of glass substrates is preferable in terms of producing a liquid crystal display element having excellent heat resistance and dimensional stability. Further, the use of plastic substrates is preferable in terms of being suitable for use in production methods employing roll-to-roll processing, and enabling the production of devices of reduced weight and improved flexibility. Further, if superior flatness and heat resistance are required, then good results can be obtained by using a combination of a plastic substrate and a glass substrate.

In the examples described below, glass is used for the material for the first substrate 100 and the second substrate 200.

In the back plane, the TFT layer 102 and the pixel electrode 103 are provided on the first substrate 100. These components are produced using a typical array process. The passivation film 104 and the first alignment film 105 are then provided thereon to obtain the back plane.

The passivation film 104 (also referred to as an inorganic protective film) is a film that protects the TFT layer, and is usually formed by forming a nitride film (SiNx) or an oxide film (SiOx) using a chemical vapor deposition (CVD) technique or the like.

Further, the first alignment film 105 is a film having a function of aligning the liquid crystal, and a polymer material such as a polyimide is often used. An alignment agent solution composed of the polymer material and a solvent is used as the coating solution. Because the alignment film can sometimes inhibit the bonding strength with the sealing material, patterned coating is used inside the sealed region. A printing method such as flexographic printing or a liquid droplet discharge method such as an inkjet method can be used for applying the coating solution. The applied alignment agent solution is subjected to preliminary drying to evaporate the solvent, and is then baked to effect cross-linking and curing. Subsequently, alignment processing is performed to realize the alignment function.

Alignment processing is usually performed by a rubbing method. A liquid crystal alignment capability is generated by rubbing the polymer film formed in the manner described above in a single direction with a rubbing cloth formed from a fiber such as rayon.

Further, a photoalignment method may also be used. A photoalignment method is a method in which an alignment capability is generated by irradiating a polarized light onto an alignment film containing an organic material having photosensitivity, and does not suffer from the type of substrate damage or dust that can be generated by the rubbing method. Examples of the organic material used in the photoalignment method include materials containing a dichroic dye. Examples of compounds that can be used as the dichroic dye include compounds having a group (hereafter referred to as the photoalignment group) that causes a photoreaction which acts as the origin of the liquid crystal alignment capability, such as a molecular alignment-inducing or isomerization reaction caused by the Weigert effect arising from photodichroism (example: azobenzene group), a dimerization reaction (example: cinnamoyl group), a photo-crosslinking reaction (example: benzophenone group) or a photodecomposition reaction (example: polyimide group). By subjecting the applied alignment agent solution to preliminary drying to evaporate the solvent, and then performing irradiation with light having an arbitrary polarization (polarized light), an alignment film having an alignment function in an arbitrary direction can be obtained.

In the opposing front plane, the black matrix 202, the color filter 203, the smoothing film 201, the transparent electrode 204 and the second alignment film 205 are provided on the second substrate 200.

The black matrix 202 is formed, for example, by the pigment dispersion method. Specifically, a colored resin liquid which has a black colorant dispersed uniformly therein and is used for forming the black matrix is applied to the second substrate 200 having the barrier film formed thereon, thereby forming a colored layer. Subsequently, the colored layer is baked and cured. A photoresist is then applied and prebaked. The photoresist is exposed through a mask pattern and developing is then performed to pattern the colored layer. Subsequently, the photoresist layer is stripped away, and the colored layer is baked to complete preparation of the black matrix 202.

Alternatively, a photoresist-type pigment dispersion may be used. In this case, the photoresist-type pigment dispersion is applied, prebaked, subsequently exposed through a mask pattern, and then developed in order to pattern the colored layer. Subsequently, the photoresist layer is stripped away, and the colored layer is baked to complete preparation of the black matrix 202.

The color filter 203 is prepared by a pigment dispersion method, an electrodeposition method, a printing method or a staining method or the like. Using the pigment dispersion method as an example, a colored resin liquid containing a pigment (such as a red pigment) dispersed uniformly therein is applied to the second substrate 200, and following baking and curing, a photoresist is applied and prebaked. The photoresist is exposed through a mask pattern and then developed to effect patterning. Subsequently, the photoresist layer is stripped away, and a second baking operation is performed to complete preparation of the (red) color filter 203. There are no particular limitations on the sequence in which the various colors are formed. A green color filter 203 and a blue color filter 203 are formed in a similar manner.

The transparent electrode 204 is provided on top of the color filter 203 (if necessary, an overcoat layer (201) may be provided on top of the color filter 203 to smooth the surface). The transparent electrode 204 preferably has a high light transmittance, and preferably has a small electrical resistance. The transparent electrode 204 is formed from an oxide film such as ITO by a sputtering method or the like.

Further, in some cases a passivation film may be provided on the transparent electrode 204 for the purpose of protecting the transparent electrode 204.

The second alignment film 205 is the same as the first alignment film 105 described above.

Descriptions of specific configurations of the back plane and the front plane used in the present invention have been provided above, but the present invention is not limited to these specific configurations, and alterations to these configurations can be made freely in accordance with the desired liquid crystal display element.

There are no particular limitations on the shape of the aforementioned columnar spacers, and the horizontal cross-sectional shape may be a variety of shapes including circles, squares and polygons, but in consideration of ensuring a favorable misalignment margin during fabrication, the horizontal cross-sectional shape is preferably circular or a regular polygon shape. Further, the shapes of the protrusions may be circular truncated cones or truncated pyramids.

There are no particular limitations on the material used for forming the columnar spacers, provided the material does not dissolve in the sealing material, the organic solvent used in the sealing material, or the liquid crystal, but from the viewpoints of processability and weight reduction, a synthetic resin (curable resin) is preferable. On the other hand, the protrusions can be provided on the surface of the first substrate that contacts the sealing material by employing a photolithography method or a liquid droplet discharge method. For these reasons, a photocurable resin that is suitable for use with a photolithography method or a liquid droplet discharge method is preferably used.

The case in which a photolithography method is used to form the columnar spacers is described below as an example. FIG. 2 is a diagram illustrating an exposure treatment step which uses a columnar spacer-generating pattern formed on a black matrix as a photomask pattern.

A resin liquid (containing no colorant) for forming the columnar spacers is applied to the transparent electrode 204 of the aforementioned front plane. Subsequently, the resin layer 402 is baked and cured. A photoresist is then applied to the resin layer 402 and prebaked. Following exposure of the photoresist through a mask pattern 401, developing is performed to pattern the resin layer. The photoresist layer is then stripped away, and the resin layer is baked to complete preparation of the columnar spacers (302 and 304 in FIG. 1).

The positions in which the columnar spacers are formed can be set at desired positions by the mask pattern. Accordingly, the inside of the sealed region and the region outside the sealed region (the portion where the sealing material is applied) of the liquid crystal display element can both be created simultaneously. Further, in order to ensure that the columnar spacers do not lower the quality of the sealed region, the spacers are preferably formed so as to be positioned on top of the black matrix. The columnar spacers prepared in this manner by a photolithography method are also referred to as photo spacers.

Examples of the material used for the spacers include negative type water-soluble resins such as PVA-Stilbazo photosensitive resins, and mixtures of a polyfunctional acrylic monomer, an acrylic acid copolymer and a triazole-based initiator. An alternative method uses a color resin prepared by dispersing a colorant in a polyimide resin. There are no particular limitations in the present invention, and the spacers can be formed from a conventional material that exhibits good compatibility with the liquid crystal and the sealing material that are used.

Following provision of the columnar spacers on the surface of the front plane that becomes part of the sealed region, the sealing material (301 in FIG. 1) is applied to the surface of the back plane that contacts the sealing material.

There are no particular limitations on the material for the sealing material, and a curable resin composition prepared by adding a polymerization initiator to an epoxy-based or acrylic-based photocurable resin, heat curable resin, or light and heat curable resin is typically used. Further, in order to control the moisture permeability, the elastic modulus and the viscosity and the like, a filler composed of an inorganic substance or an organic substance may sometimes be added. There are no particular limitations on the particle shape of these fillers, and spherical, fibrous or amorphous fillers may be used. Moreover, in order to ensure favorable control of the cell gap, a spherical or fibrous gap material having a monodisperse diameter may be mixed into the resin composition, or a fibrous substance that readily entangles itself around the protrusions on the substrate, thereby increasing the adhesion to the substrate, may also be mixed into the composition. The fibrous substance used preferably has a diameter that is approximately 1/5 to 1/10 of the cell gap, and the length of the fibrous substance is preferably shorter than the width across which the sealing material is applied.

Further, there are no particular limitations on the material used for the fibrous substance, provided the desired shape can be obtained, and for example, synthetic fibers such as cellulose, polyamide and polyester, or inorganic materials such as glass or carbon can be selected as appropriate.

The method used for applying the sealing material may be a printing method or a dispensing method, but a dispensing method which uses a smaller amount of the sealing material is preferable. The position to which the sealing material is applied is usually on the black matrix, in order to avoid any adverse effect on the sealed region. In order to form the liquid crystal drop region for the subsequent step (and prevent leakage of the liquid crystal), the sealing material is applied in the shape of a closed loop.

The liquid crystal is dropped into the front plane closed loop shape (sealed region) formed by application of the sealing material. A dispenser is usually used. In order to ensure that the amount of the dropped liquid crystal matches the volume of the liquid crystal cell, the basic volume is the same as that obtained by multiplying the height of the columnar spacers by the surface area of the sealed region. However, in order to prevent liquid crystal leakage during the cell bonding step and optimize the display properties, the amount of the liquid crystal that is dropped may be adjusted appropriately, and the liquid crystal dropping position may also be dispersed in some cases.

Next, the back plane is bonded to the front plane having the sealing material applied thereto and the liquid crystal dropped thereon. Specifically, the front plane and the back plane are attached to a stage which has a mechanism for retaining substrates such as an electrostatic chuck, and the second alignment film of the front plane and the first alignment film of the back plane are disposed facing each other at positions (a separation distance) where the sealing material and the other substrate do not make contact. In this state, the inside of the system is then evacuated to reduced pressure. Following completion of the evacuation, the positions of the two substrates are adjusted (alignment operation) with ongoing confirmation of the bonding positions of the front plane and the back plane. Following completion of this bonding position adjustment, the substrates are brought closer together until the sealing material on the front plane contacts the back plane, and in this state, an inert gas is introduced into the system to gradually release the reduced pressure state and return the system to normal pressure. At this time, the front plane and the back plane are bonded together by the atmospheric pressure, and the cell gap is formed by the height of the columnar spacers. Ultraviolet rays are then irradiated onto the sealing material in this state, thereby curing the sealing material and forming the liquid crystal cell. Subsequently, a heating step may sometimes be added to accelerate the curing of the sealing material. A heating step is often added to improve the adhesive strength of the sealing material and the reliability of the electrical properties.

### EXAMPLES

The present invention is described below in further detail using a series of examples, but the present invention is in no way limited by these examples. Further, in the compositions of the following examples and comparative examples, the units "%" refer to "% by mass". Only Examples 1, 2, and 6 to 14 are according to the invention. The other "examples" are given for reference and/or comparison only.

In the examples, the properties measured were as follows.
Tni: nematic phase-isotropic liquid phase transition temperature (°C)
Δn: refractive index anisotropy at 295 K (alternative name: birefringence)
Δε: dielectric anisotropy at 295 K
η: viscosity at 295 K (mPa·s)
γ1: rotational viscosity at 295 K (mPa·s)
Initial voltage holding rate (initial VHR): voltage holding rate (%) at 50°C under conditions including a frequency of 50 Hz and an applied voltage of 4 V.
Voltage holding rate following heating (post-heating VHR): voltage holding rate (%) measured under the same conditions as the initial VHR following standing for 1 hour in an atmosphere at 150°C.

### <Burn-in Evaluation>

Evaluation of the burn-in of a liquid crystal display element was performed by displaying a predetermined fixed pattern within the display area for 1,440 hours, and then visually evaluating the level of the afterimage of the fixed pattern when the entire screen was switched to a uniform display, using the 4-grade evaluation described below.

A: no afterimage.
B: very faint afterimage, but of a permissible level.
C: afterimage present at an impermissible level.
D: afterimage present, causing significant image degradation.

### <Evaluation of Volatility (Contamination of Production Apparatus)>

Evaluation of the volatility of the liquid crystal material was performed by observing the material while illuminating the operational state of a vacuum agitation defoaming mixer with a stroboscope, and visually determining the degree of foaming of the liquid crystal material. Specifically, 0.8 kg of the liquid crystal composition was placed in the dedicated container of a vacuum agitation defoaming mixer having a capacity of 2.0 L, the vacuum agitation defoaming mixer was operated under degassing conditions of 4 kPa, an orbital speed of 15 s⁻¹ and a rotational speed of 7.5 s⁻¹, and the time taken for foaming to start was evaluated using the following 4-grade evaluation.

A: three or more minutes were needed before foaming started. The probability of apparatus contamination caused by volatilization is low.
B: foaming started after at least 1 but less than 3 minutes. There is some concern about light apparatus contamination caused by volatilization.
C: foaming started after at least 30 seconds but less than 1 minute. Apparatus contamination caused by volatilization occurs.
D: foaming started within 30 seconds. There is a danger of major apparatus contamination caused by volatilization.

### <Evaluation of Process Compatibility>

The process compatibility in the ODF process was evaluated by performing 100,000 repetitions of a process of dropping 40 pL of the liquid crystal per repetition using a constant volume measuring pump, and then evaluating changes in the liquid crystal volume after each 200 repetitions, namely 0 to 200 repetitions, 201 to 400 repetitions, 401 to 600 repetitions, ... through to 99,801 to 10,000 repetitions, using the following 4-grade evaluation.

A: extremely little change (meaning liquid crystal display elements can be produced with good stability).
B: slight change, but of a permissible level.
C: some change, and of an impermissible level (causing a worsening in yield due to spot formation).
D: change occurs, with significant degradation (occurrence of liquid crystal leakage and vacuum foaming).

### <Evaluation of Solubility at Low Temperature>

Evaluation of the solubility at low temperature was performed by preparing the liquid crystal composition, weighing 0.5 g of the liquid crystal composition into a 1 ml sample vial, subjecting the vial to continuous temperature variation in a temperature control test tank, wherein a single cycle of the temperature variation involved [-20°C (hold for 1 hour) → increase temperature (0.2°C/minute) → 0°C (hold for 1 hour) → increase temperature (0.2°C/minute) → 20°C (hold for 1 hour) → reduce temperature (-0.2°C/minute) → 0°C (hold for 1 hour) → reduce temperature (-0.2°C/minute) →- -20°C], visually observing the occurrence of precipitation from the liquid crystal composition, and evaluating the solubility using the following 4-grade evaluation.

A: precipitation was not observed for at least 600 hours.
B: precipitation was not observed for at least 300 hours.
C: precipitation was observed within 150 hours.
D: precipitation was observed within 75 hours.

### [Examples 1 and 2, Comparative Examples 1 and 2]

Compositions were prepared using compounds represented by the chemical formulae shown below, and the physical properties of the compositions were measured. The results are shown in Table 1.

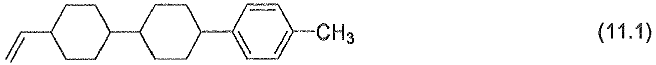

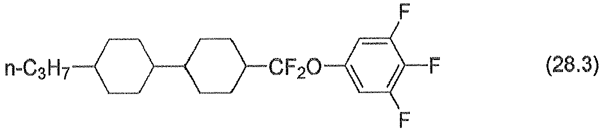

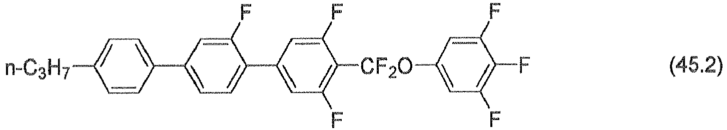

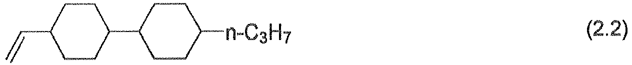

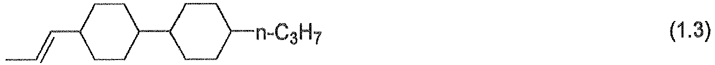

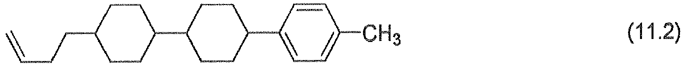

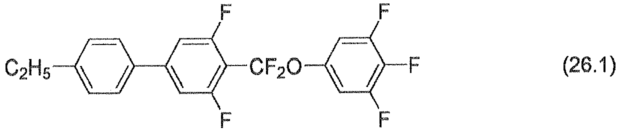

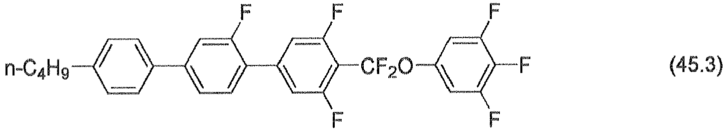

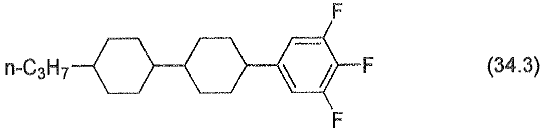

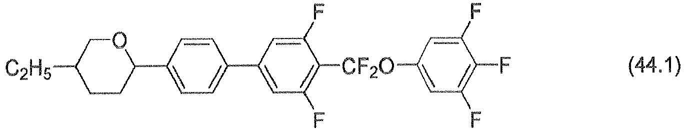

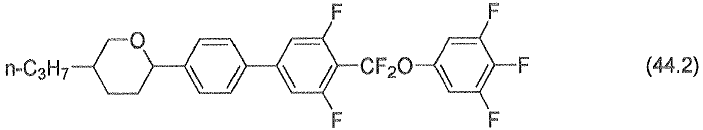

**[Table 1]**

| | Example 1 | Comparative Example 1 | Comparative Example 2 | Example 2 |
|---|---|---|---|---|
| Tni (°C) | 91.6 | 85.1 | 90.2 | 89.8 |
| Δn | 0.097 | 0.098 | 0.108 | 0.109 |
| Δε | 8.05 | 8.5 | 9.3 | 10.0 |
| η (mPa·s) | 16.1 | 17.0 | 23.4 | 23.1 |
| γ1 (mPa·s) | 81 | 74 | 97 | 96 |
| Formula (11.1) | 10 | 10 | 10 | 10 |
| Formula (28.3) | 20 | 20 | 0 | 10 |
| Formula (45.2) | 5 | 8 | 5 | 5 |
| Formula (2.2) | 30 | 30 | 30 | 30 |
| Formula (1.3) | 10 | 10 | 10 | 10 |
| Formula (11.2) | 10 | 10 | 10 | 10 |
| Formula (26.1) | 5 | 7 | 5 | 5 |
| Formula (45.3) | 0 | 5 | 5 | 10 |
| Formula (34.3) | 0 | 0 | 10 | 0 |
| Formula (44.1) | 5 | 0 | 7 | 5 |
| Formula (44.2) | 5 | 0 | 8 | 5 |

The numerical value listed for each formula shown in Table 1 indicates the proportion (units: % by mass) of that compound contained within each composition.

Comparative Example 1 is a liquid crystal composition in which the compounds represented by general formula (ii) (the compounds represented by formulae (44.1) and (44.2)) contained within the liquid crystal composition of Example 1 have been replaced with the compounds represented by formulae (45.2), (26.1) and (45.3). The Δn values for the two liquid crystal compositions are substantially the same. Comparison of the physical properties of Example 1 and Comparative Example 1 reveals that removal of the compounds represented by general formula (ii) caused a decrease in the Tni value, with Example 1 having a higher Tni temperature, and therefore being able to be used over a broader temperature range. Further, although the Δε value was slightly higher for Comparative Example 1, the η value was also higher.

Comparative Example 2 is a liquid crystal composition in which the compound represented by general formula (i) (the compound represented by formula (28.3)) contained within the liquid crystal composition of Example 1 has been replaced with the compounds represented by formulae (45.3), (34.3), (44.1) and (44.2). Comparison of the results for Example 1 and Comparative Example 2 reveals that although removal of the compound represented by general formula (i) yielded increases in Δn and Δε, the η value increased significantly.

Example 2 is a liquid crystal composition in which the amounts of the components from Example 1 and Comparative Example 2 have been altered. It is evident that the values for Tni, Δn, η and γ1 were substantially the same, but Example 2 exhibited a larger value for Δε.

### [Examples 3 to 5]

Compositions were prepared using compounds represented by the chemical formulae shown below, and the physical properties of the compositions were measured. The results are shown in Table 2.

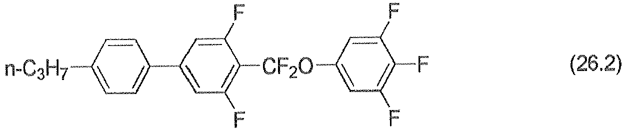

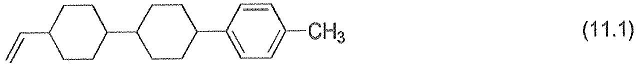

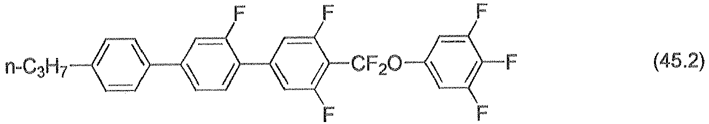

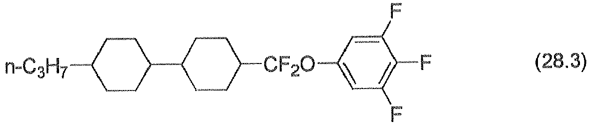

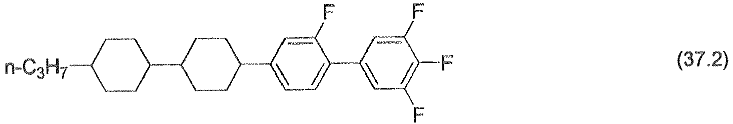

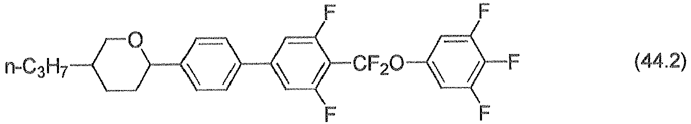

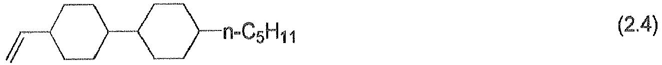

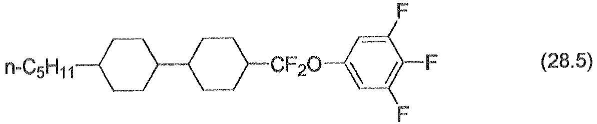

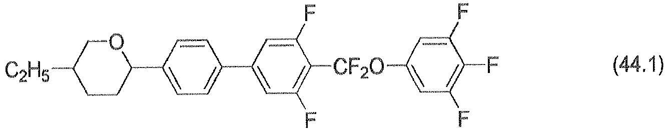

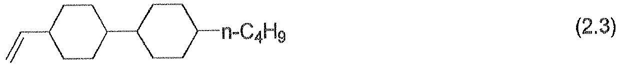

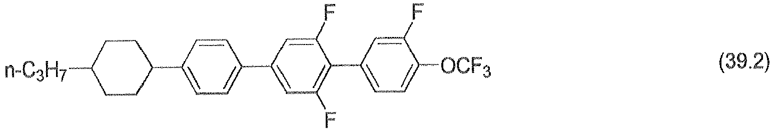

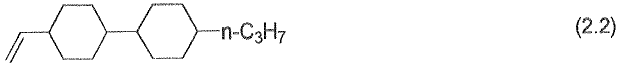

**[Table 2]**

| | Example 3 | Example 4 | Example 5 |
|---|---|---|---|
| Tni (°C) | 90.0 | 88.0 | 88.6 |
| Δη | 0.120 | 0.120 | 0.124 |
| Δε | 17.3 | 16.9 | 20.8 |
| η (mPa·s) | 33.8 | 31.3 | 40.7 |
| γ1 (mPa·s) | 186 | 180 | 227 |
| Formula (26.2) | 15 | 15 | 15 |
| Formula (11.1) | 10 | 10 | 8 |
| Formula (45.2) | 7 | 8 | 7 |
| Formula (28.3) | 7 | 5 | 7 |
| Formula (37.2) | 5 | 5 | 3 |
| Formula (44.2) | 8 | 8 | 10 |
| Formula (2.4) | 8 | 6 | 6 |
| Formula (28.5) | 8 | 5 | 8 |
| Formula (44.1) | 7 | 7 | 10 |
| Formula (2.3) | 20 | 20 | 20 |
| Formula (39.2) | 5 | 6 | 6 |
| Formula (2.2) | 0 | 5 | 0 |

The numerical value listed for each formula shown in Table 2 indicates the proportion (units: % by mass) of that compound contained within each composition.

### [Examples 6 to 8]

Compositions were prepared using compounds represented by the chemical formulae shown below, and the physical properties of the compositions were measured. The results are shown in Table 3.

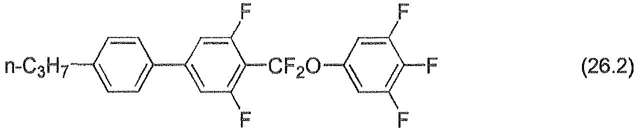

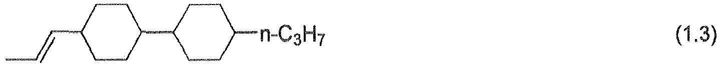

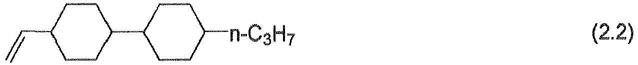

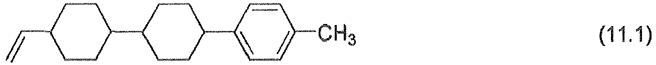

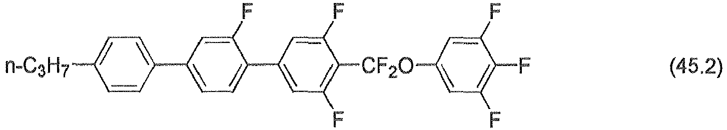

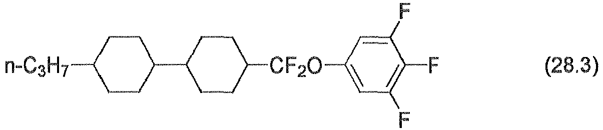

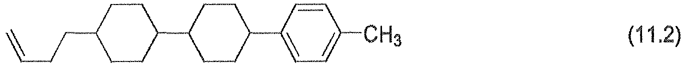

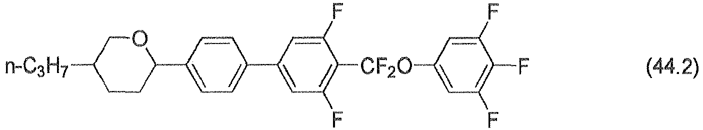

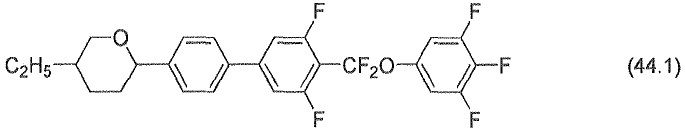

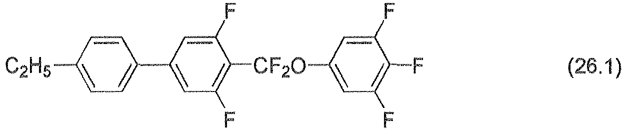

**[Table 3]**

| | Example 6 | Example 7 | Example 8 |
|---|---|---|---|
| Tni (°C) | 84.3 | 85.8 | 91.4 |
| Δn | 0.105 | 0.102 | 0.108 |
| Δε | 8.3 | 7.9 | 8.5 |
| η (mPa·s) | 18.3 | 16.9 | 20.7 |
| γ1 (mPa·s) | 65 | 62 | 86 |
| Formula (26.2) | 10 | 11 | 10 |
| Formula (1.3) | 10 | 10 | 10 |
| Formula (2.2) | 30 | 30 | 30 |
| Formula (11.1) | 10 | 10 | 10 |
| Formula (45.2) | 5 | 5 | 5 |
| Formula (28.3) | 7 | 10 | 5 |
| Formula (11.2) | 15 | 15 | 15 |
| Formula (44.2) | 6 | 4 | 9 |
| Formula (44.1) | 3 | 3 | 6 |
| Formula (26.1) | 4 | 2 | 0 |

The numerical value listed for each formula shown in Table 3 indicates the proportion (units: % by mass) of that compound contained within each composition.

### [Examples 9 to 11]

Compositions were prepared using compounds represented by the chemical formulae shown below, and the physical properties of the compositions were measured. The results are shown in Table 4.

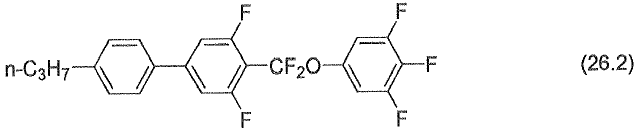

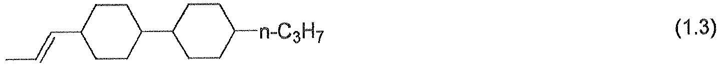

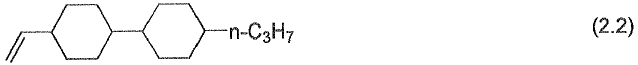

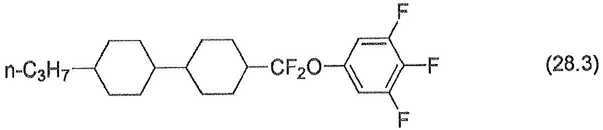

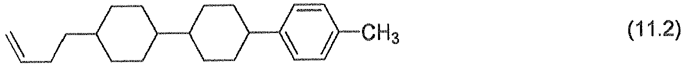

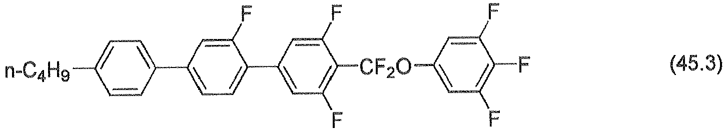

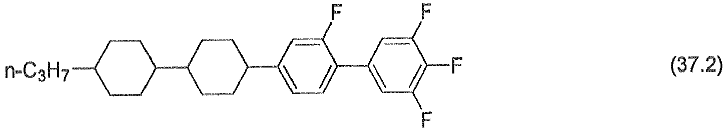

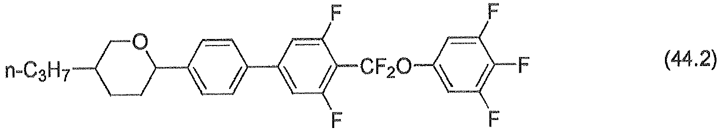

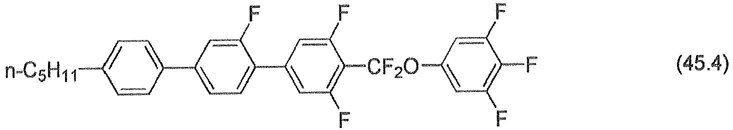

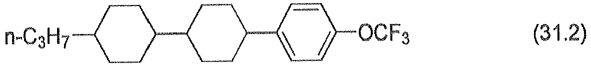

**[Table 4]**

| | Example 9 | Example 10 | Example 11 |
|---|---|---|---|
| Tni (°C) | 91.5 | 91.9 | 91 |
| Δn | 0.101 | 0.103 | 0.100 |
| Δε | 9.7 | 10.1 | 9.4 |
| γ1 (mPa·s) | 99 | 106 | 92 |
| Formula (26.2) | 7 | 7 | 7 |
| Formula (1.3) | 15 | 15 | 15 |
| Formula (2.2) | 30 | 30 | 30 |
| Formula (28.3) | 7 | 5 | 9 |
| Formula (11.2) | 10 | 10 | 10 |
| Formula (45.3) | 7 | 7 | 7 |
| Formula (37.2) | 4 | 4 | 4 |
| Formula (44.2) | 6 | 8 | 4 |
| Formula (45.4) | 4 | 4 | 4 |
| Formula (31.2) | 10 | 10 | 10 |

The numerical value listed for each formula shown in Table 4 indicates the proportion (units: % by mass) of that compound contained within each composition.

### [Examples 12 to 14]

Compositions were prepared using compounds represented by the chemical formulae shown below, and the physical properties of the compositions were measured. The results are shown in Table 5.

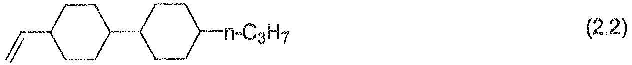

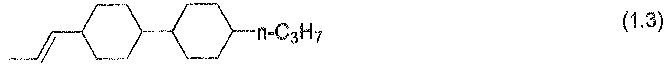

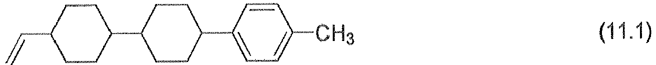

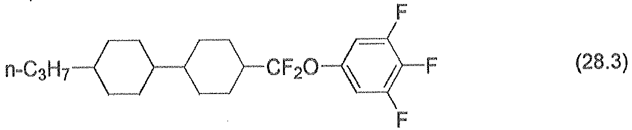

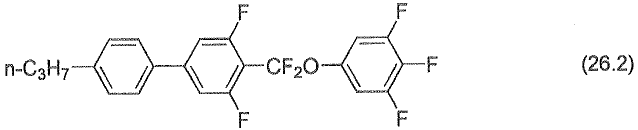

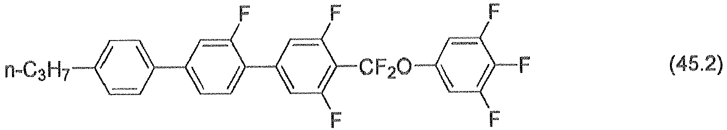

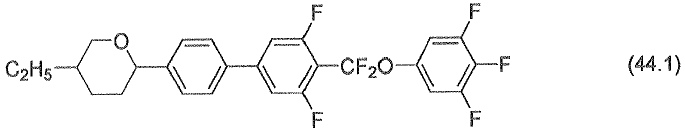

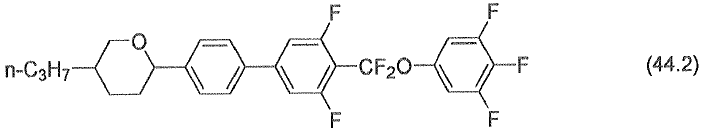

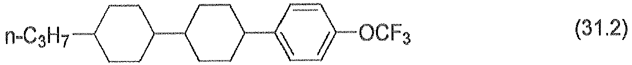

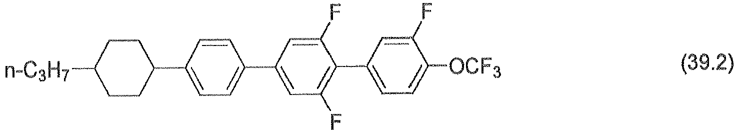

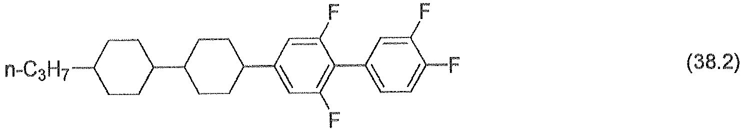

**[Table 5]**

| | Example 12 | Example 13 | Example 14 |
|---|---|---|---|
| Tni (°C) | 90.9 | 97.2 | 99 |
| Δn | 0.122 | 0.12 | 0.119 |
| Δε | 18.7 | 17.6 | 18.1 |
| η (mPa·s) | 36.8 | 35.8 | 35.8 |
| γ1 (mPa·s) | 190 | 201 | 212 |
| Formula (2.2) | 40 | 40 | 40 |
| Formula (1.3) | 15 | 15 | 15 |
| Formula (11.1) | 5 | 5 | 5 |
| Formula (28.3) | 2 | 5 | 8 |
| Formula (26.2) | 10 | 5 | 4 |
| Formula (45.2) | 5 | 5 | 4 |
| Formula (44.1) | 4 | 5 | 6 |
| Formula (44.2) | 4 | 5 | 6 |
| Formula (31.2) | 5 | 5 | 4 |
| Formula (39.2) | 5 | 5 | 4 |
| Formula (38.2) | 5 | 5 | 4 |

The numerical value listed for each formula shown in Table 5 indicates the proportion (units: % by mass) of that compound contained within each composition.

### [Examples 15 to 17]

Compositions were prepared using compounds represented by the chemical formulae shown below, and the physical properties of the compositions were measured. The results are shown in Table 6.

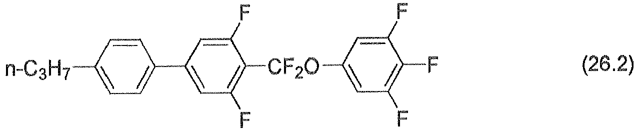

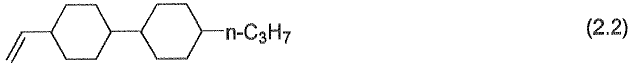

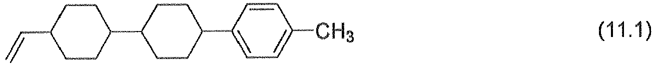

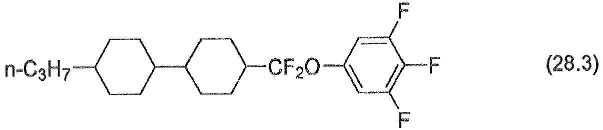

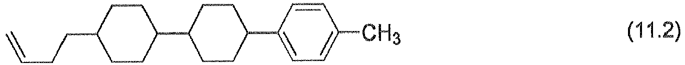

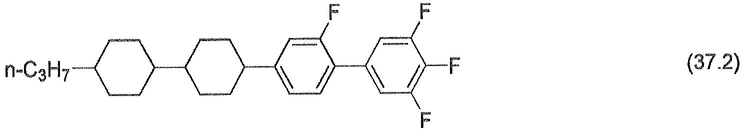

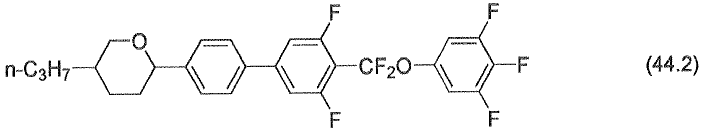

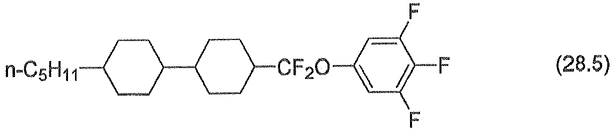

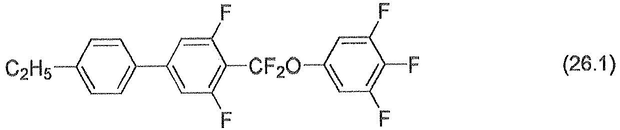

**[Table 6]**

| | Example 15 | Example 16 | Example 17 |
|---|---|---|---|
| Tni (°C) | 89.6 | 96.4 | 84.7 |
| Δn | 0.096 | 0.096 | 0.098 |
| Δε | 9.1 | 8.8 | 9.5 |
| η (mPa·s) | 15.5 | 15.5 | 15.7 |
| γ1 (mPa·s) | 89 | 109 | 81 |
| Formula (26.2) | 15 | 10 | 15 |
| Formula (2.2) | 30 | 30 | 30 |
| Formula (11.1) | 20 | 20 | 20 |
| Formula (28.3) | 8 | 10 | 6 |
| Formula (11.2) | 6 | 6 | 6 |
| Formula (37.2) | 6 | 6 | 6 |
| Formula (44.2) | 5 | 8 | 4 |
| Formula (28.5) | 10 | 10 | 10 |
| Formula (26.1) | 0 | 0 | 3 |

The numerical value listed for each formula shown in Table 6 indicates the proportion (units: % by mass) of that compound contained within each composition.

### [Examples 18 to 20]

Compositions were prepared using compounds represented by the chemical formulae shown below, and the physical properties of the compositions were measured. The results are shown in Table 7.

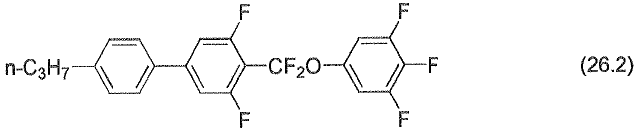

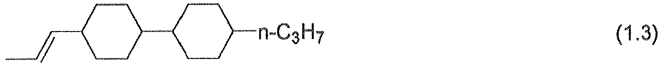

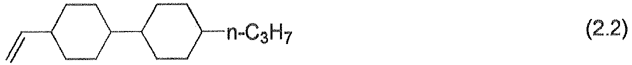

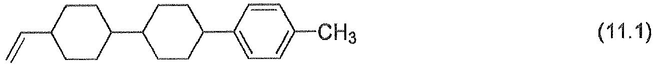

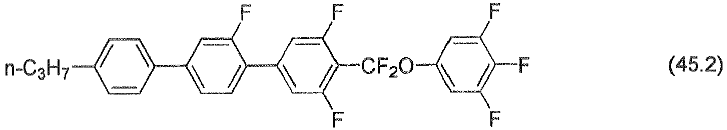

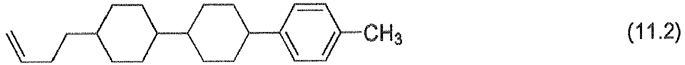

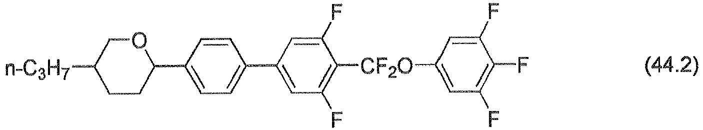

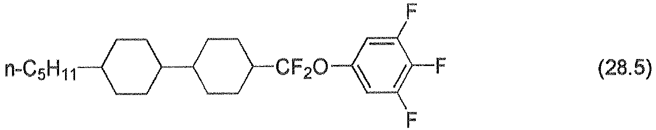

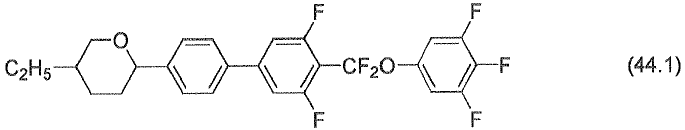

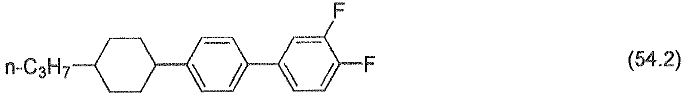

**[Table 7]**

| | Example 18 | Example 19 | Example 20 |
|---|---|---|---|
| Tni (°C) | 86.8 | 87.9 | 86.7 |
| Δn | 0.103 | 0.103 | 0.103 |
| Δε | 8.5 | 9.2 | 8.8 |
| γ1 (mPa·s) | 87 | 108 | 97 |
| Formula (26.2) | 10 | 10 | 10 |
| Formula (1.3) | 10 | 10 | 10 |
| Formula (2.2) | 25 | 25 | 25 |
| Formula (11.1) | 15 | 15 | 15 |
| Formula (45.2) | 5 | 5 | 5 |
| Formula (11.2) | 8 | 8 | 8 |
| Formula (44.2) | 5 | 7 | 3 |
| Formula (28.5) | 4 | 4 | 4 |
| Formula (44.1) | 3 | 5 | 7 |
| Formula (54.2) | 15 | 11 | 13 |

The numerical value listed for each formula shown in Table 7 indicates the proportion (units: % by mass) of that compound contained within each composition.

### [Examples 21 to 23]

Compositions were prepared using compounds represented by the chemical formulae shown below, and the physical properties of the compositions were measured. The results are shown in Table 8.

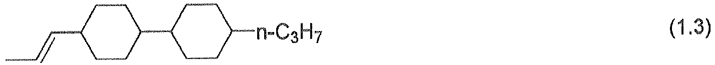

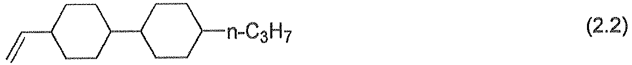

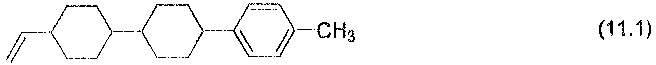

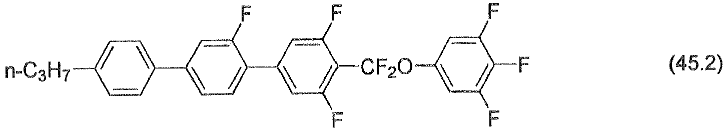

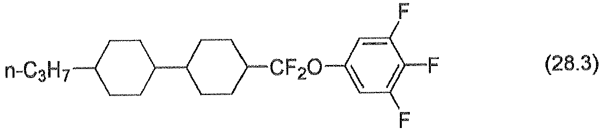

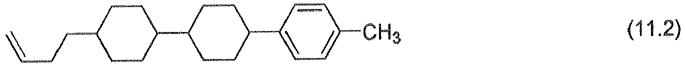

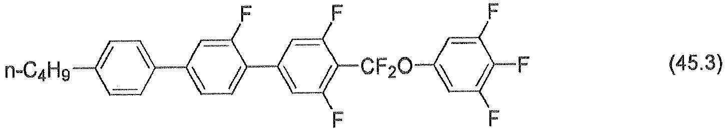

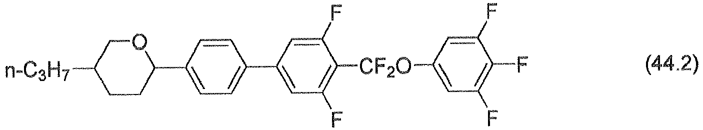

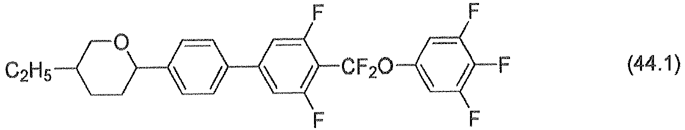

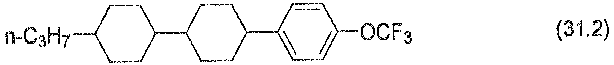

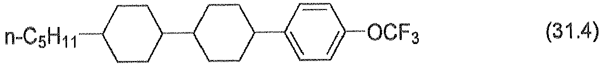

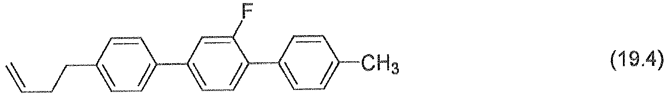

**[Table 8]**

| | Example 21 | Example 22 | Example 23 |
|---|---|---|---|
| Tni (°C) | 89.5 | 92.5 | 90 |
| Δn | 0.103 | 0.105 | 0.103 |
| Δε | 4.8 | 5.3 | 5.4 |
| γ1 (mPa·s) | 60 | 69 | 69 |
| Formula (1.3) | 10 | 10 | 10 |
| Formula (2.2) | 40 | 40 | 40 |
| Formula (11.1) | 10 | 10 | 10 |
| Formula (45.2) | 3 | 3 | 3 |
| Formula (28.3) | 2 | 5 | 7 |
| Formula (11.2) | 4 | 4 | 3 |
| Formula (45.3) | 3 | 3 | 3 |
| Formula (44.2) | 4 | 4 | 4 |
| Formula (44.1) | 4 | 4 | 4 |
| Formula (31.2) | 5 | 5 | 3 |
| Formula (31.4) | 5 | 5 | 3 |
| Formula (19.4) | 10 | 7 | 10 |

The numerical value listed for each formula shown in Table 8 indicates the proportion (units: % by mass) of that compound contained within each composition.

The initial VHR, the VHR following heating (at 150°C for 1 hour), and the burn-in evaluation, volatility evaluation, process compatibility evaluation and low-temperature solubility evaluation for the liquid crystal composition of each example are shown below.

**[Table 9]**

| | Example 1 | Example 2 | Example 3 | Example 6 | Example 9 |
|---|---|---|---|---|---|
| Initial VHR (%) | 99.3 | 99.0 | 99.1 | 99.2 | 99.0 |
| Post-heating VHR (%) | 98.2 | 98.1 | 98.3 | 98.3 | 98.1 |
| Burn-in | A | A | A | B | A |
| Volatility | A | A | B | A | A |
| Process compatibility | A | A | A | A | A |
| Solubility at low temperature | B | A | B | B | B |

**[Table 10]**

| | Example 12 | Example 15 | Example 18 | Example 21 |
|---|---|---|---|---|
| Initial VHR (%) | 99.0 | 99.2 | 99.1 | 99.2 |
| Post-heating VHR (%) | 98.2 | 98.5 | 98.3 | 98.3 |
| Burn-in | A | A | A | B |
| Volatility | A | B | A | A |
| Process compatibility | A | B | A | A |
| Solubility at low temperature | B | A | B | A |

The same evaluations were also performed for the liquid crystal compositions of the other examples besides the Examples 1, 2, 3, 6, 9, 12, 15, 18 and 21 shown above in the tables, and favorable results were obtained.
the configurations and combinations mentioned in the embodiments described above are merely examples, and additions, omissions, substitutions and other modifications can be made without departing from the scope of the present invention. Accordingly, the present invention is not to be considered as being limited by the above embodiments, and is only limited by the scope of the claims.

### INDUSTRIAL APPLICABILITY

The liquid crystal composition according to the present invention can be used widely in the fields of liquid crystal display elements and liquid crystal displays.

### DESCRIPTION OF THE REFERENCE SIGNS

- 100:: First substrate
- 102:: TFT layer
- 103:: Pixel electrode
- 104:: Passivation film
- 105:: First alignment film
- 200:: Second substrate
- 201:: Smoothing film (overcoat layer)
- 202:: Black matrix
- 203:: Color filter
- 204:: Transparent electrode
- 205:: Second alignment film
- 301:: Sealing material
- 302:: Protrusion (columnar spacer)
- 303:: Liquid crystal layer
- 304:: Protrusion (columnar spacer)
- 401:: Mask pattern
- 402:: Resin layer
- L:: light

## Claims

1. A liquid crystal composition including:
one or two or more compounds selected from the group consisting of compounds represented by the general formula (i),
one or two or more compounds selected from the group consisting of compounds represented by the general formula (ii),
at least 10% by mass but not more than 15% by mass of a compound represented by the formula (1.3),
at least 30% by mass but not more than 40% by mass of a compound represented by the formula (2.2),
one or two compounds selected from the group consisting of a compound represented by the formula (26.1) and a compound represented by the formula (26.2), and
one or two or more compounds selected from the group consisting of a compound represented by the formula (45.2), a compound represented by the formula (45.3), and a compound represented by the formula (45.4). 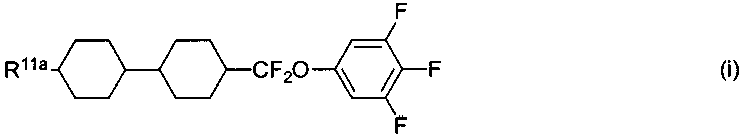 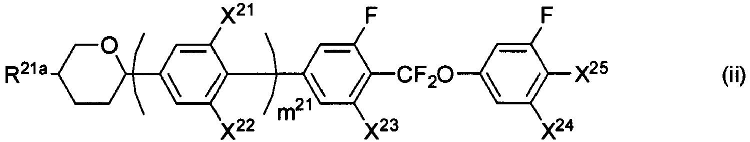
(in the general formulae,
R^{11a} and R^{21a} independently represent an alkyl group having 1 to 8 carbon atoms, and one -CH₂- group or two or more -CH₂- groups which are not adjacent to each other in the alkyl group may be independently substituted by -CH=CH-, -C≡C-, - O-, -CO-, -COO- or -OCO, and a hydrogen atom in the alkyl group may be substituted by a fluorine atom or a chlorine atom,
m²¹ represents 0 or 1,
X²¹, X²², X²³ and X²⁴ independently represent a hydrogen atom, a fluorine atom, or a chlorine atom, and
X²⁵ represents a hydrogen atom, a fluorine atom, a chlorine atom, a cyano group, - CF₃ or -OCF₃.)

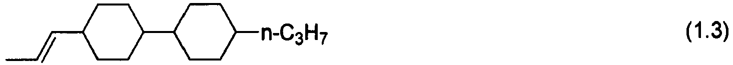

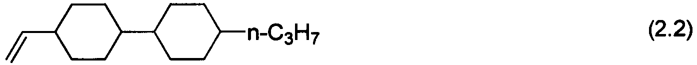

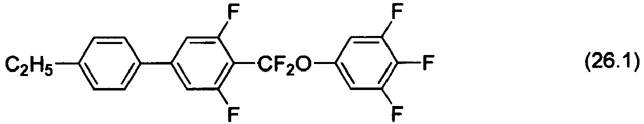

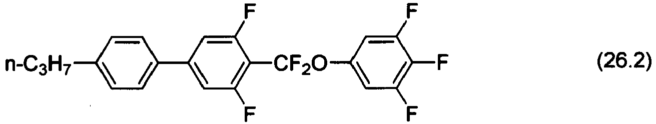

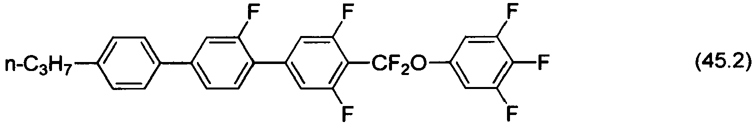

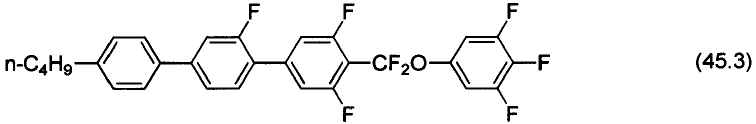

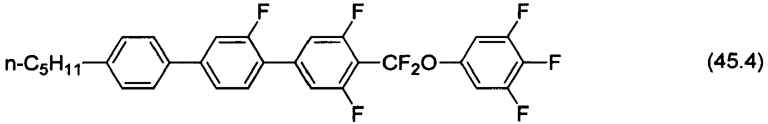

2. The liquid crystal composition according to Claim 1, wherein X²⁵ in the general formula (ii) represents a fluorine atom.

3. The liquid crystal composition according to Claim 1 or 2, wherein m²¹ in the general formula (ii) represents 1.

4. The liquid crystal composition according to any one of Claims 1 to 3, wherein at least two of X²¹ to X²⁴ in the general formula (ii) represent a fluorine atom.

5. The liquid crystal composition according to Claim 1, wherein the liquid crystal composition further includes a compound represented by the general formula (L). 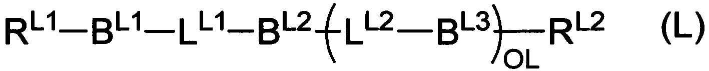 (in the general formula,
R^{L1} and R^{L2} independently represent an alkyl group having 1 to 8 carbon atoms, one -CH₂- group or two or more -CH₂- groups which are not adjacent to each other in the alkyl group may be independently substituted by -CH=CH-, -C=C-, - O-, -CO-, -COO- or -OCO-,
OL represents 0, 1, 2, or 3,
B^{L1}, B^{L2} and B^{L3} independently represent a group selected from the group consisting of:
(a) 1,4-cyclohexylene group (one -CH₂- group or two or more -CH₂- groups which are not adjacent to each other in the group may be substituted by -O-) and
(b) 1,4-phenylene group (one -CH= group or two or more -CH= groups which are not adjacent to each other in the group may be substituted by -N=), and
one or two or more hydrogen atoms in the groups (a) and (b) may be independently substituted by a cyano group, a fluorine atom, or a chlorine atom, L^{L1} and L^{L2} independently represent a single bond, -CH₂CH₂-, -(CH₂)₄-, -OCH₂-, - CH₂O-, -COO-, -OCO-, -OCF₂-, -CF₂O-, -CH=N-N=CH-, -CH=CH-, -CF=CF- or -C≡C-,
when OL represents 2 or 3, and the compound represented by the general formula (L) has plural L^{L2}, the plural L^{L2} may be the same or different, and when OL represents 2 or 3, and the compound represented by the general formula (L) has plural B^{L3}, the plural B^{L3} may be the same or different;
however, the compound represented by the general formula (L) is not a compound represented by the formula (1.3) or (2.2).)

6. The liquid crystal composition according to Claim 1, wherein the liquid crystal composition further includes a compound represented by the general formula (M). 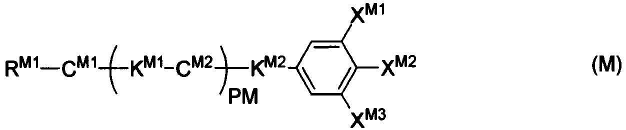 (in the general formula,
R^{M1} represents an alkyl group having 1 to 8 carbon atoms, one -CH₂- group or two or more -CH₂- groups which are not adjacent to each other in the alkyl group may be independently substituted by -CH=CH-, -C≡C-, -O-, -CO-, -COO- or -OCO-,
PM represents 0, 1, 2, 3 or 4,
C^{M1} and C^{M2} independently represent a group selected from the group consisting of:
(d) 1,4-cyclohexylene group (one -CH₂- group or two or more -CH₂- groups which are not adjacent to each other in the group may be substituted by -O- or -S-) and
(e) 1,4-phenylene group (one -CH= group or two or more -CH= groups which are not adjacent to each other in the group may be substituted by -N=), and
one and/or two or more hydrogen atoms in the groups (d) and (e) may be independently substituted by a cyano group, a fluorine atom, or a chlorine atom,
K^{M1} and K^{M2} independently represent a single bond, -CH₂CH₂-, -(CH₂)₄-, -OCH₂-, -CH₂O-, -OCF₂-, -CF₂O-, -COO-, -OCO- or -C≡C-,
when PM represents 2, 3 or 4, and the compound represented by the general formula (M) has plural K^{M1}, the plural K^{M1} may be the same or different, and when PM represents 2, 3 or 4, and the compound represented by the general formula (M) has plural C^{M2}, the plural C^{M2} may be the same or different,
X^{M1} and X^{M3} independently represent a hydrogen atom, a chlorine atom, or a fluorine atom, and
X^{M2} represents a hydrogen atom, a fluorine atom, a chlorine atom, a cyano group, a trifluoromethyl group, a fluoromethoxy group, a diflurormethoxy group, a trifluoromethoxy group, or a 2,2,2-trifluoroethyl group;
however, the compound represented by the general formula (M) is not a compound represented by the general formulae (i), (ii), or a compound represented by the formula (26.1), (26.2), (45.2), (45.3), or (45.4).)

7. A liquid crystal display element using the liquid crystal compound according to Claim 1.

8. A liquid crystal display element for IPS mode, OCB mode, ECB mode, VA mode, or FFS mode using the liquid crystal compound according to Claim 1.

9. A liquid crystal display using the liquid crystal display element according to Claim 7 or 8.

## Patentansprüche

1. Flüssigkristallzusammensetzung, enthaltend:
eine oder zwei oder mehr Verbindungen, ausgewählt aus der Gruppe, bestehend aus Verbindungen der allgemeinen Formel (i),
eine oder zwei oder mehr Verbindungen, ausgewählt aus der Gruppe, bestehend aus Verbindungen der allgemeinen Formel (ii),
mindestens 10 Masseprozent aber nicht mehr als 15 Masseprozent einer Verbindung der Formel (1.3),
mindestens 30 Masseprozent aber nicht mehr als 40 Masseprozent einer Verbindung der Formel (2.2),
eine oder zwei Verbindungen, ausgewählt aus der Gruppe, bestehend aus einer Verbindung der Formel (26.1) und einer Verbindung der Formel (26.2) und
eine oder zwei oder mehr Verbindungen, ausgewählt aus der Gruppe, bestehend aus einer Verbindung der Formel (45.2), einer Verbindung der Formel (45.3) und einer Verbindung der Formel (45.4). 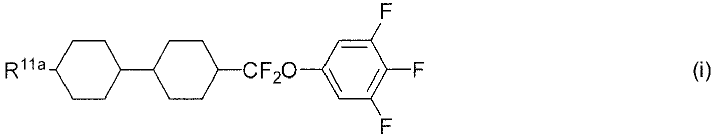 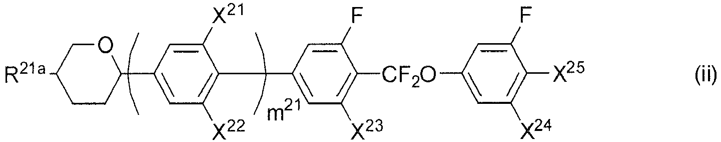
(In den allgemeinen Formeln gilt:
R^{11a} und R^{21a} stehen unabhängig voneinander für eine Alkylgruppe mit 1 bis 8 Kohlenstoffatom(en) und eine -CH2--Gruppe oder zwei oder mehr -CH2--Gruppen, die nicht benachbart zueinander sind, in der Alkylgruppe können unabhängig substituiert sein durch -CH=CH-, -C≡C-, -O-, -CO-, -COO- oder -OCO, und ein Wasserstoffatom in der Alkylgruppe kann substituiert sein durch ein Fluoratom oder ein Chloratom,
m²¹ steht für 0 oder 1,
X²¹, X²², X²³ und X²⁴ stehen unabhängig voneinander für ein Wasserstoffatom, ein Fluoratom oder ein Chloratom und
X²⁵ steht für ein Wasserstoffatom, ein Fluoratom, ein Chloratom, eine Cyanogruppe, -CF₃ oder -OCF₃.)

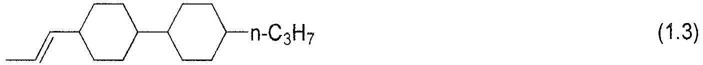

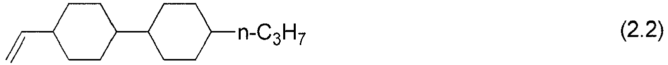

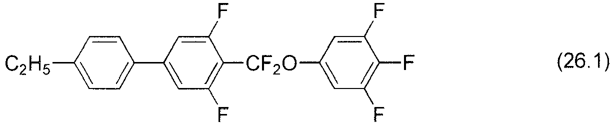

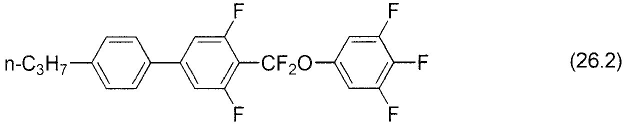

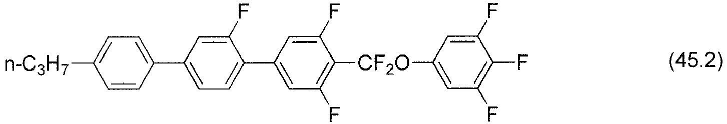

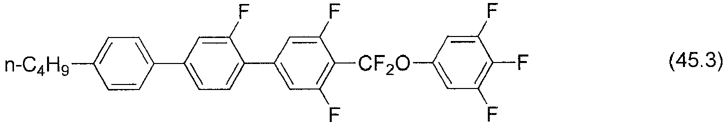

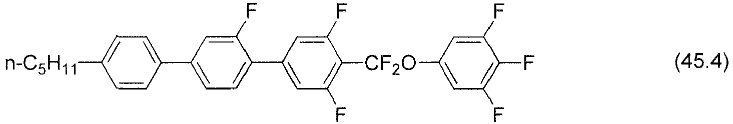

2. Flüssigkristallzusammensetzung nach Anspruch 1, wobei X²⁵ in der allgemeinen Formel (ii) für ein Fluoratom steht.

3. Flüssigkristallzusammensetzung nach Anspruch 1 oder 2, wobei m²¹ in der allgemeinen Formel (ii) für 1 steht.

4. Flüssigkristallzusammensetzung nach einem der Ansprüche 1 bis 3, wobei mindestens zwei von X²¹ bis X²⁴ in der allgemeinen Formel (ii) für ein Fluoratom stehen.

5. Flüssigkristallzusammensetzung nach Anspruch 1, wobei die Flüssigkristallzusammensetzung des Weiteren enthält: eine Verbindung der allgemeinen Formel (L). 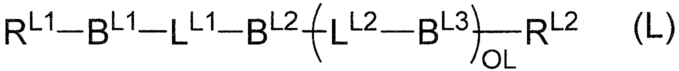 (In der allgemeinen Formel gilt:
R^{L1} und R^{L2} stehen unabhängig voneinander für eine Alkylgruppe mit 1 bis 8 Kohlenstoffatom(en), eine -CH₂--Gruppe oder zwei oder mehr -CH₂--Gruppen, die nicht benachbart zueinander sind, in der Alkylgruppe können unabhängig voneinander substituiert sein durch -CH=CH-, -C≡C-, -O-, -CO-, -COO- oder -OCO-,
OL steht für 0, 1, 2 oder 3,
B^{L1}, B^{L2} und B^{L3} stehen unabhängig voneinander für eine Gruppe, ausgewählt aus der Gruppe, bestehend aus:
(a) 1,4-Cyclohexylengruppe (eine -CH₂--Gruppe oder zwei oder mehr -CH₂--Gruppen, die nicht benachbart zueinander sind, in der Gruppe können substituiert sein durch -O-) und
(b) 1,4-Phenylengruppe (eine -CH=-Gruppe oder zwei oder mehr -CH=-Gruppen, die nicht benachbart zueinander sind, in der Gruppe können substituiert sein durch -N=) und
ein oder zwei oder mehr Wasserstoffatom(e) in den Gruppen (a) und (b) können unabhängig voneinander substituiert sein durch eine Cyanogruppe, ein Fluoratom oder ein Chloratom,
L^{L1} und L^{L2} stehen unabhängig voneinander für eine Einfachbindung, -CH₂CH₂-, -(CH₂)₄-, -OCH₂-, -CH₂O-, -COO-, -OCO-, -OCF₂-, -CF₂O-, -CH=N-N=CH-, -CH=CH-, -CF=CF- oder -C≡C-,
wenn OL für 2 oder 3 steht und die Verbindung der allgemeinen Formel (L) eine Mehrzahl von L^{L2} aufweist, können die Mehrzahl von L^{L2} gleich oder verschieden voneinander sein, und wenn OL für 2 oder 3 steht und die Verbindung der allgemeinen Formel (L) eine Mehrzahl von B^{L3} hat, kann die Mehrzahl der B^{L3} gleich oder verschieden voneinander sein;
die Verbindung der allgemeinen Formel (L) ist jedoch nicht eine Verbindung der Formel (1.3) oder (2.2).)

6. Flüssigkristallzusammensetzung nach Anspruch 1, wobei die Flüssigkristallzusammensetzung des Weiteren enthält: eine Verbindung der allgemeinen Formel (M). 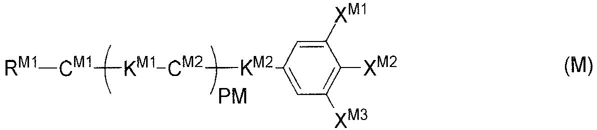 (In der allgemeinen Formel gilt:
R^{M1} steht für eine Alkylgruppe mit 1 bis 8 Kohlenstoffatom (en), eine -CH₂--Gruppe oder zwei oder mehr -CH₂--Gruppen, die nicht benachbart zueinander sind, in der Alkylgruppe können unabhängig voneinander substituiert sein durch -CH=CH-, -C≡C-, -O-, -CO-, -COO- oder -OCO-,
PM steht für 0, 1, 2, 3 oder 4,
C^{M1} und C^{M2} stehen unabhängig voneinander für eine Gruppe, ausgewählt aus der Gruppe, bestehend aus:
(d) 1,4-Cyclohexylengruppe (eine -CH₂--Gruppe oder zwei oder mehr -CH₂--Gruppen, die nicht benachbart zueinander sind, in der Gruppe können substituiert sein durch -O- oder -S-) und
(e) 1,4-Phenylengruppe (eine -CH=-Gruppe oder zwei oder mehr -CH=-Gruppen, die nicht benachbart zueinander sind, in der Gruppe können substituiert sein durch -N=) und
ein und/oder zwei oder mehr Wasserstoffatome in den Gruppen (d) und (e) können unabhängig voneinander substituiert sein durch eine Cyanogruppe, ein Fluoratom oder ein Chloratom,
K^{M1} und K^{M2} stehen unabhängig voneinander für eine Einfachbindung, -CH₂CH₂-, -(CH₂)₄-, -OCH₂-, -CH₂O-, -OCF₂-, -CF₂O-, -COO-, -OCO- oder -C≡C-,
wenn PM für 2, 3 oder 4 steht und die Verbindung der allgemeinen Formel (M) eine Mehrzahl von K^{M1} aufweist, können die Mehrzahl von K^{M1} gleich oder verschieden voneinander sein, und wenn PM für 2, 3 oder 4 steht und die Verbindung der allgemeinen Formel (M) eine Mehrzahl von C^{M2} aufweist, können die Mehrzahl von C^{M2} gleich oder verschieden voneinander sein,
X^{M1} und X^{M3} stehen unabhängig voneinander für ein Wasserstoffatom, ein Chloratom oder ein Fluoratom und
X^{M2} steht für ein Wasserstoffatom, ein Fluoratom, ein Chloratom, eine Cyanogruppe, eine Trifluormethylgruppe, eine Fluormethoxygruppe, eine Difluormethoxygruppe, eine Trifluormethoxygruppe oder eine 2,2,2-Trifluorethylgruppe;
die Verbindung der allgemeinen Formel (M) ist jedoch nicht eine Verbindung der allgemeinen Formeln (i), (ii) oder eine Verbindung der Formel (26.1), (26.2), (45.2), (45.3) oder (45.4).)

7. Flüssigkristallanzeigeelement, das die Flüssigkristallzusammensetzung nach Anspruch 1 verwendet.

8. Flüssigkristallanzeigeelement für den IPS-Modus, OCB-Modus, ECB-Modus, VA-Modus oder FFS-Modus, das die Flüssigkristallzusammensetzung nach Anspruch 1 verwendet.

9. Flüssigkristallanzeige, die das Flüssigkristallanzeigeelement nach Anspruch 7 oder 8 verwendet.

## Revendications

1. Composition de cristaux liquides incluant :
un ou deux composés ou plus choisis dans le groupe consistant en les composés représentés par la formule générale (i),
un ou deux composés ou plus choisis dans le groupe consistant en les composés représentés par la formule générale (ii),
au moins 10 % en masse mais pas plus de 15 % en masse d'un composant représenté par la formule (1.3),
au moins 30 % en masse mais pas plus de 40 % en masse d'un composant représenté par la formule (2.2),
un ou deux composés choisis dans le groupe consistant en un composé représenté par la formule (26.1) et un composé représenté par la formule (26.2), et
un ou deux composés ou plus choisis dans le groupe consistant en un composé représenté par la formule (45.2), un composé représenté par la formule (45.3), et un composé représenté par la formule (45.4), 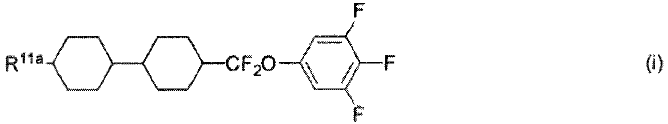 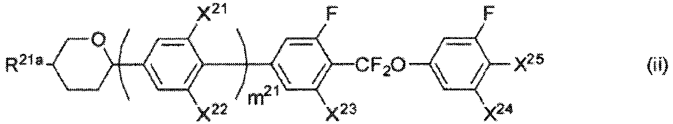 (dans les formules générales,
R^{11a} et R^{21a} représentent indépendamment un groupe alkyle comportant 1 à 8 atomes de carbone, et un groupe -CH₂- ou deux groupes -CH₂- ou plus qui ne sont pas adjacents les uns aux autres dans le groupe alkyle peuvent être indépendamment substitués par -CH=CH-, -C≡C-, -O-, -CO-, -COO-, ou -OCO, et un atome d'hydrogène dans le groupe alkyle peut être substitué par un atome de fluor ou un atome de chlore,
m²¹ représente 0 ou 1,
X²¹, X²², X²³ et X²⁴ représentent indépendamment un atome d'hydrogène, un atome de fluor, ou un atome de chlore, et
X²⁵ représente un atome d'hydrogène, un atome de fluor, un atome de chlore, un groupe cyano, -CF₃ ou -OCF₃)

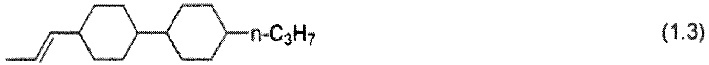

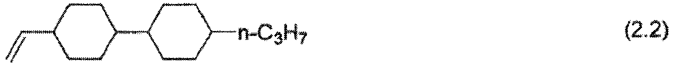

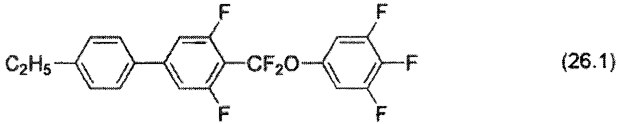

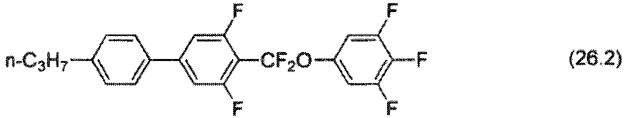

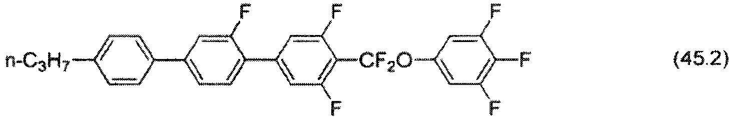

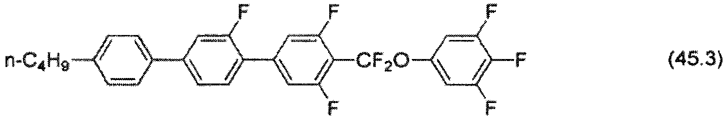

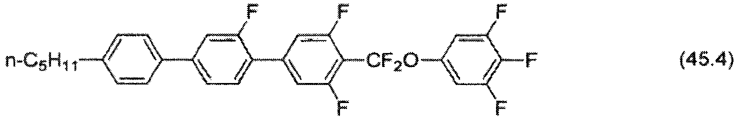

2. Composition de cristaux liquides selon la revendication 1, dans laquelle X²⁵ dans la formule générale (ii) représente un atome de fluor.

3. Composition de cristaux liquides selon la revendication 1 ou 2, dans lequel m²¹ dans la formule générale (ii) représente 1.

4. Composition de cristaux liquides selon l'une quelconque des revendications 1 à 3, dans laquelle au moins deux de X²¹ à X²⁴ dans la formule générale (ii) représentent un atome de fluor.

5. Composition de cristaux liquides selon la revendication 1, dans laquelle la composition de cristaux liquides inclut en outre un composé représenté par la formule générale (L) 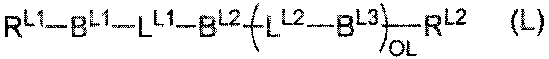 (dans la formule générale,
R^{L1} et R^{L2} représentent indépendamment un groupe alkyle comportant 1 à 8 atomes de carbone, un groupe -CH₂- ou deux groupes -CH₂- ou plus qui ne sont pas adjacents les uns aux autres dans le groupe alkyle peuvent être indépendamment substitués par -CH=CH-, -C=C-, -O-, -CO-, -COO-, ou -OCO,
OL représente 0, 1, 2, ou 3,
B^{L1}, B^{L2} et B^{L3} représentent indépendamment un groupe choisi dans le groupe consistant en :
(a) un groupe 1,4-cyclohexylène (un groupe -CH₂- et deux groupes -CH₂- ou plus qui ne sont pas adjacents les uns aux autres dans le groupe peuvent être substitués par -O-) et
(b) un groupe 1,4-phénylène (un groupe -CH= ou deux groupes -CH= ou plus qui ne sont pas adjacents les uns aux autres dans le groupe peuvent être substitués par -N=), et
un ou deux atomes d'hydrogène ou plus dans les groupes (a) et (b) peuvent être indépendamment substitués par un groupe cyano, un atome de fluor, ou un atome de chlore,
L^{L1} et L^{L2} représentent indépendamment une simple liaison, -CH₂CH₂-, -(CH₂)₄-, -OCH₂-, -CH₂O-, -COO-, -OCO-, -OCF₂-, -CF₂O-, -CH=N-N=CH-, -CH=CH-, -CF=CF- ou -C=C
-, dans lequel OL représente 2 ou 3, et le composé représenté par la formule générale (L) comporte plusieurs L^{L2}, les plusieurs L^{L2} peuvent être identiques ou différents, et lorsque OL représente 2 ou 3, et que le composé représenté par la formule générale (L) comporte plusieurs B^{L3}, les plusieurs B^{L3} peuvent être identiques ou différents ;
néanmoins, le composé représenté par la formule générale (L) n'est pas un composé représenté par la formule (1.3) ou (2.2)).

6. Composition de cristaux liquides selon la revendication 1, dans laquelle la composition de cristaux liquides inclut en outre un composé représenté par la formule générale (M) 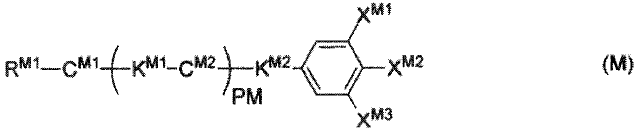 (dans la formule générale,
R^{M1} représente un groupe alkyle comportant 1 à 8 atomes de carbone, un groupe -CH₂- ou deux groupes - CH₂- ou plus qui ne sont pas adjacents les uns aux autres dans le groupe alkyle peuvent être indépendamment substitués par -CH=CH-, -C≡C-, -O-, -CO-, -COO-, ou -OCO-,
PM représente 0, 1, 2, 3 ou 4,
C^{M1} et C^{M2} représentent indépendamment un groupe choisi dans le groupe consistant en :
(d) un groupe 1,4-cyclohexylène (un groupe -CH₂- et deux groupes -CH₂- ou plus qui ne sont pas adjacents les uns aux autres dans le groupe peuvent être substitués par -O- ou -S-) et
(e) un groupe 1,4-phénylène (un groupe -CH= ou deux groupes -CH= ou plus qui ne sont pas adjacents les uns aux autres dans le groupe peuvent être substitués par -N=), et
un ou deux atomes d'hydrogène ou plus dans les groupes (d) et (e) peuvent être indépendamment substitués par un groupe cyano, un atome de fluor, ou un atome de chlore,
K^{M1} et K^{M2} représentent indépendamment une simple liaison, -CH₂CH₂-, -(CH₂)₄-, -OCH₂-, -CH₂O-, -OCF₂-, -CF₂ O-, -COO-, -OCO-, ou -C≡C-,
dans lequel PM représente 2, 3 ou 4, et le composé représenté par la formule générale (M) comporte plusieurs K^{M1}, les plusieurs K^{M1} peuvent être identiques ou différents, et lorsque PM représente 2, 3 ou 4, et que le composé représenté par la formule générale (M) comporte plusieurs C^{M2}, les plusieurs C^{M2} peuvent être identiques ou différents,
X^{M1} et X^{M3} représentent indépendamment un atome d'hydrogène, un atome de chlore, ou un atome de fluor, et
X^{M2} représente un atome d'hydrogène, un atome de fluor, un atome de chlore, un groupe cyano, un groupe trifluorométhyle, un groupe fluorométhoxy, un groupe difluorométhoxy, un groupe trifluorométhoxy, ou un groupe 2,2,2-trifluoroéthyle ;
toutefois, le composé représenté par la formule générale (M) n'est pas un composé représenté par les formules générales (i), (ii), ou un composé représenté par la formule (26.1), (26.2), (45.2), (45.3), ou (45.4).

7. Elément d'affichage à cristaux liquides utilisant le composé à cristaux liquides selon la revendication 1.

8. Elément d'affichage à cristaux liquides pour un mode IPS, un mode OCB, un mode ECB, un mode VA, ou un mode FFS utilisant le composé à cristaux liquides selon la revendication 1.

9. Afficheur à cristaux liquides utilisant l'élément d'affichage à cristaux liquides selon la revendication 7 ou 8.
